# EUROPEAN PATENT APPLICATION

(11) **EP 4 657 960 A1**
(43) Date of publication of application: **03.12.2025**
(21) Application number: 24752790.6
(22) Date of filing: 01.02.2024
(51) Int. Cl.: H04W 72/40

(54) **COMMUNICATION METHOD AND COMMUNICATION APPARATUS**

(30) Priority: 07.02.2023 CN 202310132627; 17.02.2023 CN 202310172122; 15.09.2023 CN 202311200580
(71) Applicant: Huawei Technologies Co., Ltd., Shenzhen, Guangdong 518129 (CN)
(72) Inventor: ZHANG, Mengchen, Shenzhen, Guangdong 518129 (CN); YAO, Chuting, Shenzhen, Guangdong 518129 (CN); XU, Haibo, Shenzhen, Guangdong 518129 (CN)
(74) Representative: Goddar, Heinz J.
(86) International application number: PCT/CN2024/075319
(87) International publication number: WO 2024/164934

(57) **Abstract**

Embodiments of this application provide a communication method and a communication apparatus. The method is applied to a first network device. The method includes: receiving first information, where the first information indicates a requirement of a positioning service of a terminal device, and the requirement of the positioning service of the UE includes at least one of the following: location quality of service of the UE and quality of service of transmitting positioning data by the UE; and sending second information to the UE, where the second information is related to the first information, and the second information indicates a priority of the positioning service of the UE. The solutions provided in embodiments of this application can avoid a resource preemption conflict problem that occurs when a UE autonomously allocates a resource.

## Description

This application claims priority to Chinese Patent Application No. 202310132627.1, filed with the China National Intellectual Property Administration on February 7, 2023 and entitled "COMMUNICATION METHOD", which is incorporated herein by reference in its entirety; claims priority to Chinese Patent Application No. 202310172122.8, filed with the China National Intellectual Property Administration on February 17, 2023 and entitled "COMMUNICATION METHOD AND COMMUNICATION APPARATUS", which is incorporated herein by reference in its entirety; and claims priority to Chinese Patent Application No. 202311200580.4, filed with the China National Intellectual Property Administration on September 15, 2023 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and a communication apparatus.

### BACKGROUND

Currently, positioning on a terminal device (UE) may include positioning based on an air interface (Uu interface) or positioning based on a PC5 interface. The positioning based on the PC5 interface may be understood as introducing a sidelink (sidelink, SL) in a positioning scenario. During SL positioning, to implement positioning on a UE, for example, absolute positioning on a target UE, or obtain a relative location between a target UE and another UE, some information about a positioning service needs to be transmitted between UEs.

A UE may transmit information in two solutions. In solution 1, a network device allocates a resource to the UE, and the UE transmits the information based on the resource allocated by the network device. In solution 2, the UE autonomously allocates a resource, and the UE transmits the information based on the autonomously allocated resource. However, in solution 2, a resource preemption conflict problem occurs when the UE autonomously allocates the resource. Currently, there is no solution available.

### SUMMARY

Embodiments of this application provide a communication method and a communication apparatus, to avoid a resource preemption conflict problem that occurs when a UE autonomously allocates a resource.

According to a first aspect, a communication method is provided. The method is applied to a first network device. The method includes: receiving first information, where the first information indicates a requirement of a positioning service of a terminal device, and the requirement of the positioning service of the UE includes at least one of the following: location quality of service of the UE and quality of service of transmitting positioning data by the UE; and sending second information to the UE, where the second information is related to the first information, and the second information indicates a priority of the positioning service of the UE.

In the solution provided in embodiments of this application, after receiving the first information, the first network device may send the second information related to the first information to the UE, where the second information indicates the priority of the positioning service of the UE. In this way, the UE can select or allocate a resource based on the priority of the positioning service of the UE that is indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the first aspect, in some possible implementations, the priority of the positioning service of the UE includes a sidelink positioning reference signal priority of the UE and/or a sidelink positioning protocol signaling priority of the UE.

In the solution provided in embodiments of this application, the priority of the positioning service of the UE that is indicated by the second information sent by the first network device to the UE may include the sidelink positioning reference signal priority of the UE and/or the sidelink positioning protocol signaling priority of the UE. In this way, the UE can select or allocate a resource based on the sidelink positioning reference signal priority of the UE and/or the sidelink positioning protocol signaling priority of the UE that are/is indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the first aspect, in some possible implementations, the positioning service of the UE includes a first positioning service and a second positioning service; and the second information indicates at least one of the following: a sidelink positioning reference signal first priority, where the sidelink positioning reference signal first priority corresponds to the first positioning service; a sidelink positioning reference signal second priority, where the sidelink positioning reference signal second priority corresponds to the second positioning service; a sidelink positioning protocol signaling first priority, where the sidelink positioning protocol signaling first priority corresponds to the first positioning service; and a sidelink positioning protocol signaling second priority, where the sidelink positioning protocol signaling second priority corresponds to the second positioning service.

In the solution provided in embodiments of this application, the positioning service of the UE may include the first positioning service and the second positioning service, and the second information sent by the first network device to the UE may indicate at least one of the following: the sidelink positioning reference signal first priority, the sidelink positioning reference signal second priority, the sidelink positioning protocol signaling first priority, and the sidelink positioning protocol signaling second priority. The sidelink positioning reference signal first priority and/or the sidelink positioning protocol signaling first priority correspond/corresponds to the first positioning service, and the sidelink positioning reference signal second priority and/or the sidelink positioning protocol signaling second priority correspond/corresponds to the second positioning service. In this way, the UE can select or allocate a resource based on content indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the first aspect, in some possible implementations, the second information includes one of the following: a value of the sidelink positioning reference signal priority and/or a value of the sidelink positioning protocol signaling priority; and information about the positioning service and a value of a sidelink positioning reference signal priority corresponding to the positioning service and/or a value of a sidelink positioning protocol signaling priority corresponding to the positioning service.

In the solution provided in embodiments of this application, the second information sent by the first network device to the UE may include the value of the sidelink positioning reference signal priority and/or the value of the sidelink positioning protocol signaling priority; or include the information about the positioning service and the value of the sidelink positioning reference signal priority corresponding to the positioning service and/or the value of the sidelink positioning protocol signaling priority corresponding to the positioning service. In this way, the UE can select or allocate a resource based on content included in the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the first aspect, in some possible implementations, the second information indicates the sidelink positioning protocol signaling priority; and the second information includes radio bearer RB configuration information corresponding to the sidelink positioning protocol signaling, the RB configuration information includes logical channel configuration information, or the RB configuration information includes a requirement of a positioning service corresponding to the RB and the logical channel configuration information, the logical channel configuration information includes a logical channel priority of the logical channel, and the logical channel priority of the logical channel corresponds to the sidelink positioning protocol signaling priority.

With reference to the first aspect, in some possible implementations, the first information includes at least one of the following: a first parameter corresponding to the location quality of service of the UE, a first index corresponding to the location quality of service of the UE, a second parameter corresponding to the quality of service of transmitting the positioning data by the UE, and a second index corresponding to the quality of service of transmitting the positioning data by the UE, where the first parameter indicates the location quality of service of the UE, and the first index is used to obtain the location quality of service of the UE; and the second parameter indicates the quality of service of transmitting the positioning data by the UE, and the second index is used to obtain the quality of service of transmitting the positioning data by the UE.

In the solution provided in embodiments of this application, the first information may include at least one of the following: the first parameter corresponding to the location quality of service of the UE, the first index corresponding to the location quality of service of the UE, the second parameter corresponding to the quality of service of transmitting the positioning data by the UE, and the second index corresponding to the quality of service of transmitting the positioning data by the UE. The first information includes different content, and the first network device may flexibly send the second information to the UE based on the content included in the first information, so that accuracy of the second information sent by the first network device can be improved.

With reference to the first aspect, in some possible implementations, the first parameter includes at least one of the following: horizontal accuracy, vertical accuracy, response time, a location service LCS quality of service class, requested vertical accuracy, and a minor LCS quality of service class; and the second parameter includes at least one of the following: a PC5 5G quality of service identifier PQI, a flow bit rate, a link aggregated bit rate, a range, a default value, a resource type, a packet delay budget PDB, a priority level, a packet error rate, an averaging window, and a maximum data burst volume.

With reference to the first aspect, in some possible implementations, the first information carries indication information, and the indication information indicates a request for configuring a sidelink positioning reference signal priority and/or a sidelink positioning protocol signaling priority.

The first information in embodiments of this application may carry the indication information used to request to configure the sidelink positioning reference signal priority and/or the sidelink positioning protocol signaling priority. After receiving the first information, the first network device may configure the sidelink positioning reference signal priority and/or the sidelink positioning protocol signaling priority for the UE based on the first information, so that efficiency of configuring the sidelink positioning reference signal priority and/or the sidelink positioning protocol signaling priority by the first network device for the UE can be improved.

With reference to the first aspect, in some possible implementations, receiving the first information includes: receiving the first information sent by the terminal device, a second network device, or a third network device.

In the solution provided in embodiments of this application, the first network device may receive first information sent by different devices. For example, the first network device may receive first information sent by the UE, the second network device, and the third network device. This helps the first network device send the second information related to the first information to the UE. In this way, the UE can select or allocate a resource based on the priority of the positioning service of the UE that is indicated by the second information, and send a sidelink positioning reference signal and/or sidelink positioning protocol signaling on the resource. This can avoid a resource preemption conflict problem that occurs when the UE autonomously allocates a resource.

With reference to the first aspect, in some possible implementations, sending the second information to the UE includes: sending the second information to the UE by using dedicated signaling.

In the solution provided in embodiments of this application, the first network device sends the second information to the UE by using the dedicated signaling, so that accuracy of sending the second information can be ensured.

According to a second aspect, a communication method is provided. The method is applied to a terminal device, and the method includes: sending first information, where the first information indicates a requirement of a positioning service of the UE, and the requirement of the positioning service of the UE includes at least one of the following: location quality of service of the UE and quality of service of transmitting positioning data by the UE; receiving second information, where the second information is related to the first information, and the second information indicates a priority of the positioning service of the UE; and sending a sidelink positioning reference signal and/or sidelink positioning protocol signaling based on the second information.

In the solution provided in embodiments of this application, the UE sends, to the first network device, the first information indicating the requirement of the positioning service of the UE, and may receive the second information that is related to the first information and that is sent by the first network device. The second information indicates the priority of the positioning service of the UE. In this way, the UE can select or allocate a resource based on the priority of the positioning service of the UE that is indicated by the second information, and send the sidelink positioning reference signal and/or the sidelink positioning protocol signaling on the resource. The UE sends the sidelink positioning reference signal and/or the sidelink positioning protocol signaling on the resource selected or allocated based on the priority of the positioning service of the UE that is indicated by the second information. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the second aspect, in some possible implementations, the priority of the positioning service of the UE includes a sidelink positioning reference signal priority of the UE and/or a sidelink positioning protocol signaling priority of the UE.

In the solution provided in embodiments of this application, the priority of the positioning service of the UE may include the sidelink positioning reference signal priority of the UE and/or the sidelink positioning protocol signaling priority of the UE. In this way, the UE can select or allocate a resource based on the sidelink positioning reference signal priority of the UE and/or the sidelink positioning protocol signaling priority of the UE, and send the sidelink positioning reference signal and/or the sidelink positioning protocol signaling on the resource. The UE sends the sidelink positioning reference signal and/or the sidelink positioning protocol signaling on the resource selected or allocated based on the sidelink positioning reference signal priority of the UE and/or the sidelink positioning protocol signaling priority of the UE. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the second aspect, in some possible implementations, the positioning service of the UE includes a first positioning service and a second positioning service; and the second information indicates at least one of the following: a sidelink positioning reference signal first priority, where the sidelink positioning reference signal first priority corresponds to the first positioning service; a sidelink positioning reference signal second priority, where the sidelink positioning reference signal second priority corresponds to the second positioning service; a sidelink positioning protocol signaling first priority, where the sidelink positioning protocol signaling first priority corresponds to the first positioning service; and a sidelink positioning protocol signaling second priority, where the sidelink positioning protocol signaling second priority corresponds to the second positioning service.

In the solution provided in embodiments of this application, the positioning service of the UE may include the first positioning service and the second positioning service, and the second information may indicate at least one of the following: the sidelink positioning reference signal first priority, the sidelink positioning reference signal second priority, the sidelink positioning protocol signaling first priority, and the sidelink positioning protocol signaling second priority. The sidelink positioning reference signal first priority and/or the sidelink positioning protocol signaling first priority correspond/corresponds to the first positioning service, and the sidelink positioning reference signal second priority and/or the sidelink positioning protocol signaling second priority correspond/corresponds to the second positioning service. In this way, the UE can select or allocate a resource based on content indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the second aspect, in some possible implementations, the second information includes one of the following: a value of the sidelink positioning reference signal priority and/or a value of the sidelink positioning protocol signaling priority; and information about the positioning service and a value of a sidelink positioning reference signal priority corresponding to the positioning service and/or a value of a sidelink positioning protocol signaling priority corresponding to the positioning service.

In the solution provided in embodiments of this application, the second information may include the value of the sidelink positioning reference signal priority and/or the value of the sidelink positioning protocol signaling priority; or include the information about the positioning service and the value of the sidelink positioning reference signal priority corresponding to the positioning service and/or the value of the sidelink positioning protocol signaling priority corresponding to the positioning service. In this way, the UE can select or allocate a resource based on content included in the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the second aspect, in some possible implementations, the second information indicates the sidelink positioning protocol signaling priority; and the second information includes radio bearer RB configuration information corresponding to the sidelink positioning protocol signaling, the RB configuration information includes logical channel configuration information, or the RB configuration information includes a positioning requirement corresponding to the RB and the logical channel configuration information, the logical channel configuration information includes a logical channel priority of the logical channel, and the logical channel priority of the logical channel corresponds to the sidelink positioning protocol signaling priority.

With reference to the second aspect, in some possible implementations, the method further includes: if a shared resource pool is used to transmit the sidelink positioning reference signal and/or the sidelink positioning protocol signaling and data information, setting a priority field in sidelink control information SCI to any one of the following: a value corresponding to a highest priority in the sidelink positioning reference signal priority and/or the sidelink positioning protocol signaling priority and a data information priority, the sidelink positioning reference signal priority and/or the sidelink positioning protocol signaling priority, and the data information priority; and sending the sidelink positioning reference signal and/or the sidelink positioning protocol signaling based on the second information includes: sending the sidelink positioning reference signal and/or the sidelink positioning protocol signaling and the data information based on the priority field in the SCI.

In the solution provided in embodiments of this application, if the UE transmits the sidelink positioning reference signal and/or the sidelink positioning protocol signaling and the data information by using the shared resource pool, the priority field in the SCI may be set, for example, may be set to any one of the following: the value corresponding to the highest priority in the sidelink positioning reference signal priority and/or the sidelink positioning protocol signaling priority and the data information priority, the sidelink positioning reference signal priority and/or the sidelink positioning protocol signaling priority, and the data information priority. In this way, the UE can select or allocate a resource based on the priority field in the SCI, and send the sidelink positioning reference signal and/or the sidelink positioning protocol signaling and the data information on the resource. This can avoid a resource preemption conflict problem that occurs when the shared resource pool is used to simultaneously send the sidelink positioning reference signal and/or the sidelink positioning protocol signaling and the data information.

With reference to the second aspect, in some possible implementations, the first information includes at least one of the following: a first parameter corresponding to the location quality of service of the UE, a first index corresponding to the location quality of service of the UE, a second parameter corresponding to the quality of service of transmitting the positioning data by the UE, and a second index corresponding to the quality of service of transmitting the positioning data by the UE, where the first parameter indicates the location quality of service of the UE, and the first index is used to obtain the location quality of service of the UE; and the second parameter indicates the quality of service of transmitting the positioning data by the UE, and the second index is used to obtain the quality of service of transmitting the positioning data by the UE.

In the solution provided in embodiments of this application, the first information sent by the UE may include at least one of the following: the first parameter corresponding to the location quality of service of the UE, the first index corresponding to the location quality of service of the UE, the second parameter corresponding to the quality of service of transmitting the positioning data by the UE, and the second index corresponding to the quality of service of transmitting the positioning data by the UE. The first information includes different content. In this way, the first network device may flexibly send the second information to the UE based on the content included in the first information, so that accuracy of the second information sent by the first network device can be improved.

With reference to the second aspect, in some possible implementations, the first parameter includes at least one of the following: horizontal accuracy, vertical accuracy, response time, a location service LCS quality of service class, requested vertical accuracy, and a minor LCS quality of service class; and the second parameter includes at least one of the following: a PC5 5G quality of service identifier PQI, a flow bit rate, a link aggregated bit rate, a range, a default value, a resource type, a packet delay budget PDB, a priority level, a packet error rate, an averaging window, and a maximum data burst volume.

With reference to the second aspect, in some possible implementations, the first information carries indication information, and the indication information indicates a request for configuring a sidelink positioning reference signal priority and/or a sidelink positioning protocol signaling priority.

In embodiments of this application, the first information sent by the UE may carry the indication information used to request to configure the sidelink positioning reference signal priority and/or the sidelink positioning protocol signaling priority. In this way, after receiving the first information, the first network device may configure the sidelink positioning reference signal priority and/or the sidelink positioning protocol signaling priority for the UE based on the first information, so that efficiency of configuring the sidelink positioning reference signal priority and/or the sidelink positioning protocol signaling priority by the first network device for the UE can be improved.

With reference to the second aspect, in some possible implementations, the method further includes: receiving third information sent by a second network device, where the third information requests the UE to report capability information, requests the UE to report location information, or indicates assistance information of the UE; and sending the first information includes: sending the first information in response to receiving the third information.

In the solution provided in embodiments of this application, the UE may receive the third information sent by the second network device. The third information may request the UE to report the capability information, request the UE to report the location information, or indicate the assistance information. Further, the UE may send the first information based on the third information, so that the first information indicating the requirement of the positioning service of the UE can be sent in a timely manner, thereby ensuring the requirement of the positioning service.

With reference to the second aspect, in some possible implementations, the method further includes: sending fourth information to another terminal device, where the fourth information indicates a sidelink positioning reference signal priority and/or a sidelink positioning protocol signaling priority of the another terminal device.

In the solution provided in embodiments of this application, the UE may send, to the another UE, the fourth information indicating the sidelink positioning reference signal priority and/or the sidelink positioning protocol signaling priority of the another UE, so that the another UE can select or allocate a resource based on the fourth information, and send a sidelink positioning reference signal and/or sidelink positioning protocol signaling on the resource. This can avoid a resource preemption conflict problem that occurs when the another UE autonomously allocates a resource.

With reference to the second aspect, in some possible implementations, receiving the second information includes: receiving the second information by using dedicated signaling sent by a first network device.

In the solution provided in embodiments of this application, the UE receives the second information by using the dedicated signaling sent by the first network device, so that accuracy of receiving the second information can be ensured.

With reference to the second aspect, in some possible implementations, the method further includes: receiving the first information from a second network device or a third network device.

According to a third aspect, a communication method is provided. The method is applied to a second network device, and the method includes: receiving a request message sent by a third network device, where the request message is used to request to position a terminal device; and sending first information based on the request message, where the first information indicates a requirement of a positioning service of the UE, and the requirement of the positioning service of the UE includes at least one of the following: location quality of service of the UE and quality of service of transmitting positioning data by the UE.

In the solution provided in embodiments of this application, the second network device may send the first information. In this way, after receiving the first information, a first network device sends second information related to the first information to the UE, where the second information indicates a priority of the positioning service of the UE. Accordingly, the UE can select or allocate a resource based on the priority of the positioning service of the UE that is indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the third aspect, in some possible implementations, sending the first information based on the request message includes: sending the first information to a first network device or the UE based on the request message.

With reference to the third aspect, in some possible implementations, the priority of the positioning service of the UE includes a sidelink positioning reference signal priority of the UE and/or a sidelink positioning protocol signaling priority of the UE.

In the solution provided in embodiments of this application, the second network device may send the first information. In this way, the first network device may send the second information to the UE based on the first information. The second information indicates that the priority of the positioning service of the UE may include the sidelink positioning reference signal priority of the UE and/or the sidelink positioning protocol signaling priority of the UE. Accordingly, the UE can select or allocate a resource based on the sidelink positioning reference signal priority of the UE and/or the sidelink positioning protocol signaling priority of the UE that are/is indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the third aspect, in some possible implementations, the first information includes at least one of the following: a first parameter corresponding to the location quality of service of the UE, a first index corresponding to the location quality of service of the UE, a second parameter corresponding to the quality of service of transmitting the positioning data by the UE, and a second index corresponding to the quality of service of transmitting the positioning data by the UE, where the first parameter indicates the location quality of service of the UE, and the first index is used to obtain the location quality of service of the UE; and the second parameter indicates the quality of service of transmitting the positioning data by the UE, and the second index is used to obtain the quality of service of transmitting the positioning data by the UE.

In the solution provided in embodiments of this application, the first information may include at least one of the following: the first parameter corresponding to the location quality of service of the UE, the first index corresponding to the location quality of service of the UE, the second parameter corresponding to the quality of service of transmitting the positioning data by the UE, and the second index corresponding to the quality of service of transmitting the positioning data by the UE. The first information includes different content. In this way, the first network device may flexibly send the second information to the UE based on the content included in the first information, so that accuracy of the second information sent by the first network device can be improved.

With reference to the third aspect, in some possible implementations, the first parameter includes at least one of the following: horizontal accuracy, vertical accuracy, response time, a location service LCS quality of service class, requested vertical accuracy, and a minor LCS quality of service class; and the second parameter includes at least one of the following: a PC5 5G quality of service identifier PQI, a flow bit rate, a link aggregated bit rate, a range, a default value, a resource type, a packet delay budget PDB, a priority level, a packet error rate, an averaging window, and a maximum data burst volume.

With reference to the third aspect, in some possible implementations, the first information carries indication information, and the indication information indicates a request for configuring a sidelink positioning reference signal priority and/or a sidelink positioning protocol signaling priority.

The first information in embodiments of this application may carry the indication information used to request to configure the sidelink positioning reference signal priority and/or the sidelink positioning protocol signaling priority. In this way, after receiving the first information, the first network device may configure the sidelink positioning reference signal priority and/or the sidelink positioning protocol signaling priority for the UE based on the first information, so that efficiency of configuring the sidelink positioning reference signal priority and/or the sidelink positioning protocol signaling priority by the first network device for the UE can be improved.

According to a fourth aspect, a communication method is provided. The method is applied to a third network device, and the method includes: determining to initiate a positioning service; and sending first information based on the positioning service, where the first information indicates a requirement of the positioning service of a terminal device, and the requirement of the positioning service of the UE includes at least one of the following: location quality of service of the UE and quality of service of transmitting positioning data by the UE; or sending a request message to a second network device based on the positioning service, where the request message is used to request to position the UE.

In the solution provided in embodiments of this application, the third network device determines to initiate the positioning service, and sends the first information or sends the request message to the second network device based on the positioning service. In this way, after receiving the first information, a first network device may send second information related to the first information to the UE, where the second information indicates a priority of the positioning service of the UE. Accordingly, the UE can select or allocate a resource based on the priority of the positioning service of the UE that is indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the fourth aspect, in some possible implementations, sending the first information based on the positioning service includes: sending the first information to a first network device, the second network device, or the UE based on the positioning service.

In the solution provided in embodiments of this application, the third network device may send the first information to the first network device, the second network device, or the UE based on the positioning service, and different devices may all send first information to the first network device. This helps the first network device send the second information related to the first information to the UE, so that the UE can select or allocate a resource based on the priority of the positioning service of the UE that is indicated by the second information, and send a sidelink positioning reference signal and/or sidelink positioning protocol signaling on the resource. This can avoid a resource preemption conflict problem that occurs when the UE autonomously allocates a resource.

With reference to the fourth aspect, in some possible implementations, if the positioning requirement of the UE includes the quality of service of transmitting the positioning data by the UE, the method further includes: obtaining, from a fourth network device, a mapping relationship between the location quality of service of the UE and the quality of service of transmitting the positioning data by the UE; and determining, based on the mapping relationship and the location quality of service of the UE, the quality of service of transmitting the positioning data by the UE.

In the solution provided in embodiments of this application, if the positioning requirement of the UE includes the quality of service of transmitting the positioning data by the UE, the third network device may obtain, from the fourth network device, the mapping relationship between the location quality of service of the UE and the quality of service of transmitting the positioning data by the UE, and determine, based on the mapping relationship and the known location quality of service of the UE, the quality of service of transmitting the positioning data by the UE, so as to ensure the requirement of the positioning service.

With reference to the fourth aspect, in some possible implementations, if the positioning requirement of the UE includes the quality of service of transmitting the positioning data by the UE, the method further includes: sending the location quality of service of the UE to a fourth network device; and receiving the quality of service that is of transmitting the positioning data by the UE and that is sent by the fourth network device, where the quality of service of transmitting the positioning data by the UE is determined by the fourth network device based on the location quality of service of the UE or based on a mapping relationship between the location quality of service of the UE and the quality of service of transmitting the positioning data by the UE.

In the solution provided in embodiments of this application, if the positioning requirement of the UE includes the quality of service of transmitting the positioning data by the UE, the third network device may send the location quality of service of the UE to the fourth network device, and receive the quality of service that is of transmitting the positioning data by the UE and that is sent by the fourth network device. The quality of service of transmitting the positioning data by the UE is determined by the fourth network device based on the location quality of service of the UE or based on the mapping relationship between the location quality of service of the UE and the quality of service of transmitting the positioning data by the UE, so that the requirement of the positioning service can be ensured.

With reference to the fourth aspect, in some possible implementations, the priority of the positioning service of the UE includes a sidelink positioning reference signal priority of the UE and/or a sidelink positioning protocol signaling priority of the UE.

In the solution provided in embodiments of this application, the third network device may send the first information. In this way, the first network device may send the second information to the UE based on the first information. The second information indicates that the priority of the positioning service of the UE may include the sidelink positioning reference signal priority of the UE and/or the sidelink positioning protocol signaling priority of the UE. Accordingly, the UE can select or allocate a resource based on the sidelink positioning reference signal priority of the UE and/or the sidelink positioning protocol signaling priority of the UE that are/is indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the fourth aspect, in some possible implementations, the first information includes at least one of the following: a first parameter corresponding to the location quality of service of the UE, a first index corresponding to the location quality of service of the UE, a second parameter corresponding to the quality of service of transmitting the positioning data by the UE, and a second index corresponding to the quality of service of transmitting the positioning data by the UE, where the first parameter indicates the location quality of service of the UE, and the first index is used to obtain the location quality of service of the UE; and the second parameter indicates the quality of service of transmitting the positioning data by the UE, and the second index is used to obtain the quality of service of transmitting the positioning data by the UE.

In the solution provided in embodiments of this application, the first information may include at least one of the following: the first parameter corresponding to the location quality of service of the UE, the first index corresponding to the location quality of service of the UE, the second parameter corresponding to the quality of service of transmitting the positioning data by the UE, and the second index corresponding to the quality of service of transmitting the positioning data by the UE. The first information includes different content. In this way, the first network device may flexibly send the second information to the UE based on the content included in the first information, so that accuracy of the second information sent by the first network device can be improved.

With reference to the fourth aspect, in some possible implementations, the first parameter includes at least one of the following: horizontal accuracy, vertical accuracy, response time, a location service LCS quality of service class, requested vertical accuracy, and a minor LCS quality of service class; and the second parameter includes at least one of the following: a PC5 5G quality of service identifier PQI, a flow bit rate, a link aggregated bit rate, a range, a default value, a resource type, a packet delay budget PDB, a priority level, a packet error rate, an averaging window, and a maximum data burst volume.

With reference to the fourth aspect, in some possible implementations, the first information carries indication information, and the indication information indicates a request for configuring a sidelink positioning reference signal priority and/or a sidelink positioning protocol signaling priority.

The first information in embodiments of this application may carry the indication information used to request to configure the sidelink positioning reference signal priority and/or the sidelink positioning protocol signaling priority. In this way, after receiving the first information, the first network device may configure the sidelink positioning reference signal priority and/or the sidelink positioning protocol signaling priority for the UE based on the first information, so that efficiency of configuring the sidelink positioning reference signal priority and/or the sidelink positioning protocol signaling priority by the first network device for the UE can be improved.

According to a fifth aspect, a communication method is provided. The method is applied to a first network device, and the method includes: broadcasting second information, where the second information indicates a priority of a positioning service of a UE, and the priority of the positioning service of the UE includes a sidelink positioning reference signal priority of the UE and/or a sidelink positioning protocol signaling priority of the UE.

In the solution provided in embodiments of this application, the first network device broadcasts the second information, where the second information indicates the priority of the positioning service of the UE. In this way, the UE can select or allocate a resource based on the priority of the positioning service of the UE that is indicated by the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the fifth aspect, in some possible implementations, the second information includes: information about the positioning service and a value of a sidelink positioning reference signal priority corresponding to the positioning service and/or a value of a sidelink positioning protocol signaling priority corresponding to the positioning service.

In the solution provided in embodiments of this application, the second information sent by the first network device to the UE may include the information about the positioning service and the value of the sidelink positioning reference signal priority corresponding to the positioning service and/or the value of the sidelink positioning protocol signaling priority corresponding to the positioning service. In this way, the UE can select or allocate a resource based on content included in the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the fifth aspect, in some possible implementations, the method further includes: sending fifth information, where the fifth information includes a default sidelink positioning reference signal priority and/or a default sidelink positioning protocol signaling priority.

In the solution provided in embodiments of this application, the first network device may further send the fifth information to the UE. In this way, when there is no priority corresponding to the current positioning service in the second information, the UE can select or allocate a resource based on the default sidelink positioning reference signal priority and/or the default sidelink positioning protocol priority, and send, on the resource, a sidelink positioning reference signal and/or sidelink positioning protocol signaling corresponding to the current positioning service. This can avoid a resource preemption conflict problem that occurs when the sidelink positioning reference signal priority and/or the sidelink positioning protocol signaling priority cannot be determined.

With reference to the fifth aspect, in some possible implementations, the positioning service of the UE includes a first positioning service and a second positioning service; and the second information indicates at least one of the following: a sidelink positioning reference signal first priority, where the sidelink positioning reference signal first priority corresponds to the first positioning service; a sidelink positioning reference signal second priority, where the sidelink positioning reference signal second priority corresponds to the second positioning service; a sidelink positioning protocol signaling first priority, where the sidelink positioning protocol signaling first priority corresponds to the first positioning service; and a sidelink positioning protocol signaling second priority, where the sidelink positioning protocol signaling second priority corresponds to the second positioning service.

With reference to the fifth aspect, in some possible implementations, the second information indicates the sidelink positioning protocol signaling priority; and the second information includes radio bearer RB configuration information corresponding to the sidelink positioning protocol signaling, the RB configuration information includes logical channel configuration information, or the RB configuration information includes a positioning requirement corresponding to the RB and the logical channel configuration information, the logical channel configuration information includes a logical channel priority of the logical channel, and the logical channel priority of the logical channel corresponds to the sidelink positioning protocol signaling priority.

With reference to the fifth aspect, in some possible implementations, broadcasting the second information includes: broadcasting the second information by using common signaling.

For beneficial effects of the fifth aspect, refer to the related content in the first aspect. Details are not described again.

According to a sixth aspect, a communication method is provided. The method is applied to a terminal device, and the method includes: receiving second information, where the second information indicates a priority of a positioning service of the UE, and the priority of the positioning service of the UE includes a sidelink positioning reference signal priority of the UE and/or a sidelink positioning protocol signaling priority of the UE; and sending a sidelink positioning reference signal and/or sidelink positioning protocol signaling based on the second information.

In the solution provided in embodiments of this application, the UE may receive the second information broadcast by a first network device, where the second information indicates the priority of the positioning service of the UE; and select or allocate a resource based on the priority of the positioning service of the UE that is indicated by the second information, and send the sidelink positioning reference signal and/or the sidelink positioning protocol signaling on the resource. The UE sends the sidelink positioning reference signal and/or the sidelink positioning protocol signaling on the resource selected or allocated based on the priority of the positioning service of the UE that is indicated by the second information. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the sixth aspect, in some possible implementations, the second information includes: information about the positioning service and a value of a sidelink positioning reference signal priority corresponding to the positioning service and/or a value of a sidelink positioning protocol signaling priority corresponding to the positioning service.

In the solution provided in embodiments of this application, the second information may include the information about the positioning service and the value of the sidelink positioning reference signal priority corresponding to the positioning service and/or the value of the sidelink positioning protocol signaling priority corresponding to the positioning service. The UE can select or allocate a resource based on content included in the second information, and send a sidelink positioning reference signal and/or sidelink positioning protocol signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the sixth aspect, in some possible implementations, the method further includes: receiving fifth information, where the fifth information includes a default sidelink positioning reference signal priority and/or a default sidelink positioning protocol signaling priority; and
if there is no priority corresponding to the current positioning service in the second information, sending, based on the default sidelink positioning reference signal priority and/or the default sidelink positioning protocol priority, the sidelink positioning reference signal and/or the sidelink positioning protocol signaling corresponding to the current positioning service.

In the solution provided in embodiments of this application, if there is no priority corresponding to the current positioning service in the second information, the UE can select or allocate a resource based on the default sidelink positioning reference signal priority and/or the default sidelink positioning protocol priority included in the fifth information, and send, on the resource, a sidelink positioning reference signal and/or sidelink positioning protocol signaling corresponding to the current positioning service. This can avoid a resource preemption conflict problem that occurs when the sidelink positioning reference signal priority and/or the sidelink positioning protocol signaling priority cannot be determined.

With reference to the sixth aspect, in some possible implementations, the positioning service of the UE includes a first positioning service and a second positioning service; and the second information indicates at least one of the following: a sidelink positioning reference signal first priority, where the sidelink positioning reference signal first priority corresponds to the first positioning service; a sidelink positioning reference signal second priority, where the sidelink positioning reference signal second priority corresponds to the second positioning service; a sidelink positioning protocol signaling first priority, where the sidelink positioning protocol signaling first priority corresponds to the first positioning service; and a sidelink positioning protocol signaling second priority, where the sidelink positioning protocol signaling second priority corresponds to the second positioning service.

With reference to the sixth aspect, in some possible implementations, the second information indicates the sidelink positioning protocol signaling priority; and the second information includes radio bearer RB configuration information corresponding to the sidelink positioning protocol signaling, the RB configuration information includes logical channel configuration information, or the RB configuration information includes a positioning requirement corresponding to the RB and the logical channel configuration information, the logical channel configuration information includes a logical channel priority of the logical channel, and the logical channel priority of the logical channel corresponds to the sidelink positioning protocol signaling priority.

With reference to the sixth aspect, in some possible implementations, the method further includes: if a shared resource pool is used to transmit the sidelink positioning reference signal and/or the sidelink positioning protocol signaling and data information, setting a priority field in sidelink control information SCI to any one of the following: a value corresponding to a highest priority in the sidelink positioning reference signal priority and/or the sidelink positioning protocol signaling priority and a data information priority, the sidelink positioning reference signal priority and/or the sidelink positioning protocol signaling priority, and the data information priority; and sending the sidelink positioning reference signal and/or the sidelink positioning protocol signaling based on the second information includes: sending the sidelink positioning reference signal and/or the sidelink positioning protocol signaling and the data information based on the priority field in the SCI.

With reference to the sixth aspect, in some possible implementations, the method further includes: sending fourth information to another terminal device, where the fourth information indicates a sidelink positioning reference signal priority and/or a sidelink positioning protocol signaling priority of the another terminal device.

For beneficial effects of the sixth aspect, refer to the related content in the second aspect. Details are not described again.

According to a seventh aspect, a communication method is provided. The method includes: obtaining second information, where the second information indicates a priority of a positioning service of a UE, and the priority of the positioning service of the UE includes a sidelink positioning reference signal priority of the UE and/or a sidelink positioning protocol signaling priority of the UE; and sending a sidelink positioning reference signal and/or sidelink positioning protocol signaling based on the second information.

In the solution provided in embodiments of this application, the UE may obtain the second information; and select or allocate a resource based on the priority of the positioning service of the UE that is indicated by the second information, and send the sidelink positioning reference signal and/or the sidelink positioning protocol signaling on the resource. The UE sends the sidelink positioning reference signal and/or the sidelink positioning protocol signaling on the resource selected or allocated based on the priority of the positioning service of the UE that is indicated by the second information. Compared with a solution in which the UE autonomously allocates a resource to send a signal and/or signaling in the conventional technology, the solution in embodiments of this application can avoid a resource preemption conflict problem that occurs when the UE autonomously allocates a resource.

With reference to the seventh aspect, in some possible implementations, the second information includes: information about the positioning service and a value of a sidelink positioning reference signal priority corresponding to the positioning service and/or a value of a sidelink positioning protocol signaling priority corresponding to the positioning service.

With reference to the seventh aspect, in some possible implementations, the method further includes: obtaining fifth information, where the fifth information includes a default sidelink positioning reference signal priority and/or a default sidelink positioning protocol signaling priority; and if there is no priority corresponding to the current positioning service in the second information, sending, based on the default sidelink positioning reference signal priority and/or the default sidelink positioning protocol priority, the sidelink positioning reference signal and/or the sidelink positioning protocol signaling corresponding to the current positioning service.

With reference to the seventh aspect, in some possible implementations, the positioning service of the UE includes a first positioning service and a second positioning service; and the second information indicates at least one of the following: a sidelink positioning reference signal first priority, where the sidelink positioning reference signal first priority corresponds to the first positioning service; a sidelink positioning reference signal second priority, where the sidelink positioning reference signal second priority corresponds to the second positioning service; a sidelink positioning protocol signaling first priority, where the sidelink positioning protocol signaling first priority corresponds to the first positioning service; and a sidelink positioning protocol signaling second priority, where the sidelink positioning protocol signaling second priority corresponds to the second positioning service.

With reference to the seventh aspect, in some possible implementations, the second information indicates the sidelink positioning protocol signaling priority; and
the second information includes radio bearer RB configuration information corresponding to the sidelink positioning protocol signaling, the RB configuration information includes logical channel configuration information, or the RB configuration information includes a positioning requirement corresponding to the RB and the logical channel configuration information, the logical channel configuration information includes a logical channel priority of the logical channel, and the logical channel priority of the logical channel corresponds to the sidelink positioning protocol signaling priority.

With reference to the seventh aspect, in some possible implementations, the method further includes: if a shared resource pool is used to transmit the sidelink positioning reference signal and/or the sidelink positioning protocol signaling and data information, setting a priority field in sidelink control information SCI to any one of the following: a value corresponding to a highest priority in the sidelink positioning reference signal priority and/or the sidelink positioning protocol signaling priority and a data information priority, the sidelink positioning reference signal priority and/or the sidelink positioning protocol signaling priority, and the data information priority; and sending the sidelink positioning reference signal and/or the sidelink positioning protocol signaling based on the second information includes: sending the sidelink positioning reference signal and/or the sidelink positioning protocol signaling and the data information based on the priority field in the SCI.

With reference to the seventh aspect, in some possible implementations, the method further includes: sending fourth information to another terminal device, where the fourth information indicates a sidelink positioning reference signal priority and/or a sidelink positioning protocol signaling priority of the another terminal device.

For beneficial effects of the seventh aspect, refer to the related content in the second aspect. Details are not described again.

According to an eighth aspect, a communication apparatus is provided. For beneficial effects, refer to the descriptions in the first aspect. Details are not described herein again. The communication apparatus has a function of implementing the behavior in the method embodiment in the first aspect. The function may be implemented by using hardware, or may be implemented by using hardware executing corresponding software. The hardware includes one or more modules corresponding to the foregoing function. In a possible design, the communication apparatus includes: a transceiver module, configured to receive first information, where the first information indicates a requirement of a positioning service of a terminal device, and the requirement of the positioning service of the UE includes at least one of the following: location quality of service of the UE and quality of service of transmitting positioning data by the UE; and send the second information to the UE, where the second information is related to the first information, and the second information indicates a priority of the positioning service of the UE. These modules may perform corresponding functions in the method example in the first aspect. For details, refer to the detailed descriptions in the method example. Details are not described herein again.

According to a ninth aspect, a communication apparatus is provided. For beneficial effects, refer to the descriptions in the second aspect. Details are not described herein again. The communication apparatus has a function of implementing the behavior in the method example in the second aspect. The function may be implemented by using hardware, or may be implemented by using hardware executing corresponding software. The hardware or the software includes one or more modules corresponding to the foregoing function. In a possible design, the communication apparatus includes: a transceiver module, configured to send first information, where the first information indicates a requirement of a positioning service of the UE, and the requirement of the positioning service of the UE includes at least one of the following: location quality of service of the UE and quality of service of transmitting positioning data by the UE; receive second information, where the second information is related to the first information, and the second information indicates a priority of the positioning service of the UE; and send a sidelink positioning reference signal and/or sidelink positioning protocol signaling based on the second information. These modules may perform corresponding functions in the method example in the second aspect. For details, refer to the detailed descriptions in the method example. Details are not described herein again.

According to a tenth aspect, a communication apparatus is provided. For beneficial effects, refer to the descriptions in the third aspect. Details are not described herein again. The communication apparatus has a function of implementing the behavior in the method example in the third aspect. The function may be implemented by using hardware, or may be implemented by using hardware executing corresponding software. The hardware or the software includes one or more modules corresponding to the foregoing function. In a possible design, the communication apparatus includes: a transceiver module, configured to receive a request message sent by a third network device, where the request message is used to request to position a terminal device; and send first information based on the request message, where the first information indicates a requirement of a positioning service of the UE, and the requirement of the positioning service of the UE includes at least one of the following: location quality of service of the UE and quality of service of transmitting positioning data by the UE. These modules may perform corresponding functions in the method example in the third aspect. For details, refer to the detailed descriptions in the method example. Details are not described herein again.

According to an eleventh aspect, a communication apparatus is provided. For beneficial effects, refer to the descriptions in the fourth aspect. Details are not described herein again. The communication apparatus has a function of implementing the behavior in the method example in the fourth aspect. The function may be implemented by using hardware, or may be implemented by using hardware executing corresponding software. The hardware or the software includes one or more modules corresponding to the foregoing function. In a possible design, the communication apparatus includes: a processing module, configured to determine to initiate a positioning service; and a transceiver module, configured to send first information based on the positioning service, where the first information indicates a requirement of the positioning service of a terminal device, and the requirement of the positioning service of the UE includes at least one of the following: location quality of service of the UE and quality of service of transmitting positioning data by the UE; or send a request message to a second network device based on the positioning service, where the request message is used to request to position the UE. These modules may perform corresponding functions in the method example in the fourth aspect. For details, refer to the detailed descriptions in the method example. Details are not described herein again.

According to a twelfth aspect, a communication apparatus is provided. For beneficial effects, refer to the descriptions in the fifth aspect. Details are not described herein again. The communication apparatus has a function of implementing the behavior in the method example in the fifth aspect. The function may be implemented by using hardware, or may be implemented by using hardware executing corresponding software. The hardware or the software includes one or more modules corresponding to the foregoing function. In a possible design, the communication apparatus includes: a transceiver module, configured to broadcast second information, where the second information indicates a priority of a positioning service of a UE, and the priority of the positioning service of the UE includes a sidelink positioning reference signal priority of the UE and/or a sidelink positioning protocol signaling priority of the UE. These modules may perform corresponding functions in the method example in the fifth aspect. For details, refer to the detailed descriptions in the method example. Details are not described herein again.

According to a thirteenth aspect, a communication apparatus is provided. For beneficial effects, refer to the descriptions in the sixth aspect. Details are not described herein again. The communication apparatus has a function of implementing the behavior in the method example in the sixth aspect. The function may be implemented by using hardware, or may be implemented by using hardware executing corresponding software. The hardware or the software includes one or more modules corresponding to the foregoing function. In a possible design, the communication apparatus includes: a transceiver module, configured to receive second information, where the second information indicates a priority of a positioning service of the UE, and the priority of the positioning service of the UE includes a sidelink positioning reference signal priority of the UE and/or a sidelink positioning protocol signaling priority of the UE; and send a sidelink positioning reference signal and/or sidelink positioning protocol signaling based on the second information. These modules may perform corresponding functions in the method example in the sixth aspect. For details, refer to the detailed descriptions in the method example. Details are not described herein again.

According to a fourteenth aspect, a communication apparatus is provided. For beneficial effects, refer to the descriptions in the seventh aspect. Details are not described herein again. The communication apparatus has a function of implementing the behavior in the method example in the seventh aspect. The function may be implemented by using hardware, or may be implemented by using hardware executing corresponding software. The hardware or the software includes one or more modules corresponding to the foregoing function. In a possible design, the communication apparatus includes: a transceiver module, configured to obtain second information, where the second information indicates a priority of a positioning service of a UE, and the priority of the positioning service of the UE includes a sidelink positioning reference signal priority of the UE and/or a sidelink positioning protocol signaling priority of the UE; and send a sidelink positioning reference signal and/or sidelink positioning protocol signaling based on the second information. These modules may perform corresponding functions in the method example in the seventh aspect. For details, refer to the detailed descriptions in the method example. Details are not described herein again.

According to a fifteenth aspect, a communication apparatus is provided. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixteenth aspect, a communication apparatus is provided. The communication apparatus may be the network device in the foregoing method embodiments, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to a seventeenth aspect, a computer program product is provided. The computer program product includes computer program code, and when the computer program code is run, the method performed by the terminal device in the foregoing aspects is performed.

According to an eighteenth aspect, a computer program product is provided. The computer program product includes computer program code, and when the computer program code is run, the method performed by the network device in the foregoing aspects is performed.

According to a nineteenth aspect, this application provides a chip system. The chip system includes a processor, configured to implement a function of the terminal device in the methods in the foregoing aspects. In a possible design, the chip system further includes a memory, configured to store program instructions and/or data. The chip system may include a chip, or may include a chip and another discrete component.

According to a twentieth aspect, this application provides a chip system. The chip system includes a processor, configured to implement a function of the network device in the methods in the foregoing aspects. In a possible design, the chip system further includes a memory, configured to store program instructions and/or data. The chip system may include a chip, or may include a chip and another discrete component.

According to a twenty-first aspect, this application provides a computer-readable storage medium. The computer-readable storage medium stores a computer program. When the computer program is run, the method performed by the terminal device in the foregoing aspects is implemented.

According to a twenty-second aspect, this application provides a computer-readable storage medium. The computer-readable storage medium stores a computer program. When the computer program is run, the method performed by the network device in the foregoing aspects is implemented.

### BRIEF DESCRIPTION OF DRAWINGS

FIG. 1 is a diagram of an architecture of a mobile communication system to which an embodiment of this application is applied;
FIG. 2 is a diagram of a system architecture applicable to an embodiment of this application;
FIG. 3 is a diagram of a communication method according to an embodiment of this application;
FIG. 4 is a diagram of another communication method according to an embodiment of this application;
FIG. 5 is a diagram of another communication method according to an embodiment of this application;
FIG. 6 is a diagram of another communication method according to an embodiment of this application;
FIG. 7 is a diagram of another communication method according to an embodiment of this application;
FIG. 8 is a diagram of a communication apparatus according to an embodiment of this application; and
FIG. 9 is a diagram of another communication apparatus according to an embodiment of this application.

### DESCRIPTION OF EMBODIMENTS

The following describes the technical solutions in embodiments of this application with reference to the accompanying drawings.

The terms "first", "second", "third", and the like in the specification, claims, and accompanying drawings of this application are used to distinguish between different objects, but are not used to limit a specific sequence.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

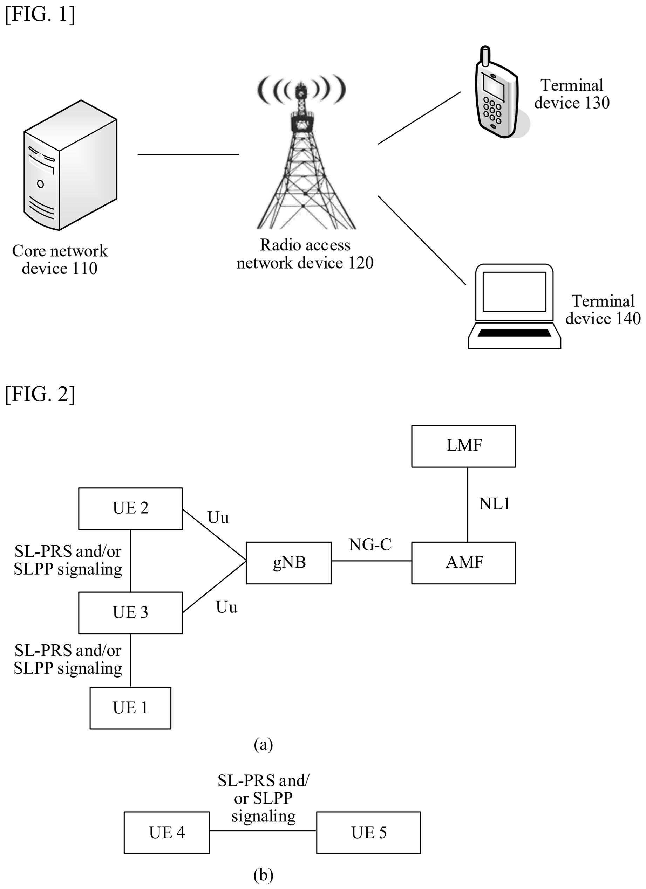

FIG. 1 is a diagram of an architecture of a mobile communication system to which an embodiment of this application is applied. As shown in FIG. 1, the mobile communication system includes a core network device 110, a radio access network device 120, and at least one terminal device (for example, a terminal device 130 and a terminal device 140 shown in FIG. 1). The terminal device is connected to the radio access network device in a wireless manner, and the radio access network device is connected to the core network device in a wireless or wired manner. The core network device and the radio access network device may be different independent physical devices, or functions of the core network device and logical functions of the radio access network device are integrated into a same physical device, or a part of functions of the core network device and a part of functions of the radio access network device are integrated into one physical device. The terminal device may be at a fixed location, or may be mobile. FIG. 1 is merely an example diagram. The communication system may further include other network devices, for example, may further include a wireless relay device and a wireless backhaul device, which are not shown in FIG. 1. None of quantities of core network devices, radio access network devices, and terminal devices that are included in the mobile communication system is limited in embodiments of this application.

In some possible manners, the mobile communication system may alternatively include at least one terminal device. This is not limited.

The radio access network device is an access device through which the terminal device accesses the mobile communication system in a wireless manner, and may be a base station (base station), an evolved NodeB (evolved NodeB, eNodeB), a transmission reception point (transmission reception point, TRP), a transmission point (transmission point, TP), a reception point (reception point, RP), a next generation NodeB (next generation NodeB, gNB) in a 5G mobile communication system, a base station in a future mobile communication system, an access node in a Wi-Fi system, or the like; or may be a module or unit that completes some functions of a base station, for example, may be a central unit (central unit, CU), or may be a distributed unit (distributed unit, DU). Neither of a specific technology and a specific device form used for the radio access network device is limited in embodiments of this application. In this application, the radio access network device may be referred to as a network device for short. For example, the radio access network device 120 may be referred to as a network device 120. The radio access network device may be a macro base station, or may be a micro base station, a pico base station, a small cell, or an indoor station, or may be a relay node, a donor node, or the like. Neither of a specific technology and a specific device form used for the radio access network device is limited in embodiments of this application. For example, a communication apparatus configured to implement a function of the radio access network device may be a network device, or may be an apparatus that can support the network device in implementing the function, for example, a chip system. The apparatus may be installed in the network device. For ease of description, the network device is used as an abbreviation of the radio access network device, and the base station is used as an example of the radio access network device. The base station may communicate with the terminal device, or may communicate with the terminal device via a relay station. The terminal device may communicate with a plurality of base stations in different access technologies.

The core network device is configured to implement functions such as mobility management, data processing, session management, and policy and charging. Names of devices that implement a core network function in systems of different access technologies may be different. This is not limited in embodiments of this application. Using a 5G system as an example, the core network device may include an access and mobility management function (access and mobility management function, AMF), a policy control function (policy control function, PCF), a location management function (location management function, LMF), a location service (LoCation Services, LCS), or the like. The core network device may also be referred to as a network device for short. For example, the core network device 110 may be referred to as a network device 110.

The terminal device is a device having wireless sending and receiving functions, and may send a signal to a base station, or receive a signal from a base station. The terminal device may also be referred to as a terminal, a user equipment (user equipment, UE), a mobile station, a mobile terminal, or the like. The terminal device may be a mobile phone, a wearable device, an in-vehicle device, a tablet computer (Pad), a computer with wireless sending and receiving functions, a virtual reality terminal device, an augmented reality terminal device, a wireless terminal in industrial control, a wireless terminal in self-driving, a wireless terminal in remote surgery, a wireless terminal in a smart grid, a wireless terminal in transportation security, a wireless terminal in a smart city, a wireless terminal in a smart home, or the like, or may be a wireless apparatus (for example, a communication module, a modem, or a chip system) built in the foregoing device. Neither of a specific technology and a specific device form used by the terminal device is limited in embodiments of this application. The terminal device may sometimes be referred to as a UE, a terminal, an access station, a UE station, a remote station, a wireless communication device, a user apparatus, or the like. For ease of description, an example in which the terminal device is a UE is used for description in embodiments of this application.

This application may be applied to a 5G new radio (new radio, NR) system, or may be applied to another communication system.

The network device and the terminal device may be at fixed locations, or may be movable. The network device and the terminal device may be deployed on land, including an indoor or outdoor device, a handheld device, or a vehicle-mounted device; or may be deployed on a water surface; or may be deployed on a plane, a balloon, or an artificial satellite in the air. Application scenarios of the network device and the terminal device are not limited in embodiments of this application.

Currently, positioning on a UE may include positioning based on a Uu interface or positioning based on a PC5 interface. The positioning based on the PC5 interface may be understood as introducing a sidelink in a positioning scenario. For ease of description, the positioning based on the PC5 interface is referred to as SL positioning in embodiments of this application. During SL positioning, to implement positioning on a UE, for example, absolute positioning on a target UE, or obtain a relative location between a target UE and another UE, some information about a positioning service needs to be transmitted between UEs, for example, a sidelink positioning reference signal or sidelink positioning protocol signaling. The sidelink positioning reference signal may be understood as a positioning-related reference signal that needs to be sent by the UE during SL positioning, and includes but is not limited to a sidelink positioning reference signal (sidelink positioning reference signal, SL-PRS). The SL-PRS is used as an example for description in embodiments of this application. The sidelink positioning protocol signaling may be understood as positioning-related positioning signaling that needs to be sent or received by the UE during SL positioning, for example, SL positioning capability information, SL positioning assistance information, or an SL positioning measurement result. The sidelink positioning protocol may be referred to as a sidelink positioning protocol (sidelink positioning protocol, SLPP) or a ranging and sidelink positioning protocol (ranging and sidelink positioning protocol, RSPP), or may have another name. This is not limited in embodiments of this application, and the SLPP is used as an example for description. Optionally, the sidelink positioning protocol signaling may be understood as data that needs to be sent or received by the UE during SL positioning.

A UE may transmit information in two solutions. In solution 1, a network device allocates a resource to the UE, and the UE transmits the information based on the resource allocated by the network device. In solution 2, the UE autonomously allocates a resource, and the UE transmits the information based on the autonomously allocated resource. However, in solution 2, a resource preemption conflict problem occurs when the UE autonomously allocates the resource. Currently, there is no solution available. Autonomous resource allocation may also be referred to as autonomous resource selection or autonomous resource preemption. In embodiments of this application, autonomous resource allocation is used as an example for description.

Therefore, this application provides a communication method and a communication apparatus, to avoid a resource preemption conflict problem that occurs when a UE autonomously allocates a resource.

Embodiments of this application may be applied to a positioning scenario including at least one network element/terminal/entity that can send an SL-PRS and/or SLPP signaling on a PC5 interface. In this case, the positioning scenario may include "positioning on a target UE (target UE) based on a positioning reference signal on a Uu interface and an SL-PRS on a PC5 interface", or include "positioning on a target UE based on an SL-PRS on a PC5 interface". Optionally, the PC5 interface or PC5 port may also be referred to as PC5 for short, and the Uu interface may be referred to as Uu for short.

In the foregoing positioning scenario, a positioning method may be further used to implement UE positioning. The positioning method includes but is not limited to: multi-round trip time (multi-round trip time, Multi-RTT) positioning, downlink time difference of arrival (downlink time difference of arrival, DL-TDOA) positioning, uplink time difference of arrival (uplink time difference of arrival, UL-TDOA) positioning, downlink angle of departure (downlink angle of departure, DL-AoD) positioning, uplink angle of arrival (uplink angle of arrival, UL-AoA) positioning, NR enhanced cell ID (NR enhanced cell ID, NR E CID) positioning, motion sensor (motion sensor) positioning, terrestrial beacon system (terrestrial beacon system, TBS) positioning, Bluetooth (Bluetooth) positioning, wireless local area network (wireless local area network, WLAN) positioning, barometric pressure sensor (barometric pressure sensor) positioning, enhanced cell ID (enhanced cell ID) positioning, observed time difference of arrival (observed time difference of arrival, OTDOA) positioning, network-assisted global navigation satellite system (global navigation satellite system, GNSS) positioning, or the like; or another positioning method supported in NR or long term evolution (long term evolution, LTE), for example, sidelink-time difference of arrival (sidelink-time difference of arrival, SL-TDOA), sidelink multi-round trip time (sidelink multi-round trip time, SL multi-RTT), or sidelink-angle of arrival (sidelink-angle of arrival, SL-AOA).

In the scenario of positioning the target UE (target UE) based on the positioning reference signal on the Uu interface and the SL-PRS on the PC5 interface, location information of the target UE may be obtained based on measurement results of the positioning reference signal on the Uu interface and the SL-PRS on the PC5 interface.

In the scenario of positioning the target UE based on the SL-PRS on the PC5 interface, information about the target UE may be obtained based on a measurement result of the SL-PRS on the PC5 interface.

FIG. 2 is a diagram of a system architecture applicable to an embodiment of this application. In FIG. 2, an example in which an SL-PRS and/or SLPP signaling are/is transmitted between UEs is used.

As shown in (a) in FIG. 2, a UE communicates with a gNB through a Uu interface, the gNB is connected to an access and mobility management function (access and mobility management function, AMF) network element through an NG control plane (NG control plane, NG-C) interface, and the AMF network element is connected to a location management function (location management function, LMF) network element through an NL1 interface. The UEs may communicate with each other through a PC5 interface.

For example, it is assumed that a UE 3 is a target UE, and a UE 1 and/or a UE 2 are/is configured to assist in positioning the UE 3. The UE 1 and the UE 2 may be referred to as anchor UE (anchor UE), reference UE (reference UE), assistant UE (assistant UE), or the like. It is assumed that a UE 1 is a target UE, and a UE 3 is configured to assist in positioning the UE 1. The UE 3 may be referred to as anchor UE, reference UE, assistant UE, or the like. This is not limited in this application.
(1) It is assumed that the UE 3 is a target UE, the UE 2 is configured to assist in positioning the UE 3, and both the UE 3 and the UE 2 may be within a coverage area of a base station. Radio resource control (radio resource control, RRC) states of the two UEs may include a connected state, an idle state, an inactive state, or the like. This application imposes no limitation that the UE 2 and the UE 3 are served by a same base station or different base stations. In some implementations, the UE 2 and/or the UE 3 may alternatively be UEs that access a network through a relay (relay). An SL-PRS and/or SLPP signaling may be transmitted between the UE 2 and the UE 3 based on the method provided in embodiments of this application.
(2) It is assumed that the UE 3 is a target UE, the UE 1 is configured to assist in positioning the UE 3, the UE 3 is within a coverage area of a base station, the UE 1 is outside the coverage area of the base station, and an RRC state of the UE 3 may include a connected state, an idle state, an inactive state, or the like. In some implementations, the UE 3 may alternatively be a UE that accesses a network through a relay. An SL-PRS and/or SLPP signaling may be transmitted between the UE 1 and the UE 3 based on the method provided in embodiments of this application.
(3) It is assumed that the UE 1 is a target UE, the UE 3 is configured to assist in positioning the UE 1, the UE 3 is within a coverage area of a base station, the UE 1 is outside the coverage area of the base station, and an RRC state of the UE 3 may include a connected state, an idle state, an inactive state, or the like. In some implementations, the UE 3 may alternatively be a UE that accesses a network through a relay. An SL-PRS and/or SLPP signaling may be transmitted between the UE 1 and the UE 3 based on the method provided in embodiments of this application.

As shown in (b) in FIG. 2, UEs (for example, a UE 4 and a UE 5 in the figure) may perform communication though a PC5 interface. It is assumed that the UE 4 is a target UE, the UE 5 is configured to assist in positioning the UE 4, and the UE 5 may be referred to as anchor UE, reference UE, assistant UE, or the like. This is not limited in this application. Both the UE 4 and the UE 5 may be outside the coverage area of the base station, and an SL-PRS and/or SLPP signaling may be transmitted between the UE 4 and the UE 5 based on the method provided in embodiments of this application.

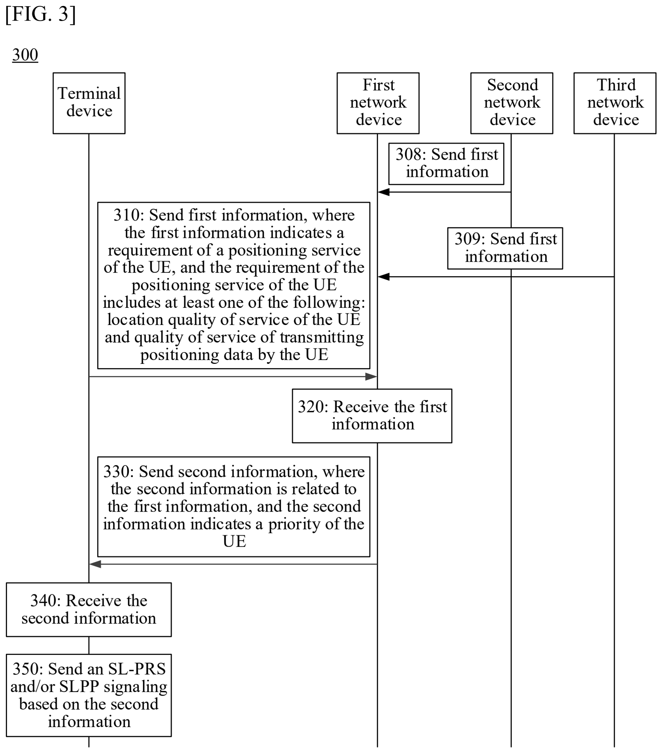

FIG. 3 is a diagram of a communication method 300 according to an embodiment of this application. The method 300 may be applied to a UE, a first network device, a second network device, and a third network device. The method 300 may include steps 308 to 350.

308: The second network device sends first information, where the first information indicates a requirement of a positioning service of the UE, and the requirement of the positioning service of the UE includes at least one of the following: location quality of service (location quality of service) of the UE and quality of service of transmitting positioning data by the UE.

The second network device in this embodiment of this application may be an LMF network element, or may be another network element. This is not limited.

Optionally, that the second network device sends the first information may include: The second network device sends the first information to the first network device.

309: The third network device sends first information, where the first information indicates a requirement of a positioning service of the UE, and the requirement of the positioning service of the UE includes at least one of the following: location quality of service of the UE and quality of service of transmitting positioning data by the UE.

The third network device in this embodiment of this application may be an AMF network element, or may be another network element. This is not limited.

Optionally, that the third network device sends the first information may include: The third network device sends the first information to the first network device.

310: The UE sends first information, where the first information indicates a requirement of a positioning service of the UE, and the requirement of the positioning service of the UE includes at least one of the following: location quality of service of the UE and quality of service of transmitting positioning data by the UE

Optionally, that the UE sends the first information includes: The UE sends the first information to the first network device.

Optionally, the foregoing steps 308 to 310 may not occur simultaneously, but only one of the steps occurs. For example, the first information may be sent by the second network device, or sent by the third network device, or sent by the UE. For another example, the first information may be sent by the second network device to the first network device, or sent by the third network device to the first network device, or sent by the UE to the first network device.

Optionally, a plurality of steps in the foregoing steps 308 to 310 may alternatively occur simultaneously. For example, two of the steps occur. For example, the UE sends the location quality of service of the UE to the first network device, and the second network device or the third network device sends, to the first network device, the quality of service of transmitting the positioning data by the UE. In this case, step 310 and step 308 may be performed, or step 310 and step 309 may be performed. For another example, the second network device sends the location quality of service of the UE to the first network device, and the UE or the third network device sends, to the first network device, the quality of service of transmitting the positioning data by the UE. In this case, step 308 and step 310 may be performed, or step 308 and step 309 may be performed. For another example, the third network device sends the location quality of service of the UE to the first network device, and the UE or the second network device sends, to the first network device, the quality of service of transmitting the positioning data by the UE. In this case, step 309 and step 310 may be performed, or step 309 and step 308 may be performed.

In embodiments of this application, the location quality of service of the UE may be location quality of service of requesting, by the UE, to position the UE or another UE, or may be location quality of service of requesting, by another network device such as an AMF network element, an LCS network element, or an LMF network element, to position the UE. This is not limited.

In embodiments of this application, the positioning data in the quality of service of transmitting the positioning data by the UE may include data information in a positioning process, for example, SLPP signaling. This is not limited. Functions supported by an SLPP include but are not limited to: SL positioning capability transfer (SLPP capability transfer), SL positioning assistance information transfer (SLPP assistance data transfer), SL location information transfer (SLPP location information transfer), error handling (error handling), abort (abort), and the like. The SL location information transfer may include an SL positioning-related measurement result, and may further include SL positioning-related location information.

Optionally, in an SL positioning scenario, the UE receives an SL-PRS sent by another UE, and obtains a measurement result. Optionally, a positioning method that can be used by the UE in the SL positioning scenario includes the positioning method described above. Each positioning method has a corresponding measurement result and configuration information of an SL-PRS corresponding to each positioning method. Optionally, the UE may alternatively first obtain configuration information of an SL-PRS, receive the SL-PRS based on the configuration information of the SL-PRS, and then obtain an SL positioning measurement result. Optionally, in the functions supported by the SLPP, the SL positioning assistance information transfer may indicate configuration information of an SL-PRS, the SL location information transfer may indicate a measurement result, and the like.

In embodiments of this application, the first information indicates the requirement of the positioning service of the UE, and the requirement of the positioning service of the UE may include at least one of the foregoing. In some possible implementations, the location quality of service (location quality of service) of the UE may correspond to a first positioning requirement, the location quality of service of the UE may be referred to as location QoS for short, the quality of service of transmitting the positioning data by the UE may correspond to a second positioning requirement, and the second positioning requirement may be represented by using a quality of service profile (QoS profile).

In some other possible implementations, the location quality of service of the UE may correspond to a first positioning requirement, the quality of service of transmitting the positioning data by the UE may correspond to a second positioning requirement, and the first positioning requirement and the second positioning requirement may be represented by using a QoS profile.

320: The first network device receives the first information.

The first network device in embodiments of this application may be a base station, for example, the radio access network device 120 in FIG. 1 or the gNB in FIG. 2.

Optionally, that the first network device receives the first information includes: The first network device receives the first information sent by the second network device, or the first network device receives the first information sent by the third network device, or the first network device receives the first information sent by the UE. If that the first network device receives the first information is that the first network device receives the first information sent by the second network device, in FIG. 3, step 308 may be first performed, then step 320 is performed, and step 309 and step 310 do not need to be performed. If that the first network device receives the first information is that the first network device receives the first information sent by the third network device, in FIG. 3, step 309 may be first performed, then step 320 is performed, and step 308 and step 310 do not need to be performed. If that the first network device receives the first information is that the first network device receives the first information sent by the UE, in FIG. 3, step 310 may be first performed, then step 320 is performed, and step 308 and step 309 do not need to be performed.

Optionally, receiving the first information in step 320 is related to some of a plurality of steps in steps 308 to 310. For example, the UE sends the location quality of service of the UE to the first network device, and the second network device or the third network device sends, to the first network device, the quality of service of transmitting the positioning data by the UE. In this case, step 310 and step 308 are performed, or step 310 and step 309 are performed. The first network device may receive the location quality of service of the UE from the UE, and receive, from the second network device, the quality of service of transmitting the positioning data by the UE, or receive the location quality of service of the UE from the UE, and receive, from the third network device, the quality of service of transmitting the positioning data by the UE.

For another example, the second network device sends the location quality of service of the UE to the first network device, and the UE or the third network device sends, to the first network device, the quality of service of transmitting the positioning data by the UE. In this case, step 308 and step 310 are performed, or step 308 and step 309 are performed. The first network device may receive the location quality of service of the UE from the second network device, and receive, from the UE, the quality of service of transmitting the positioning data by the UE, or receive the location quality of service of the UE from the second network device, and receive, from the third network device, the quality of service of transmitting the positioning data by the UE.

For another example, the third network device sends the location quality of service of the UE to the first network device, and the UE or the second network device sends, to the first network device, the quality of service of transmitting the positioning data by the UE. In this case, step 309 and step 310 are performed, or step 309 and step 308 are performed. The first network device may receive the location quality of service of the UE from the third network device, and receive, from the UE, the quality of service of transmitting the positioning data by the UE, or receive the location quality of service of the UE from the third network device, and receive, from the second network device, the quality of service of transmitting the positioning data by the UE.

330: The first network device sends second information to the UE, where the second information is related to the first information, and the second information indicates a priority of the positioning service of the UE.

Optionally, the priority of the positioning service of the UE includes an SL-PRS priority and/or an SLPP signaling priority.

In embodiments of this application, that the second information is related to the first information may include: The second information is determined based on the first information, or the second information is obtained based on the first information. For example, the second information is determined based on the first information through implementation of the first network device. Alternatively, that the second information is related to the first information may include: From a perspective of a time attribute, the second information occurs after the first information. This is not limited.

Optionally, the UE in embodiments of this application may be in an RRC connected state. Because the UE may send the first information to the first network device, the second information sent by the first network device to the UE indicates the priority of the positioning service of the UE.

340: The UE receives the second information. For example, the UE receives the second information sent by the first network device.

350: The UE sends a sidelink positioning reference signal and/or sidelink positioning protocol signaling based on the second information.

In embodiments of this application, that the UE sends the sidelink positioning reference signal (briefly referred to as SL-PRS below) and/or the sidelink positioning protocol signaling (briefly referred to as SLPP signaling below) based on the second information may be understood as: The UE sends the corresponding SL-PRS and/or SLPP signaling based on the priority of the positioning service of the UE that is indicated by the second information, for example, an SL-PRS priority and/or an SLPP signaling priority. For details, refer to related content of setting a priority field in SCI by the UE below.

It should be noted that the sidelink positioning reference signal may be briefly referred to as, but not limited to, SL-PRS, and the sidelink positioning protocol signaling may be briefly referred to as, but not limited to, SLPP signaling.

The UE in embodiments of this application may be a target UE, or may be a UE (for example, an anchor UE, a reference UE, or an assistant UE) that assists in positioning the target UE. This is not limited.

In the solution provided in embodiments of this application, the second network device, the third network device, or the UE sends the first information indicating the requirement of the positioning service of the UE to the first network device. After receiving the first information, the first network device may send the second information related to the first information to the UE, where the second information indicates the priority of the positioning service of the UE. The UE can select or allocate a resource based on the priority of the positioning service of the UE that is indicated by the second information, and send the SL-PRS and/or the SLPP signaling on the resource. The UE sends the SL-PRS and/or the SLPP signaling on the resource selected or allocated based on the priority of the positioning service of the UE that is indicated by the second information. Compared with a solution in which the UE autonomously allocates a resource to send a signal and/or signaling in the conventional technology, the solution in embodiments of this application can avoid a resource preemption conflict problem that occurs when the UE autonomously allocates a resource.

It should be noted that when a network device allocates an SL resource to the UE, in some possible implementations, the UE may also send a sidelink positioning reference signal and/or sidelink positioning protocol signaling based on the second information. This is not limited.

Optionally, in some embodiments, the priority of the positioning service of the UE includes an SL-PRS priority of the UE and/or an SLPP signaling priority of the UE.

In embodiments of this application, the priority of the positioning service of the UE includes the SL-PRS priority of the UE and/or the SLPP signaling priority of the UE, that is, may include the SL-PRS priority of the UE, or may include the SLPP signaling priority of the UE, or may include the SL-PRS priority of the UE and the SLPP signaling priority of the UE. This is not limited.

If the priority of the positioning service of the UE includes the SL-PRS priority of the UE, the UE may send an SL-PRS based on the SL-PRS priority of the UE, for example, preempt or reserve a corresponding resource for the SL-PRS and send the SL-PRS on the resource. If the priority of the positioning service of the UE includes the SLPP signaling priority of the UE, the UE may send SLPP signaling based on the SLPP signaling priority of the UE, for example, preempt or reserve a corresponding resource for the SLPP signaling and send the SLPP signaling on the resource.

In the solution provided in embodiments of this application, the priority of the positioning service of the UE may include the SL-PRS priority of the UE and/or the SLPP signaling priority of the UE. In this way, the UE can select or allocate a resource based on the SL-PRS priority of the UE and/or the SLPP signaling priority of the UE, and send the SL-PRS and/or the SLPP signaling on the resource. The UE sends the SL-PRS and/or the SLPP signaling on the resource selected or allocated based on the SL-PRS priority of the UE and/or the SLPP signaling priority of the UE. Compared with a solution in which the UE autonomously allocates a resource to send a signal and/or signaling in the conventional technology, the solution in embodiments of this application can avoid a resource preemption conflict problem that occurs when the UE autonomously allocates a resource.

Optionally, the first network device configures the priority of the positioning service for the UE by sending the second information to the UE. The first network device may configure the priority of the positioning service for the UE based on the first positioning requirement and the second positioning requirement, or the first network device may configure the priority of the positioning service for the UE based on the first positioning requirement, or the first network device may configure the priority of the positioning service for the UE based on the second positioning requirement. For example, that the first network device configures the priority of the positioning service for the UE based on the first positioning requirement and the second positioning requirement includes: If the first network device configures the priority of the positioning service for the UE based on the first positioning requirement and the second positioning requirement, the first information should indicate the first positioning requirement and the second positioning requirement; or if the first information indicates the first positioning requirement and the second positioning requirement, the first network device should configure the priority of the positioning service for the UE based on the first positioning requirement and the second positioning requirement. For another example, that the first network device configures the priority of the positioning service for the UE based on the first positioning requirement includes: If the first network device configures the priority of the positioning service for the UE based on the first positioning requirement, the first information should indicate the first positioning requirement; or if the first information indicates the first positioning requirement, the first network device should configure the priority of the positioning service for the UE based on the first positioning requirement. For another example, that the first network device configures the priority of the positioning service for the UE based on the second positioning requirement includes: If the first network device configures the priority of the positioning service for the UE based on the second positioning requirement, the first information should indicate the second positioning requirement; or if the first information indicates the second positioning requirement, the first network device should configure the priority of the positioning service for the UE based on the second positioning requirement. This is not limited. In some cases, even if the first information indicates the first positioning requirement and the second positioning requirement, the first network device may configure the priority of the positioning service for the UE based on the first positioning requirement or the second positioning requirement.

Optionally, the priority of the positioning service configured by the first network device for the UE by using the second information may include the SL-PRS priority and/or the SLPP signaling priority. Corresponding to the foregoing different cases in which the first network device configures the priority of the positioning service for the UE based on the first positioning requirement and/or the second positioning requirement, embodiments of this application may further include the following cases.
1. The first network device may configure the SL-PRS priority and the SLPP signaling priority for the UE based on the first positioning requirement and the second positioning requirement. In this case, the first information should indicate the first positioning requirement and the second positioning requirement, and the second information indicates the SL-PRS priority and the SLPP signaling priority. That is, both the SL-PRS priority and the SLPP signaling priority are configured by the first network device for the UE. For example, the first network device may explicitly indicate the SL-PRS priority and the SLPP signaling priority in the second information.
2. The first network device may configure the SL-PRS priority and the SLPP signaling priority for the UE based on the first positioning requirement. In this case, the first information indicates the first positioning requirement, and the second information indicates the SL-PRS priority and the SLPP signaling priority. That is, both the SL-PRS priority and the SLPP signaling priority are configured by the first network device for the UE. For example, the first network device may explicitly indicate the SL-PRS priority and the SLPP signaling priority in the second information.
3. The first network device may configure the SL-PRS priority and the SLPP signaling priority for the UE based on the second positioning requirement. In this case, the first information indicates the second positioning requirement, and the second information indicates the SL-PRS priority and the SLPP signaling priority. That is, both the SL-PRS priority and the SLPP signaling priority are configured by the first network device for the UE. For example, the first network device may explicitly indicate the SL-PRS priority and the SLPP signaling priority in the second information.
4. The first network device may configure the SL-PRS priority for the UE based on the first positioning requirement and the second positioning requirement. In this case, the first information should indicate the first positioning requirement and the second positioning requirement, and the second information indicates the SL-PRS priority. That is, the SL-PRS priority is configured by the first network device for the UE. For example, the first network device may explicitly indicate the SL-PRS priority in the second information. Optionally, the UE may further determine the SLPP priority based on the SL-PRS priority. The SLPP priority could also be understood as SLPP signaling priority, and the same for SL-PRS priority be understood as SL-PRS signaling priority. For example, the UE determines that the SLPP signaling priority is a priority that is the same as the SL-PRS priority.
5. The first network device may configure the SL-PRS priority for the UE based on the first positioning requirement. In this case, the first information indicates the first positioning requirement, and the second information indicates the SL-PRS priority. That is, the SL-PRS priority is configured by the first network device for the UE. For example, the first network device may explicitly indicate the SL-PRS priority in the second information. Optionally, the UE may further determine the SLPP priority based on the SL-PRS priority. For example, the UE determines that the SLPP signaling priority is a priority that is the same as the SL-PRS priority.
6. The first network device may configure the SL-PRS priority for the UE based on the second positioning requirement. In this case, the first information indicates the second positioning requirement, and the second information indicates the SL-PRS priority. That is, the SL-PRS priority is configured by the first network device for the UE. For example, the first network device may explicitly indicate the SL-PRS priority in the second information. Optionally, the UE may further determine the SLPP priority based on the SL-PRS priority. For example, the UE determines that the SLPP signaling priority is a priority that is the same as the SL-PRS priority.
7. The first network device may configure the SLPP signaling priority for the UE based on the first positioning requirement and the second positioning requirement. In this case, the first information should indicate the first positioning requirement and the second positioning requirement, and the second information indicates the SLPP signaling priority. That is, the SLPP signaling priority is configured by the first network device for the UE. For example, the first network device may explicitly indicate the SLPP signaling priority in the second information. Optionally, the UE may further determine the SL-PRS priority based on the SLPP signaling priority. For example, the UE determines that the SL-PRS priority is a priority that is the same as the SLPP signaling priority.
8. The first network device may configure the SLPP signaling priority for the UE based on the first positioning requirement. In this case, the first information indicates the first positioning requirement, and the second information indicates the SLPP signaling priority. That is, the SLPP signaling priority is configured by the first network device for the UE. For example, the first network device may explicitly indicate the SLPP signaling priority in the second information. Optionally, the UE may further determine the SL-PRS priority based on the SLPP signaling priority. For example, the UE determines that the SL-PRS priority is a priority that is the same as the SLPP signaling priority.
9. The first network device may configure the SLPP signaling priority for the UE based on the second positioning requirement. In this case, the first information indicates the second positioning requirement, and the second information indicates the SLPP signaling priority. That is, the SLPP signaling priority is configured by the first network device for the UE. For example, the first network device may explicitly indicate the SLPP signaling priority in the second information. Optionally, the UE may further determine the SL-PRS priority based on the SLPP signaling priority. For example, the UE determines that the SL-PRS priority is a priority that is the same as the SLPP signaling priority.

In the solution provided in embodiments of this application, when configuring the priority of the positioning service for the UE, the first network device may consider the positioning requirement of the UE. For example, the first network device may configure the priority of the positioning service for the UE based on the positioning requirement of the UE, so that the priority of the positioning service configured by the first network device for the UE is more adaptive to the UE. This helps the UE select or allocate a resource based on the priority of the positioning service, and send an SL-PRS and/or SLPP signaling on the resource, thereby avoiding a resource preemption conflict problem that occurs when the UE autonomously allocates a resource.

Optionally, for a case in which the first network device configures the SL-PRS priority for the UE based on the second positioning requirement, where the second positioning requirement is a requirement of a specific positioning service, the SL-PRS priority is an SL-PRS priority of the positioning service, that is, the SL-PRS priority corresponds to a specific positioning service. Optionally, that the SL-PRS priority corresponds to a specific positioning service may be higher layer information, for example, RRC layer information. In addition, for the UE, a higher layer of the UE, for example, an RRC layer, may deliver an identifier, such as a QoS flow identifier (QoS flow ID, QFI), related to the second positioning requirement of the positioning service to a medium access control (medium access control, MAC) layer. The MAC layer may determine, based on the identifier, a priority corresponding to an SL-PRS that needs to be sent currently, and then deliver the corresponding SL-PRS priority to a physical (physical, PHY) layer. It may be understood that, in this case, information exchange between higher layers of the UE, for example, the RRC layer and the MAC layer, can resolve a problem of how the UE determines a service for which an SL-PRS is to be sent currently when the UE has a plurality of positioning services.

Optionally, for a case in which the first network device determines the SL-PRS priority based on the first positioning requirement, or a case in which the first network device determines the SL-PRS priority based on the first positioning requirement and the second positioning requirement, a higher layer of the UE, for example, an RRC layer, may also deliver an identifier, such as a QFI, related to the positioning requirement of the positioning service to a MAC layer. Optionally, if the first network device determines the SL-PRS priority based on the first positioning requirement, the identifier indicates the first positioning requirement; or if the first network device determines the SL-PRS priority based on the first positioning requirement and the second positioning requirement, the identifier indicates the first positioning requirement and the second positioning requirement.

In embodiments of this application, the positioning service of the UE may include: A positioning service of each UE includes one positioning service, a positioning service of at least one UE includes a plurality of positioning services, and the like.

In a case in which the positioning service of each UE includes one positioning service, for example, a UE 1 includes a positioning service 1, and a UE 2 includes a positioning service 2, second information sent by the first network device to the UE 1 may indicate an SL-PRS priority and/or an SLPP signaling priority corresponding to the positioning service 1, and second information sent to the UE 2 may indicate an SL-PRS priority and/or an SLPP signaling priority corresponding to the positioning service 2. Optionally, the second information sent by the first network device to the UE 1 may indicate the positioning service 1 and the SL-PRS priority and/or the SLPP signaling priority corresponding to the positioning service 1, and the second information sent to the UE 2 may indicate the positioning service 2 and the SL-PRS priority and/or the SLPP signaling priority corresponding to the positioning service 2.

In a case in which the positioning service of the at least one UE includes a plurality of positioning services, optionally, in some embodiments, the positioning service of the UE includes a first positioning service and a second positioning service.

The second information indicates at least one of the following:
an SL-PRS first priority, where the SL-PRS first priority corresponds to the first positioning service;
an SL-PRS second priority, where the SL-PRS second priority corresponds to the second positioning service;
an SLPP signaling first priority, where the SLPP signaling first priority corresponds to the first positioning service; and
an SLPP signaling second priority, where the SLPP signaling second priority corresponds to the second positioning service.

In embodiments of this application, if the positioning service of the UE includes a plurality of positioning services, for example, includes the positioning service 1 and the positioning service 2, in this case, the second information sent by the first network device to the UE may indicate at least one of the following: the SL-PRS priority corresponding to the positioning service 1, the SL-PRS priority corresponding to the positioning service 2, the SLPP signaling priority corresponding to the positioning service 1, and the SLPP signaling priority corresponding to the positioning service 2. For example, if the first information received by the first network device indicates a plurality of positioning services, the first network device may configure a priority of a positioning service for each of the plurality of positioning services based on the received first information.

Optionally, the second information may indicate that the SL-PRS priority corresponding to the positioning service 1 is higher than or lower than the SL-PRS priority corresponding to the positioning service 2, and the SLPP signaling priority corresponding to the positioning service 1 is higher than or lower than the SLPP signaling priority corresponding to the positioning service 2.

In embodiments of this application, if the positioning service of the UE is initiated by the UE, the first positioning service and the second positioning service may be positioning services of the UE.

If the positioning service of the UE is initiated by a network device (such as an LCS network element or an AMF network element), the first positioning service and the second positioning service may correspond to different UEs. For example, the first positioning service is a positioning service of the UE 1, and the second positioning service is a positioning service of the UE 2. Alternatively, the first positioning service and the second positioning service may correspond to a same UE.

It should be understood that the foregoing embodiment is described by using an example in which the positioning service includes two positioning services. In some possible implementations, the positioning service may include three or four or more positioning services. In this case, the second information may still indicate SL-PRS priorities and/or SLPP signaling priorities of the plurality of positioning services according to a similar method.

In embodiments of this application, the second information may indicate a parameter of the first positioning service and the SL-PRS first priority and/or the SLPP signaling first priority corresponding to the parameter of the first positioning service, or may indicate an identifier of the first positioning service and the SL-PRS first priority and/or the SLPP signaling first priority corresponding to the identifier of the first positioning service, or may indicate an index of the first positioning service and the SL-PRS first priority and/or the SLPP signaling first priority corresponding to the index of the first positioning service. Similarly, the second information may indicate a parameter of the second positioning service and the SL-PRS second priority and/or the SLPP signaling second priority corresponding to the parameter of the second positioning service, or may indicate an identifier of the second positioning service and the SL-PRS second priority and/or the SLPP signaling second priority corresponding to the identifier of the second positioning service, or may indicate an index of the second positioning service and the SL-PRS second priority and/or the SLPP signaling second priority corresponding to the index of the second positioning service. This is not limited.

In the solution provided in embodiments of this application, the positioning service of the UE may include the first positioning service and the second positioning service, and the second information may indicate at least one of the following: the SL-PRS first priority, the SL-PRS second priority, the SLPP signaling first priority, and the SLPP signaling second priority. The SL-PRS first priority and/or the SLPP signaling first priority correspond/corresponds to the first positioning service, and the SL-PRS second priority and/or the SLPP signaling second priority correspond/corresponds to the second positioning service. The UE can select or allocate a resource based on content indicated by the second information, and send an SL-PRS and/or SLPP signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

The foregoing embodiment describes that the second information indicates the priority of the positioning service of the UE, and the priority of the positioning service of the UE may include the SL-PRS priority of the UE and/or the SLPP signaling priority of the UE. The second information may include different content. For details, refer to the following.

Optionally, in some embodiments, the second information includes one of the following:
a value of the SL-PRS priority and/or a value of the SLPP signaling priority; and
information about the positioning service and a value of an SL-PRS priority corresponding to the positioning service and/or a value of an SLPP signaling priority corresponding to the positioning service.

In embodiments of this application, the information about the positioning service may include at least one of a parameter of the positioning service, an identifier of the positioning service, and an index of the positioning service. The identifier of the positioning service may be an identifier of a service, or may be an identifier of a requirement of the service. The index of the positioning service may be an index of a service, or may be an index of a requirement of the positioning service. The information about the positioning service may alternatively be a QFI. This is not limited.

The parameter of the positioning service may include but is not limited to one or more of the following: horizontal accuracy (horizontal accuracy), vertical accuracy (vertical accuracy), response time (response time), an LCS quality of service class (LCS QoS class), a PC5 5G quality of service identifier (PC5 5G QoS identifier, PQI), a flow bit rate (flow bit rates), a link aggregated bit rate (link aggregated bit rates), a guaranteed flow bit rate (guaranteed flow bit rate, GFBR), a maximum flow bit rate (maximum flow bit rate, MFBR), a range (range), a default value (default values), a resource type (resource type), a packet delay budget (packet delay budget, PDB), a priority level (priority level), a packet error rate (packet error rate, PER), an averaging window (averaging window), a maximum data burst volume (maximum data burst volume, MDBV), and the like.

The identifier of the positioning service may include but is not limited to one or more of the following: an identifier of the location quality of service of the UE, an identifier of a first parameter corresponding to the location quality of service of the UE, an identifier of the quality of service of transmitting the positioning data by the UE, an identifier of a second parameter corresponding to the quality of service of transmitting the positioning data by the UE, an identifier corresponding to a QoS profile including both the location quality of service of the UE and the quality of service of transmitting the positioning data by the UE, and the like.

The index of the positioning service may include but is not limited to one or more of the following: an index of the location quality of service of the UE, an index of a first parameter corresponding to the location quality of service of the UE, an index of the quality of service of transmitting the positioning data by the UE, an index of a second parameter corresponding to the quality of service of transmitting the positioning data by the UE, an index corresponding to a QoS profile including both the location quality of service of the UE and the quality of service of transmitting the positioning data by the UE, and the like.

In embodiments of this application, the second information may include the information about the positioning service. In this case, for specific content indicated by the second information, refer to the foregoing content included in the information about the positioning service.

Optionally, in embodiments of this application, the content included in the second information sent by the first network device to the UE is not related to a quantity of positioning services of the UE. When there are one or more positioning services of the UE, the second information may include information about the positioning service and a value of an SL-PRS priority and/or a value of an SLPP signaling priority.

Optionally, in embodiments of this application, the content included in the second information sent by the first network device to the UE is related to a quantity of positioning services of the UE. If each UE has one positioning service, the second information may include any one of a value of an SL-PRS priority, a value of an SLPP signaling priority, or a value of an SL-PRS priority and a value of an SLPP signaling priority.

If at least one positioning service of the UE is a plurality of positioning services, the second information may include information about the positioning services and values of SL-PRS priorities corresponding to the positioning services, information about the positioning services and values of SLPP signaling priorities corresponding to the positioning services, or information about the positioning services, values of SL-PRS priorities corresponding to the positioning services, and values of SLPP signaling priorities corresponding to the positioning services. In this case, the information about the positioning service and the value of the SL-PRS priority and/or the value of the SLPP signaling priority corresponding to the positioning service may be implemented in a list manner. For details, refer to related content in the method 600.

### Case 1: Each UE includes one positioning service.

### (1) SL-PRS priority

For example, if each of three UEs has a positioning service, including a positioning service of a UE 1, a positioning service of a UE 2, and a positioning service of a UE 3, after receiving first information corresponding to the three UEs, the first network device sends a respective SL-PRS priority to each UE. For example, a value of the SL-PRS priority corresponding to the positioning service of the UE 1 is 1, a value of the SL-PRS priority corresponding to the positioning service of the UE 2 is 3, and a value of the SL-PRS priority corresponding to the positioning service of the UE 3 is 2. A smaller value of the SL-PRS priority indicates a higher priority, and a larger value indicates a lower priority. After receiving the value of the respective SL-PRS priority, the three UEs each may send an SL-PRS based on the value of the SL-PRS priority. Because the value of the SL-PRS priority corresponding to the positioning service of the UE 1 is 1, the UE 1 may determine that the SL-PRS priority corresponding to the positioning service of the UE 1 is the highest. The value of the SL-PRS priority corresponding to the positioning service of the UE 3 is 2, and the value of the SL-PRS priority corresponding to the positioning service of the UE 2 is 3. The UE 2 and the UE 3 may know that the SL-PRS priorities corresponding to the positioning services of the UE 2 and the UE 3 are not the highest. Therefore, the UE 1 may preferentially send an SL-PRS corresponding to the positioning service of the UE 1. Alternatively, the value of the SL-PRS priority corresponding to the positioning service of the UE 1 is 1, and the UE 1 may determine that the SL-PRS priority corresponding to the positioning service of the UE 1 is the highest; the value of the SL-PRS priority corresponding to the positioning service of the UE 3 is 2, and the UE 3 may know that the SL-PRS priority corresponding to the positioning service of the UE 3 is the second highest; and the value of the SL-PRS priority corresponding to the positioning service of the UE 2 is 3, and the UE 2 may know that the SL-PRS priority corresponding to the positioning service of the UE 2 is the lowest. Therefore, the UE 1 may preferentially send an SL-PRS corresponding to the positioning service of the UE 1, then the UE 3 sends an SL-PRS corresponding to the positioning service of the UE 3, and finally the UE 2 sends an SL-PRS corresponding to the positioning service.

### (2) SLPP signaling priority

Still in the foregoing example, if each of three UEs has a positioning service, including a positioning service of a UE 1, a positioning service of a UE 2, and a positioning service of a UE 3, after receiving first information corresponding to the three UEs, the first network device sends a respective SLPP signaling priority to each UE. For example, a value of the SLPP signaling priority corresponding to the positioning service of the UE 1 is 1, a value of the SLPP signaling priority corresponding to the positioning service of the UE 2 is 3, and a value of the SLPP signaling priority corresponding to the positioning service of the UE 3 is 2. A smaller value of the SLPP signaling priority indicates a higher priority, and a larger value indicates a lower priority. After receiving the value of the respective SLPP signaling priority, the three UEs each may send SLPP signaling based on the value of the SLPP signaling priority. Because the value of the SLPP signaling priority corresponding to the positioning service of the UE 1 is 1, the UE 1 may determine that the SLPP signaling priority corresponding to the positioning service of the UE 1 is the highest. The value of the SLPP signaling priority corresponding to the positioning service of the UE 3 is 2, and the value of the SLPP signaling priority corresponding to the positioning service of the UE 2 is 3. The UE 2 and the UE 3 may know that the SLPP signaling priorities corresponding to the positioning services of the UE 2 and the UE 3 are not the highest. Therefore, the UE 1 may preferentially send SLPP signaling corresponding to the positioning service of the UE 1. Alternatively, the value of the SLPP signaling priority corresponding to the positioning service of the UE 1 is 1, and the UE 1 may determine that the SLPP signaling priority corresponding to the positioning service of the UE 1 is the highest; the value of the SLPP signaling priority corresponding to the positioning service of the UE 3 is 2, and the UE 3 may know that the SLPP signaling priority corresponding to the positioning service of the UE 3 is the second highest; and the value of the SLPP signaling priority corresponding to the positioning service of the UE 2 is 3, and the UE 2 may know that the SLPP signaling priority corresponding to the positioning service of the UE 2 is the lowest. Therefore, the UE 1 may preferentially send SLPP signaling corresponding to the positioning service of the UE 1, then the UE 3 sends SLPP signaling corresponding to the positioning service of the UE 3, and finally the UE 2 sends SLPP signaling corresponding to the positioning service.

### Case 2: At least one UE includes a plurality of positioning services.

### (1) SL-PRS priority

If a UE 4 includes a plurality of positioning services (such as a positioning service 1, a positioning service 2, and a positioning service 3), after receiving first information corresponding to the UE 4, the first network device sends information about each positioning service and a value of an SL-PRS priority corresponding to each positioning service to the UE 4, for example, information about the positioning service 1 and a value 1 of an SL-PRS priority corresponding to the positioning service 1, information about the positioning service 2 and a value 3 of an SL-PRS priority corresponding to the positioning service 2, and information about the positioning service 3 and a value 2 of an SL-PRS priority corresponding to the positioning service 3. After receiving the information about each positioning service and the value of the SL-PRS priority corresponding to each positioning service, the UE 4 may send an SL-PRS based on the information about each positioning service and the value of the SL-PRS priority corresponding to each positioning service. Because the value of the SL-PRS priority corresponding to the positioning service 1 is 1, the value of the SL-PRS priority corresponding to the positioning service 2 is 3, and the value of the SL-PRS priority corresponding to the positioning service 3 is 2, the UE 4 may determine that the SL-PRS priority corresponding to the positioning service 1 is higher than the SL-PRS priority corresponding to the positioning service 3, and the SL-PRS priority corresponding to the positioning service 3 is higher than the SL-PRS priority corresponding to the positioning service 2. Therefore, the UE 4 may preferentially send an SL-PRS corresponding to the positioning service 1, then send an SL-PRS corresponding to the positioning service 3, and finally send an SL-PRS corresponding to the positioning service 2.

### (2) SLPP signaling priority

Still in the foregoing example, if a UE 4 includes a plurality of positioning services (such as a positioning service 1, a positioning service 2, and a positioning service 3), after receiving first information corresponding to the UE 4, the first network device sends information about each positioning service and a value of an SLPP signaling priority corresponding to each positioning service to the UE 4, for example, information about the positioning service 1 and a value 1 of an SLPP signaling priority corresponding to the positioning service 1, information about the positioning service 2 and a value 3 of an SLPP signaling priority corresponding to the positioning service 2, and information about the positioning service 3 and a value 2 of an SLPP signaling priority corresponding to the positioning service 3. After receiving the information about each positioning service and the value of the SLPP signaling priority corresponding to each positioning service, the UE 4 may send SLPP signaling based on the information about each positioning service and the value of the SLPP signaling priority corresponding to each positioning service. Because the value of the SLPP signaling priority corresponding to the positioning service 1 is 1, the value of the SLPP signaling priority corresponding to the positioning service 2 is 3, and the value of the SLPP signaling priority corresponding to the positioning service 3 is 2, the UE 4 may determine that the SLPP signaling priority corresponding to the positioning service 1 is higher than the SLPP signaling priority corresponding to the positioning service 3, and the SLPP signaling priority corresponding to the positioning service 3 is higher than the SLPP signaling priority corresponding to the positioning service 2. Therefore, the UE 4 may preferentially send SLPP signaling corresponding to the positioning service 1, then send SLPP signaling corresponding to the positioning service 3, and finally send SLPP signaling corresponding to the positioning service 2.

In the solution provided in embodiments of this application, the second information may include the value of the SL-PRS priority and/or the value of the SLPP signaling priority; or include the information about the positioning service and the value of the SL-PRS priority corresponding to the positioning service and/or the value of the SLPP signaling priority corresponding to the positioning service. The UE can select or allocate a resource based on content included in the second information, and send an SL-PRS and/or SLPP signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

Optionally, in some embodiments, when the second information indicates the SLPP signaling priority, the second information may include radio bearer (radio bearer, RB) configuration information corresponding to SLPP signaling. For example, the RB configuration information may indicate the requirement of the positioning service. The second information may further include radio link control (radio link control, RLC) bearer configuration information corresponding to the SLPP signaling. The RLC bearer configuration information includes logical channel configuration information. The UE may determine, based on the requirement of the positioning service included in the RB configuration information, a specific positioning service currently configured by a base station, and determine, based on the logical channel configuration information included in the RLC bearer configuration information, a priority corresponding to an SLPP. Alternatively, the second information may include only RB configuration information. The RB configuration information indicates a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, a priority corresponding to an SLPP. The logical channel configuration information includes a logical channel priority of a logical channel, and the logical channel priority of the logical channel may correspond to the SLPP signaling priority. In other words, it may be understood that the logical channel priority is the SLPP signaling priority. Optionally, the UE may further use the SLPP signaling priority as an SL-PRS priority. In this case, the SL-PRS priority may be specific to each RB.

Optionally, in some embodiments, the second information may indicate the SL-PRS priority, and the second information may include RB configuration information corresponding to the SL-PRS. For example, the RB configuration information may indicate the requirement of the positioning service. The second information may further include RLC bearer configuration information corresponding to the SL-PRS. The RLC bearer configuration information includes logical channel configuration information. The UE may determine, based on the requirement of the positioning service indicated in the RB configuration information, a specific positioning service currently configured by a base station, and determine, based on the logical channel configuration information included in the RLC bearer configuration information, a priority corresponding to the SL-PRS. Alternatively, the second information may include only RB configuration information. The RB configuration information includes a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, a priority corresponding to the SL-PRS. The logical channel configuration information includes a logical channel priority of a logical channel, and the logical channel priority of the logical channel may correspond to the SL-PRS priority. In other words, it may be understood that the logical channel priority is the SL-PRS priority. Optionally, that the SL-PRS corresponds to the RB configuration information may be understood as that the SL-PRS priority is specific to each RB. Optionally, the SL-PRS priority may alternatively be shared by all RBs of the UE. This is not limited.

Optionally, in some embodiments, the second information may indicate the SLPP signaling priority and the SL-PRS priority. For example, the second information may include RB configuration information corresponding to the SLPP signaling and the SL-PRS. For example, the RB configuration information may indicate the requirement of the positioning service. The second information may further include RLC bearer configuration information corresponding to the SLPP signaling and the SL-PRS. The RLC bearer configuration information includes logical channel configuration information. The UE may determine, based on the requirement of the positioning service indicated in the RB configuration information, a specific positioning service currently configured by a base station, and determine, based on the logical channel configuration information included in the RLC bearer configuration information, priorities corresponding to the SLPP signaling and the SL-PRS. Alternatively, the second information may include only RB configuration information. The RB configuration information includes a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, priorities corresponding to the SLPP signaling and the SL-PRS. The logical channel configuration information includes a logical channel priority of a logical channel, and the logical channel priority of the logical channel may correspond to the SLPP signaling priority and the SL-PRS priority. In other words, it may be understood that the logical channel priority is the SLPP signaling priority and the SL-PRS priority.

In conclusion, the second information may include only the RB configuration information corresponding to the SLPP signaling or the SL-PRS, and the RB configuration information only indicates the SLPP signaling priority or the SL-PRS priority. For example, the second information includes RLC bearer configuration information, and the RLC bearer configuration information includes logical channel configuration information. The UE may determine, based on the logical channel configuration information included in the RLC bearer configuration information, a priority corresponding to an SLPP or the SL-PRS priority. The second information may alternatively include RB configuration information corresponding to the SLPP signaling and the SL-PRS, and the RB configuration information indicates the SLPP signaling priority and the SL-PRS priority. For example, the second information includes RLC bearer configuration information, and the RLC bearer configuration information includes logical channel configuration information. The UE may determine, based on the logical channel configuration information included in the RLC bearer configuration information, a priority corresponding to an SLPP and the SL-PRS priority. Optionally, in this case, the UE has only one positioning service. Therefore, the second information may include only a priority, and does not need to indicate information about the positioning service.

In embodiments of this application, if the second information sent by the first network device to the UE indicates the SLPP signaling priority and/or the SL-PRS priority, the second information may include the RB configuration information corresponding to the SLPP signaling and/or the SL-PRS priority, and the SL-PRS priority and/or the SLPP signaling priority of the UE are/is configured by using the RB configuration information, so that the UE can select or allocate a resource based on the SL-PRS priority and/or the SLPP signaling priority of the UE, and sends the SL-PRS and/or the SLPP signaling on the resource. Compared with a solution in which the UE autonomously allocates a resource to send signaling in the conventional technology, the solution in embodiments of this application can avoid a resource preemption conflict problem that occurs when the UE autonomously allocates a resource.

It is further noted above that the first information indicates the requirement of the positioning service of the UE, and the requirement of the positioning service of the UE includes at least one of the following: the location quality of service of the UE and the quality of service of transmitting the positioning data by the UE. The first information may include different content. For details, refer to the following.

Optionally, in some embodiments, the first information includes at least one of the following:
a first parameter corresponding to the location quality of service of the UE, a first index corresponding to the location quality of service of the UE, a second parameter corresponding to the quality of service of transmitting the positioning data by the UE, and a second index corresponding to the quality of service of transmitting the positioning data by the UE.

The first parameter indicates the location quality of service of the UE, the first index is used to obtain the location quality of service of the UE, the second parameter indicates the quality of service of transmitting the positioning data by the UE, and the second index is used to obtain the quality of service of transmitting the positioning data by the UE.

In embodiments of this application, the first information received by the first network device may include the first parameter indicating the location quality of service of the UE, and the first network device may learn of the requirement of the positioning service of the UE based on the first parameter. The first information may further include the first index corresponding to the location quality of service of the UE, and the first network device may obtain the location quality of service of the UE based on the first index, that is, obtain the first parameter corresponding to the first index. For example, the first parameter may be included in a QoS profile, and the first index may be a QoS flow identifier. Optionally, the first parameter that is included in the first information and that indicates the location quality of service of the UE may include a value of the parameter.

In embodiments of this application, the first information received by the first network device may include the second parameter indicating the quality of service of transmitting the positioning data by the UE, and the first network device may learn, based on the second parameter, of the quality of service of transmitting the positioning data by the UE. The first information may further include the second index corresponding to the quality of service of transmitting the positioning data by the UE, and the first network device may obtain, based on the second index, the quality of service of transmitting the positioning data by the UE, that is, obtain the second parameter corresponding to the second index. For example, the second parameter may be included in a QoS profile, and the second index may be a QoS flow identifier. Optionally, the second parameter that is included in the first information and that indicates the quality of service of transmitting the positioning data by the UE may include a value of the parameter.

In embodiments of this application, the first index may include an index of the location quality of service of the UE, or an index of the first parameter corresponding to the location quality of service of the UE. The second index may include an index of the quality of service of transmitting the positioning data by the UE, or an index of the second parameter corresponding to the quality of service of transmitting the positioning data by the UE. This is not limited.

Optionally, in some embodiments, the first parameter includes at least one of the following:
horizontal accuracy (horizontal accuracy), vertical accuracy (vertical accuracy), response time (response time), an LCS quality of service class (LCS QoS class), requested vertical accuracy, and a minor LCS quality of service class (minorLocQoses).

The second parameter includes at least one of the following:
a PC5 5G quality of service identifier (PC5 5G QoS identifier, PQI), a flow bit rate (flow bit rates), a link aggregated bit rate (link aggregated bit rates), a range (range), a default value (default values), a resource type (resource type), a packet delay budget (packet delay budget, PDB), a priority level (priority level), a packet error rate (packet error rate, PER), an averaging window (averaging window), and a maximum data burst volume (maximum data burst volume, MDBV). The second parameter may be a parameter related to PC5. For example, the flow bit rate is PC5 low bit rates, and the link aggregated bit rate is PC5 link aggregated bit rates. Optionally, parameters such as the resource type, the packet delay budget, the priority level, the packet error rate, the averaging window, and the maximum data burst volume may be indicated by using a QoS feature. For example, the QoS feature indicates at least one of the resource type, the packet delay budget, the priority level, the packet error rate, the averaging window, and the maximum data burst volume.

Optionally, the horizontal accuracy may be understood as a horizontal error corresponding to an absolute location, or a horizontal error in a distance corresponding to a relative location, and for example, may be represented in a unit of "meter". The vertical accuracy may be understood as an absolute height or depth, or a relative height or depth relative to the ground. Positioning accuracy, for example, the horizontal accuracy and the vertical accuracy, may alternatively be represented in a form of a percentage, for example, a difference between location information of a target UE obtained through positioning and actual location information of the target UE. The response time may include "no delay (no delay), low delay (low delay), or delay tolerant (delay tolerant)", to meet different requirements of different positioning services on the delay. The LCS quality of service class may be understood as a degree of compliance of an LCS with a quality of service parameter (for example, accuracy and response time). For example, the LCS quality of service class may be a non-negotiable QoS parameter, or the LCS quality of service class may include "assured (assured), best effort (best effort), or multiple QoS class (multiple QoS class)", which respectively correspond to a strictest requirement, a least strict requirement, and a medium strict requirement for QoS implemented for a positioning request. For example, if the LCS quality of service class is "assured", the LCS should strictly follow the QoS parameter. If an obtained location estimation (location estimation) does not meet another QoS requirement, the location estimation should be discarded and an appropriate error cause should be sent. For another example, if the LCS quality of service class is "best effort", the LCS does not need to strictly follow the QoS parameter. If an obtained location estimation does not meet another QoS requirement, the location estimation should still be returned and QoS that does not meet a request should be appropriately indicated. If no location estimation is obtained, an appropriate error cause is sent. For another example, if the LCS quality of service class is "multiple QoS class", a possible case includes: If an obtained location estimate does not meet another strictest (that is, primary) QoS requirement affected by the degree of compliance with the QoS class, an LMF triggers another location estimate to try to meet another less strict QoS requirement. This process may be iterative until another least strict (that is, minimum) QoS requirement is tried. If a location estimate cannot meet the another least strict QoS requirement, the location estimate should be discarded and an appropriate error cause should be sent. The minor LCS quality of service class may correspond to QoS requirements corresponding to a plurality of classes in multiple QoS class.

Optionally, the PQI may indicate a PC5 QoS feature, and the PC5 QoS feature is, for example, a parameter used to control QoS forwarding processing of a data packet on PC5. The flow bit rate may include a GFBR, and may also include an MFBR, where the GFBR and the MFBR may be used for bit rate control of a PC5 reference point in an averaging time window. The link aggregated bit rate is related to a maximum aggregated bit rate of a PC5 link, the maximum aggregated bit rate of the PC5 link limits an aggregated bit rate expected to be provided on a PC5 unicast link with a peer UE between all non-guaranteed bit rate (guaranteed bit rate, GBR) QoS flows. The range may be understood as applicability of a PC5 QoS parameter in PC5 communication. That is, when a receiving UE and a sending UE are not within a distance specified by the range, communication is best effort. Optionally, a value of the range may be in a unit of "meter". The default value may be understood as follows: The default value is used when an upper layer does not provide a corresponding PC5 QoS parameter. The resource type may be understood as being used to determine whether a dedicated network resource related to a QoS flow level GFBR value is permanently allocated. The resource type may include GBR, delay critical guaranteed bit rate (delay critical GBR), and non-GBR. The packet delay budget may be understood as a packet delay budget associated with the PQI. The priority level may be understood as a proximity-based service (proximity-based services, ProSe) per-packet priority (prose per-packet priority, PPPP), or may indicate a priority of a scheduling resource between QoS flows, and a lowest value of the priority level corresponds to a highest priority. The packet error rate may be understood as an upper limit of a rate of a data packet (for example, an internet protocol (internet protocol, IP) packet) that has been processed by a transmitter of a link layer protocol (for example, an RLC layer) but has not been successfully delivered by a corresponding receiver to an upper layer (for example, a packet data convergence protocol (packet data convergence protocol, PDCP) layer). The averaging window may be understood as an averaging window associated with each GBR QoS flow, and the averaging window may further represent duration for calculating the GFBR and the MFBR. The maximum data burst volume may represent a maximum data volume to be served by a 5G access network in a PDB period of the 5G access network.

The first information may indicate the requirement of the positioning service. The following separately describes a process in which the first network device obtains or determines a corresponding parameter based on different content included in the first information when the first information indicates the requirement of the positioning service by using the different content.
(1) The first information includes the first parameter corresponding to the location quality of service of the UE, and/or the first index corresponding to the location quality of service of the UE.

It is assumed that a protocol defines the first parameter corresponding to the location quality of service of the UE and the first index corresponding to the location quality of service of the UE (including an index of the location quality of service of the UE or an index of the first parameter corresponding to the location quality of service of the UE). The first parameter corresponding to the location quality of service of the UE may further include a value of the first parameter. Optionally, the definition in the protocol may also be understood as a standardized first parameter corresponding to the location quality of service of the UE and a standardized first index corresponding to the location quality of service of the UE. Table 1 is used as an example. The index of the first parameter corresponding to the location quality of service of the UE may be referred to as an index of the first parameter for short. However, it should be understood that the following Table 1 is merely an example for description, and should not constitute a special limitation on this application.

**Table 1**

| Index of the location quality of service of the UE | Index of the first parameter | Horizontal accuracy (m) | Vertical accuracy (m) | Response time | LCS quality of service class |
|---|---|---|---|---|---|
| 001 | 01 | 5 | 5 | NO_DELAY | ASSURED |
| 002 | 02 | 8 | 8 | LOW_DELAY | MULTIPLE_QOS |
| 003 | 03 | 10 | 10 | DELAY_TOLERANT | BEST_EFFORT |
| 004 | 04 | 15 | 10 | LOW_DELAY | BEST_EFFORT |
| 005 | 05 | 20 | 10 | DELAY_TOLERANT | BEST_EFFORT |
| 006 | 06 | 25 | 15 | DELAY_TOLERANT | BEST_EFFORT |
| ... | ... | ... | | ... | ... |

As shown in Table 1, if the requirement of the positioning service 1 includes that horizontal accuracy is 5 m, vertical accuracy is 5 m, response time is NO_DELAY, and an LCS quality of service class is ASSURED, an index corresponding to the set of first parameters is "01". Therefore, the first information received by the first network device may include the index "01" of the first parameter. After receiving the first information, the first network device may determine the requirement of the positioning service 1 based on the index "01" of the first parameter included in the first information. Alternatively, the first information received by the first network device may include an index "001" of the location quality of service of the UE. Similarly, after receiving the first information, the first network device may determine the requirement of the positioning service 1 based on the index "001" of the location quality of service of the UE included in the first information.

If the requirement of the positioning service 3 includes that horizontal accuracy is 8 m, vertical accuracy is 8 m, response time is LOW_DELAY, and an LCS quality of service class is MULTIPLE_QOS, an index corresponding to the set of first parameters is "02". Therefore, the first information received by the first network device may include the index "02" of the first parameter. After receiving the first information, the first network device may determine the requirement of the positioning service 3 based on the index "02" of the first parameter included in the first information. Alternatively, the first information received by the first network device may include an index "002" of the location quality of service of the UE. Similarly, after receiving the first information, the first network device may determine the requirement of the positioning service 3 based on the index "002" of the location quality of service of the UE included in the first information. Optionally, the LCS quality of service class corresponding to the positioning service 3 is MULTIPLE _QOS, and MULTIPLE_QOS may be understood as multiple QoS class. In this case, the first parameter of the positioning service 3 that is corresponding to the location quality of service of the UE and that is included in the first information may further include a minor LCS quality of service class. The minor LCS quality of service class may indicate QoS requirements at a plurality of classes, and the QoS requirements at the plurality of classes correspond to the foregoing positioning request with the medium strict requirement.

It is assumed that the protocol defines the first parameter corresponding to the location quality of service of the UE, and the first parameter may further include a value of each parameter. In this case, the first information may indicate a value of the first parameter. The value of the parameter may be specified in the protocol, or may not be specified in the protocol. This is not limited. For example, the value of the parameter is specified in the protocol. As shown in Table 1, similar to the positioning service 1 in the foregoing example, if a current positioning service is the positioning service 1, the first information should indicate the first parameter and the value of the first parameter: Horizontal accuracy is 5 m, vertical accuracy is 5 m, response time is NO_DELAY, and an LCS quality of service class is ASSURED.

It is assumed that the protocol does not define the first parameter corresponding to the location quality of service of the UE and the first index corresponding to the location quality of service of the UE, or the first parameter corresponding to the location quality of service of the UE and the first index corresponding to the location quality of service of the UE that are defined in the protocol are not used. In this case, the first information may indicate the value of the first parameter. For example, the value of the first parameter corresponds to the current positioning service, and is determined based on the current positioning service. For example, the first information indicates the first parameter and the value of the first parameter: Horizontal accuracy is 1 m, vertical accuracy is 3 m, response time is LOW_DELAY, and an LCS quality of service class is ASSURED.

Optionally, Table 1 shows the index of the location quality of service of the UE and the index of the first parameter. In some possible implementations, columns shown in Table 1 include but are not limited to those shown in the table. For example, the index of the location quality of service of the UE and a corresponding parameter (including all parameters or some parameters) may be shown, or the index of the first parameter and a corresponding parameter (including all parameters or some parameters) may be shown. This is not limited.

(2) The first information includes the second parameter corresponding to the quality of service of transmitting the positioning data by the UE, and/or the second index corresponding to the quality of service of transmitting the positioning data by the UE.

It is assumed that a protocol defines the second parameter corresponding to the quality of service of transmitting the positioning data by the UE and the second index corresponding to the quality of service of transmitting the positioning data by the UE (including an index of the quality of service of transmitting the positioning data by the UE or an index of the second parameter corresponding to the quality of service of transmitting the positioning data by the UE). The second parameter corresponding to the quality of service of transmitting the positioning data by the UE may further include a value of the second parameter. Optionally, the definition in the protocol may also be understood as a standardized second parameter corresponding to the quality of service of transmitting the positioning data by the UE and a standardized second index corresponding to the quality of service of transmitting the positioning data by the UE. Table 2 is used as an example. The index of the second parameter corresponding to the quality of service of transmitting the positioning data by the UE may be referred to as an index of the second parameter below for short. However, it should be understood that the following Table 2 is merely an example for description, and should not constitute a special limitation on this application.

**Table 2**

| Index of the quality of service of transmitting the positioning data by the UE | 001 | 002 | 003 | 004 | 005 | 006 |
|---|---|---|---|---|---|---|
| Index of the second parameter | 01 | 02 | 03 | 04 | 05 | 06 |
| PQI | 21 | 22 | 23 | 55 | 56 | 57 |
| GFBR (Kbit/s) | 200000000 | 100000000 | 20000000 | 2000000 | 2000000 | 2000000 |
| MFBR (Kbit/s) | 400000000 | 400000000 | 40000000 | 4000000 | 4000000 | 3000000 |
| Range (m) | 1 | 100 | 100 | 500 | 600 | 1000 |
| Resource type | GBR | GBR | GBR | Non-GBR | Non-GBR | Non-GBR |
| PDB (ms) | 20 | 50 | 100 | 10 | 20 | 25 |
| Priority level | 3 | 4 | 3 | 3 | 6 | 5 |
| Packet error rate | 10⁻⁴ | 10⁻² | 10⁻⁴ | 10⁻⁴ | 10⁻¹ | 10⁻¹ |
| Averaging window (ms) | 2000 | 2000 | 2000 | 18 | 200 | 2500 |
| Maximum data burst volume (byte byte) | 400 | 600 | 800 | 1000 | 1200 | 1400 |

As shown in Table 2, if the requirement of the positioning service 1 includes that a PQI is 21, a GFBR is 200000000 Kbit/s, an MFBR is 400000000 Kbit/s, a range is 1 m, a resource type is GBR, a PDB is 20 ms, a priority level is 3, a packet error rate is 10⁻⁴, an averaging window is 2000 ms, and a maximum data burst volume is 400 bytes, an index corresponding to the set of second parameters is "01". Therefore, the first information received by the first network device may include the index "01" of the second parameter. After receiving the first information, the first network device may determine the requirement of the positioning service 1 based on the index "01" of the second parameter included in the first information. Alternatively, the first information received by the first network device may include an index "001" of the quality of service of transmitting the positioning data by the UE. Similarly, after receiving the first information, the first network device may determine the requirement of the positioning service 1 based on the index "001" of the quality of service of transmitting the positioning data by the UE that is included in the first information.

If the requirement of the positioning service 2 includes that a PQI is 23, a GFBR is 200000000 Kbit/s, an MFBR is 400000000 Kbit/s, a range is 100 m, a resource type is GBR, a PDB is 100 ms, a priority level is 3, a packet error rate is 10⁻⁴, an averaging window is 2000 ms, and a maximum data burst volume is 800 bytes, an index corresponding to the set of second parameters is "03". Therefore, the first information received by the first network device may include the index "03" of the second parameter. After receiving the first information, the first network device may determine the requirement of the positioning service 2 based on the index "03" of the second parameter included in the first information. Alternatively, the first information received by the first network device may include an index "003" of the quality of service of transmitting the positioning data by the UE. Similarly, after receiving the first information, the first network device may determine the requirement of the positioning service 2 based on the index "003" of the quality of service of transmitting the positioning data by the UE that is included in the first information.

It is assumed that the protocol defines the second parameter corresponding to the quality of service of transmitting the positioning data by the UE, and the second parameter may further include a value of each parameter. In this case, the second information may indicate a value of the second parameter. The value of the parameter may be specified in the protocol, or may not be specified in the protocol. This is not limited. For example, the value of the parameter is specified in the protocol. As shown in Table 2, similar to the positioning service 1 in the foregoing example, if a current positioning service is the positioning service 1, the first information should indicate the second parameter and the value of the second parameter: A PQI is 21, a GFBR is 200000000 Kbit/s, an MFBR is 400000000 Kbit/s, a range is 1 m, a resource type is GBR, a PDB is 20 ms, a priority level is 3, a packet error rate is 10⁻⁴, an averaging window is 2000 ms, and a maximum data burst volume is 400 bytes.

It is assumed that the protocol does not define the second parameter corresponding to the quality of service of transmitting the positioning data by the UE and the second index corresponding to the quality of service of transmitting the positioning data by the UE, or the second parameter corresponding to the quality of service of transmitting the positioning data by the UE and the second index corresponding to the quality of service of transmitting the positioning data by the UE that are defined in the protocol are not used. In this case, the first information may indicate the value of the second parameter. For example, the value of the second parameter corresponds to the current positioning service, and is determined based on the current positioning service. For example, the first information indicates the second parameter and the value of the second parameter: A PQI is 45, a GFBR is 100000000 Kbit/s, an MFBR is 200000000 Kbit/s, a range is 10 m, a resource type is GBR, a PDB is 10 ms, a priority level is 2, a packet error rate is 10⁻⁴, an averaging window is 1000 ms, and a maximum data burst volume is 200 bytes.

It should be noted that, Table 2 shows the index of the quality of service of transmitting the positioning data by the UE and the index of the second parameter. In some possible implementations, columns shown in Table 2 include but are not limited to those shown in the table. For example, the index of the quality of service of transmitting the positioning data by the UE and a corresponding parameter (including all parameters or some parameters) may be shown, or the index of the second parameter and a corresponding parameter (including all parameters or some parameters) may be shown. This is not limited.

(3) The first information includes the first parameter corresponding to the location quality of service of the UE and/or the first index corresponding to the location quality of service of the UE, and the second parameter corresponding to the quality of service of transmitting the positioning data by the UE and/or the second index corresponding to the quality of service of transmitting the positioning data by the UE.

In this case, the requirement of the positioning service may be determined based on Table 1 and Table 2. For a specific process, refer to the foregoing (1) and (2), and details are not described again.

In embodiments of this application, after receiving the first information, the first network device may send the second information related to the first information to the UE, so that the UE may send the SL-PRS and/or the SLPP signaling based on the received SL-PRS priority and/or SLPP signaling priority.

### Case 1: Determining of the SL-PRS priority

The first network device may determine the SL-PRS priority based on the following rules, for example, higher positioning accuracy (including horizontal accuracy and/or vertical accuracy) indicates a higher SL-PRS priority, a higher requirement for response time indicates a higher SL-PRS priority, and a stricter LCS quality of service class and/or a stricter minor LCS quality of service class indicate/indicates a higher SL-PRS priority.

For example, if the UE includes a plurality of positioning services (for example, a positioning service 1, a positioning service 2, and a positioning service 3), and the first information is sent by the UE to the first network device, the UE may send first information corresponding to different positioning services to the first network device based on the plurality of positioning services. For example, first information 1 corresponds to the positioning service 1, first information 2 corresponds to the positioning service 2, and first information 3 corresponds to the positioning service 3. Alternatively, the first information includes information corresponding to the plurality of positioning services. For example, the first information includes information about the positioning service 1, information about the positioning service 2, and information about the positioning service 3. This is not limited.

After receiving the first information, the first network device may determine the SL-PRS priority based on the first parameter included in the first information. For example, it is assumed that for the positioning service 1, horizontal accuracy is 5 m, vertical accuracy is 5 m, response time is NO DELAY, and a quality of service class is ASSURED; for the positioning service 2, horizontal accuracy is 10 m, vertical accuracy is 10 m, response time is DELAY_TOLERANT, and a quality of service class is BEST_EFFORT; and for the positioning service 3, horizontal accuracy is 8 m, vertical accuracy is 8 m, response time is LOW DELAY, and a quality of service class is MULTIPLE_QOS.

The first network device may determine the SL-PRS priority based on the "positioning accuracy". The positioning accuracy of the positioning service 1 is less than the positioning accuracy of the positioning service 3, and the positioning accuracy of the positioning service 3 is less than the positioning accuracy of the positioning service 2, that is, the positioning accuracy of the positioning service 1 is higher than the positioning accuracy of the positioning service 3, and the positioning accuracy of the positioning service 3 is higher than the positioning accuracy of the positioning service 2. Therefore, in this case, an SL-PRS priority corresponding to the positioning service 1 is higher than an SL-PRS priority corresponding to the positioning service 3, and the SL-PRS priority corresponding to the positioning service 3 is higher than an SL-PRS priority corresponding to the positioning service 2.

The first network device may determine the SL-PRS priority based on the "response time". A response time requirement of the positioning service 1 is higher than a response time requirement of the positioning service 3, and the response time requirement of the positioning service 3 is higher than a response time requirement of the positioning service 2, that is, the response time requirement of the positioning service 1 is shorter than the response time requirement of the positioning service 3, and the response time requirement of the positioning service 3 is shorter than the response time requirement of the positioning service 2. Therefore, in this case, an SL-PRS priority corresponding to the positioning service 1 is higher than an SL-PRS priority corresponding to the positioning service 3, and the SL-PRS priority corresponding to the positioning service 3 is higher than an SL-PRS priority corresponding to the positioning service 2.

The first network device may determine the SL-PRS priority based on the "LCS quality of service class". An LCS quality of service class requirement of the positioning service 1 is higher than an LCS quality of service class requirement of the positioning service 3, and the LCS quality of service class requirement of the positioning service 3 is higher than an LCS quality of service class requirement of the positioning service 2, that is, LCS quality of service of the positioning service 1 is higher than LCS quality of service of the positioning service 3, and the LCS quality of service of the positioning service 3 is higher than LCS quality of service of the positioning service 2. Therefore, in this case, an SL-PRS priority corresponding to the positioning service 1 is higher than an SL-PRS priority corresponding to the positioning service 3, and the SL-PRS priority corresponding to the positioning service 3 is higher than an SL-PRS priority corresponding to the positioning service 2.

Similarly, the first network device may alternatively determine the SL-PRS priority based on another parameter. Details are not described.

Optionally, in some possible implementations, the first network device may alternatively comprehensively consider a plurality of parameters to determine the SL-PRS priority. For example, the first network device may jointly determine the SL-PRS priority based on a plurality of parameters in horizontal accuracy, vertical accuracy, response time, an LCS quality of service class, and a minor LCS quality of service class. When SL-PRS priorities determined by the first network device based on the plurality of parameters are the same, the first network device may send the second information including the SL-PRS priority to the UE; or when SL-PRS priorities determined by the first network device based on the plurality of parameters are different, the first network device may determine the SL-PRS priority based on a priority with a larger priority quantity in the determined SL-PRS priorities.

For example, if the first network device determines, based on all of the "positioning accuracy", the "response time", the "LCS quality of service class", and the "minor LCS quality of service class", that the SL-PRS priority corresponding to the positioning service 1 is higher than the SL-PRS priority corresponding to the positioning service 3, and the SL-PRS priority corresponding to the positioning service 3 is higher than the SL-PRS priority corresponding to the positioning service 2, the first network device may determine that the SL-PRS priority corresponding to the positioning service 1 is higher than the SL-PRS priority corresponding to the positioning service 3, and the SL-PRS priority corresponding to the positioning service 3 is higher than the SL-PRS priority corresponding to the positioning service 2.

For another example, the first network device determines, based on the "positioning accuracy", the "LCS quality of service class", and the "minor LCS quality of service class", that the SL-PRS priority corresponding to the positioning service 1 is higher than the SL-PRS priority corresponding to the positioning service 3, and the SL-PRS priority corresponding to the positioning service 3 is higher than the SL-PRS priority corresponding to the positioning service 2, and determines, based on the "response time", that the SL-PRS priority corresponding to the positioning service 2 is higher than the SL-PRS priority corresponding to the positioning service 3, and the SL-PRS priority corresponding to the positioning service 3 is higher than the SL-PRS priority corresponding to the positioning service 1. Because the priority sequence that the SL-PRS priority corresponding to the positioning service 1 is higher than the SL-PRS priority corresponding to the positioning service 3 and the SL-PRS priority corresponding to the positioning service 3 is higher than the SL-PRS priority corresponding to the positioning service 2 is determined based on three parameters, and the priority sequence that the SL-PRS priority corresponding to the positioning service 2 is higher than the SL-PRS priority corresponding to the positioning service 3 and the SL-PRS priority corresponding to the positioning service 3 is higher than the SL-PRS priority corresponding to the positioning service 1 is determined based on one parameter, the first network device may determine that the SL-PRS priority corresponding to the positioning service 1 is higher than the SL-PRS priority corresponding to the positioning service 3, and the SL-PRS priority corresponding to the positioning service 3 is higher than the SL-PRS priority corresponding to the positioning service 2.

Optionally, when SL-PRS priorities determined by the first network device based on different parameters are different, the first network device may alternatively send second information including an SL-PRS priority determined based on one of the parameters to the UE. For example, the parameter may be any one of the "positioning accuracy", the "response time", the "LCS quality of service class", and the "minor LCS quality of service class".

### Case 2: Determining of the SLPP signaling priority

The first network device may determine the SLPP signaling priority based on the following rules, for example, a smaller PDB indicates a higher SLPP signaling priority, a smaller packet error rate indicates a higher SLPP signaling priority, a smaller maximum data burst volume indicates a higher SLPP signaling priority, and a higher priority level indicates a higher SLPP signaling priority.

For example, still in the example in which the UE includes a plurality of positioning services (for example, a positioning service 1, a positioning service 2, and a positioning service 3), if the first information is sent by the UE to the first network device, the UE may send first information corresponding to different positioning services to the first network device based on the plurality of positioning services. For example, first information 1 corresponds to the positioning service 1, first information 2 corresponds to the positioning service 2, and first information 3 corresponds to the positioning service 3. Alternatively, the first information includes information corresponding to the plurality of positioning services. For example, the first information includes information about the positioning service 1, information about the positioning service 2, and information about the positioning service 3. This is not limited.

After receiving the first information, the first network device may determine the SLPP signaling priority based on the second parameter included in the first information. For example, it is assumed that for the positioning service 1, a PQI is 21, a GFBR is 200000000 Kbit/s, an MFBR is 400000000 Kbit/s, a range is 1 m, a resource type is GBR, a PDB is 20 ms, a priority level is 3, a packet error rate is 10⁻⁴, an averaging window is 2000, and a maximum data burst volume is 400; for the positioning service 2, a PQI is 23, a GFBR is 200000000 Kbit/s, an MFBR is 400000000 Kbit/s, a range is 100 m, a resource type is GBR, a PDB is 100 ms, a priority level is 3, a packet error rate is 10⁻⁴, an averaging window is 2000, and a maximum data burst volume is 800; and for the positioning service 3, a PQI is 22, a GFBR is 100000000 Kbit/s, an MFBR is 400000000 Kbit/s, a range is 100 m, a resource type is GBR, a PDB is 50 ms, a priority level is 4, a packet error rate is 10⁻², an averaging window is 2000, and a maximum data burst volume is 600.

The first network device may determine the SLPP signaling priority based on the "PDB". As described above, a smaller PDB indicates a higher priority, and a larger PDB indicates a lower priority. The PDB of the positioning service 1 is smaller than the PDB of the positioning service 3, and the PDB of the positioning service 3 is smaller than the PDB of the positioning service 2. Therefore, in this case, an SLPP signaling priority corresponding to the positioning service 1 is higher than an SLPP signaling priority corresponding to the positioning service 3, and the SLPP signaling priority corresponding to the positioning service 3 is higher than an SLPP signaling priority corresponding to the positioning service 2.

The first network device may determine the SLPP signaling priority based on the "packet error rate". As described above, a smaller packet error rate indicates a higher priority, and a larger packet error rate indicates a lower priority. The packet error rate of the positioning service 1 is less than the packet error rate of the positioning service 3, and the packet error rate of the positioning service 1 is equal to the packet error rate of the positioning service 2. Therefore, in this case, SLPP signaling priorities corresponding to the positioning service 1 and the positioning service 2 should be higher than an SLPP signaling priority corresponding to the positioning service 3. Optionally, the first network device may further determine, with reference to another parameter, priorities of the positioning service 1 and the positioning service 2.

The first network device may determine the SLPP signaling priority based on the "priority level". As described above, a higher priority level indicates a higher priority, and a lower priority level indicates a lower priority. The priority level of the positioning service 1 is higher than the priority level of the positioning service 3, and the priority level of the positioning service 1 is equal to the priority level of the positioning service 2. Therefore, SLPP signaling priorities corresponding to the positioning service 1 and the positioning service 2 should be higher than an SLPP signaling priority corresponding to the positioning service 3. Optionally, the first network device may further determine, with reference to another parameter, priorities of the positioning service 1 and the positioning service 2.

The first network device may determine the SLPP signaling priority based on the "maximum data burst volume". As described above, a smaller maximum data burst volume indicates a higher priority, and a larger maximum data burst volume indicates a lower priority. The maximum data burst volume of the positioning service 1 is smaller than the maximum data burst volume of the positioning service 3, and the maximum data burst volume of the positioning service 3 is smaller than the maximum data burst volume of the positioning service 2. Therefore, an SLPP signaling priority corresponding to the positioning service 1 is higher than an SLPP signaling priority corresponding to the positioning service 3, and the SLPP signaling priority corresponding to the positioning service 3 is higher than an SLPP signaling priority corresponding to the positioning service 2.

Similarly, the first network device may alternatively determine the SLPP signaling priority based on another parameter. Details are not described.

Optionally, in some possible implementations, the first network device may comprehensively consider a plurality of parameters to determine the SL-PRS priority. For example, the first network device may jointly determine the SLPP signaling priority based on a plurality of parameters in the PDB, the priority level, the packet error rate, the averaging window, the maximum data burst volume, and the like. When SLPP signaling priorities determined by the first network device based on the plurality of parameters are the same, the first network device may send the second information including the SLPP signaling priority to the UE; or when SLPP signaling priorities determined by the first network device based on the plurality of parameters are different, the first network device may determine the SLPP signaling priority based on a priority with a larger priority quantity in the determined SLPP signaling priorities.

For example, if the first network device determines, based on all of parameters such as the "PDB", the "priority level", the "packet error rate", the "averaging window", and the "maximum data burst volume", that the SLPP signaling priority corresponding to the positioning service 1 is higher than the SLPP signaling priority corresponding to the positioning service 3, and the SLPP signaling priority corresponding to the positioning service 3 is higher than the SLPP signaling priority corresponding to the positioning service 2, the first network device may determine that the SLPP signaling priority corresponding to the positioning service 1 is higher than the SLPP signaling priority corresponding to the positioning service 3, and the SLPP signaling priority corresponding to the positioning service 3 is higher than the SLPP signaling priority corresponding to the positioning service 2.

For another example, the first network device determines, based on parameters such as the "PDB", the "priority level", the "packet error rate", and the "averaging window", that the SLPP signaling priority corresponding to the positioning service 1 is higher than the SLPP signaling priority corresponding to the positioning service 3, and the SLPP signaling priority corresponding to the positioning service 3 is higher than the SLPP signaling priority corresponding to the positioning service 2, and determines, based on the "maximum data burst volume", that the SLPP signaling priority corresponding to the positioning service 2 is higher than the SLPP signaling priority corresponding to the positioning service 3, and the SLPP signaling priority corresponding to the positioning service 3 is higher than the SLPP signaling priority corresponding to the positioning service 1. Because the priority sequence that the SLPP signaling priority corresponding to the positioning service 1 is higher than the SLPP signaling priority corresponding to the positioning service 3 and the SLPP signaling priority corresponding to the positioning service 3 is higher than the SLPP signaling priority corresponding to the positioning service 2 is determined based on four parameters, and the priority sequence that the SLPP signaling priority corresponding to the positioning service 2 is higher than the SLPP signaling priority corresponding to the positioning service 3 and the SLPP signaling priority corresponding to the positioning service 3 is higher than the SLPP signaling priority corresponding to the positioning service 1 is determined based on one parameter, the first network device may determine that the SLPP signaling priority corresponding to the positioning service 1 is higher than the SLPP signaling priority corresponding to the positioning service 3, and the SLPP signaling priority corresponding to the positioning service 3 is higher than the SLPP signaling priority corresponding to the positioning service 2.

Optionally, when SLPP signaling priorities determined by the first network device based on different parameters are different, the first network device may send second information including an SLPP signaling priority determined based on one of the parameters to the UE. For example, the parameter may be any one of the "PQI", the "GFBR", the "MFBR", the "range", the "resource type", the "PDB", the "priority level", the "packet error rate", the "averaging window", and the "maximum data burst volume".

In addition, in some possible implementations, the first network device may determine the SL-PRS priority based on the second parameter. For example, a smaller PDB indicates a higher SL-PRS priority, a smaller packet error rate indicates a higher SL-PRS priority, a smaller maximum data burst volume indicates a higher SL-PRS priority, and a higher priority level indicates a higher SL-PRS priority. The first network device may alternatively determine the SLPP signaling priority based on the first parameter. For example, higher positioning accuracy (including horizontal accuracy and/or vertical accuracy) indicates a higher SLPP signaling priority, a higher response time requirement indicates a higher SLPP signaling priority, and a stricter LCS quality of service class and/or a stricter minor LCS quality of service class indicate/indicates a higher SLPP signaling priority. This is not limited.

In the solution provided in embodiments of this application, the first information may include at least one of the following: the first parameter corresponding to the location quality of service of the UE, the first index corresponding to the location quality of service of the UE, the second parameter corresponding to the quality of service of transmitting the positioning data by the UE, and the second index corresponding to the quality of service of transmitting the positioning data by the UE. The first information includes different content, and the first network device may flexibly send the second information to the UE based on the content included in the first information, so that accuracy of the second information sent by the first network device can be improved.

Optionally, in some embodiments, the first information carries indication information, and the indication information indicates a request for configuring an SL-PRS priority and/or an SLPP signaling priority.

The first information in embodiments of this application may carry the indication information used to request to configure the SL-PRS priority and/or the SLPP signaling priority. The indication information may explicitly indicate a request for configuring the SL-PRS priority, or explicitly indicate a request for configuring the SLPP signaling priority, or explicitly indicate a request for configuring the SL-PRS priority and the SLPP signaling priority. Alternatively, the first information does not carry indication information, but the first information implicitly indicates a request for configuring the SL-PRS priority and/or the SLPP signaling priority. After receiving the first information, the first network device may configure the SL-PRS priority and/or the SLPP signaling priority for the UE based on the first information. This can improve efficiency of configuring the SL-PRS priority and/or the SLPP signaling priority for the UE by the first network device.

Optionally, in some embodiments, sending the first information includes:
The UE, the second network device, or the third network device sends the first information.

Correspondingly, receiving the first information includes:
receiving the first information sent by the UE, the second network device, or the third network device.

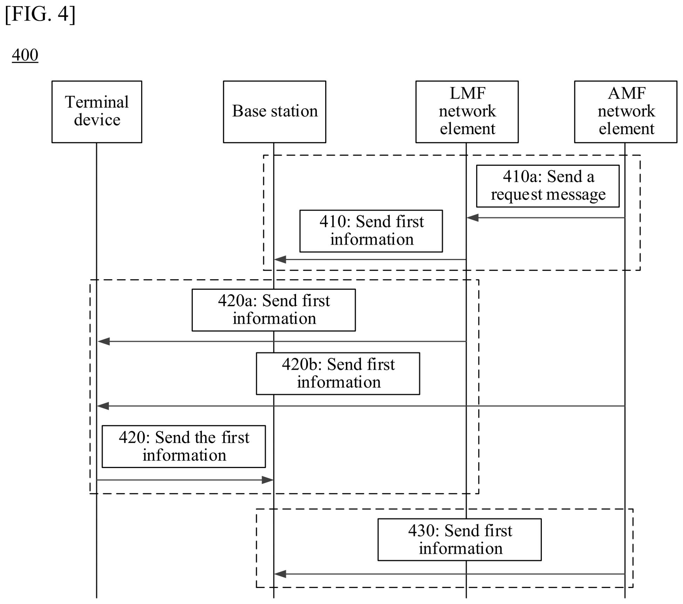

In embodiments of this application, the second network device may be an LMF network element, the third network device may be an AMF network element, and the first network device may receive first information from different devices, such as the UE, the LMF network element, and the AMF network element. With reference to FIG. 4, the following describes a process in which the first network device receives the first information from different devices.

### Manner 1:

The first network device may obtain the first information from the LMF network element, as shown in step 410 in FIG. 4. Specifically, the LMF network element may send a first message to the first network device. For example, the first message may be a new radio positioning protocol a (new radio positioning protocol a, NRPPa) message. For example, the NRPPa message includes a transmission reception point information request (transmission reception point information request) message or a positioning information request (positioning information request) message. The first message may include the first information, the first information indicates the requirement of the positioning service of the UE, and the requirement of the positioning service of the UE includes at least one of the following: the location quality of service of the UE and the quality of service of transmitting the positioning data by the UE.

### Manner 2:

The first network device may obtain the first information from the UE. Specifically, the UE may send a second message to the first network device. For example, the second message may be an RRC message. For example, the RRC message includes a sidelink UE information (sidelink UE information) message. The second message may include the first information, the first information indicates the requirement of the positioning service of the UE, and the requirement of the positioning service of the UE includes at least one of the following: the location quality of service of the UE and the quality of service of transmitting the positioning data by the UE.

If the current positioning service is not actively initiated by the UE, for example, the current positioning service corresponds to a mobile terminated-location request (mobile terminated-location request, MT-LR) or a network induced-location request (network induced-location request, NI-LR), the UE does not know a specific requirement of current positioning. Therefore, before the UE sends the second message to the first network device, the UE may obtain the first information from another network element. For example, the LMF network element or the AMF network element may send the first information to the UE, and the UE may obtain the first information from the LMF network element or the AMF network element. After obtaining the first information, the UE may send the second message including the first information to the first network device, for example, steps 420a and 420 in FIG. 4, or steps 420b and 420 in FIG. 4.

If the current positioning service is actively initiated by the UE, for example, the current positioning service corresponds to a mobile originated location request (mobile originated location request, MO-LR), in this case, the UE knows a positioning requirement of the UE. Therefore, the UE may directly report the first information to the first network device, for example, may send the second message including the first information to the first network device, as shown in step 420 in FIG. 4.

### Manner 3:

The first network device may obtain the first information from the AMF network element, as shown in step 430 in FIG. 4. Specifically, the AMF network element may send a third message to the first network device. For example, the third message may be an NG interface message. For example, the NG interface message is a UE context modification request (UE context modification request) message. The third message may include the first information, the first information indicates the requirement of the positioning service of the UE, and the requirement of the positioning service of the UE includes at least one of the following: the location quality of service of the UE and the quality of service of transmitting the positioning data by the UE.

In the foregoing three manners, the UE may be a target UE, or may be a UE (for example, an anchor UE, a reference UE, or an assistant UE) that assists in positioning the target UE. This is not limited.

In the foregoing three manners, in some possible implementations, the first information may further include other positioning information, for example, a recommended SL-PRS priority and/or SLPP signaling priority, and a used positioning method. This is not limited. In this case, the second information sent by the first network device to the UE may be related to the recommended SL-PRS priority and/or SLPP signaling priority and the used positioning method included in the first information, thereby further ensuring the requirement of the positioning service.

In the solution provided in embodiments of this application, the first network device may receive first information sent by different devices. For example, the first network device may receive first information sent by the UE, the LMF network element, and the AMF network element. This helps the first network device send the second information related to the first information to the UE. In this way, the UE can select or allocate a resource based on the priority of the positioning service of the UE that is indicated by the second information, and send an SL-PRS and/or SLPP signaling on the resource. This can avoid a resource preemption conflict problem that occurs when the UE autonomously allocates a resource.

Manner 1 describes that the LMF network element may send the first information to the first network device. In some possible embodiments, the LMF network element may further receive a message from another network element, so as to send the first information to the first network device based on the message. For details, refer to the following.

Optionally, in some embodiments, the method is applied to the third network device, and the method includes:
determining to initiate a positioning service; and
sending a request message to a second network device based on the positioning service, where the request message is used to request to position UE.

Correspondingly, for the second network device, the method includes:
receiving the request message sent by the third network device, where the request message is used to request to position the UE; and
sending first information based on the request message, where the first information indicates a requirement of a positioning service of the UE, and the requirement of the positioning service of the UE includes at least one of the following: location quality of service of the UE and quality of service of transmitting positioning data by the UE.

The second network device in embodiments of this application may be an LMF network element, and the third network device may be an AMF network element. The LMF network element may send the first information based on the request message. The first information may be determined by the LMF network element based on the request message, or may be obtained from another message. For example, the another message may be a request message, and the request message includes the first information. This is not limited.

In embodiments of this application, the LMF network element may send the first information based on the request message. Before this, the AMF network element may send the request message to the LMF network element, as shown in step 410a in FIG. 4.

In embodiments of this application, the positioning service may be initiated by the AMF network element. For example, the AMF network element may determine, based on any one of positioning initiation manners of MO-LR, MT-LR, and NI-LR, to initiate positioning, and the AMF network element sends, to the LMF network element, a request message used to request to position the UE. After receiving the request message, the LMF network element may send the first information based on the request message, to provide the first information for the first network device. This helps the first network device send second information related to the first information to the UE.

In some possible implementations, the positioning service may alternatively be initiated by the LMF network element. For example, the LMF network element may determine, based on a deferred MT-LR (deferred MT-LR) positioning manner, to initiate positioning. This is not limited.

The MO-LR may be understood as follows: The UE requests a location service from a serving AMF of the UE, for example, due to positioning or assistance information transfer. The MT-LR may be understood as follows: An LCS requests a serving AMF of a target UE to position the target UE. The NI-LR may be understood as follows: The AMF determines to position a target UE. For example, the UE needs to be positioned due to an emergency call.

Optionally, in some embodiments, sending the first information based on the request message includes:
sending the first information to a first network device or the UE based on the request message.

In embodiments of this application, the second network device (for example, the LMF network element) may send the first information to the first network device or the UE based on the request message. If the second network device sends the first information to the UE, the UE may send the first information to the first network device (corresponding to Manner 2). If the second network device sends the first information to the first network device, the first network device may directly obtain the first information from the second network device (corresponding to Manner 1).

Manner 3 describes that the AMF network element may send the first information to the first network device. In some possible implementations, the AMF network element may send the first information based on a positioning service. For details, refer to the following.

Optionally, in some embodiments, the method is applied to the third network device, and the method includes:
determining to initiate a positioning service; and
sending first information based on the positioning service, where the first information indicates a requirement of the positioning service of a UE, and the requirement of the positioning service of the UE includes at least one of the following: location quality of service of the UE and quality of service of transmitting positioning data by the UE.

The third network device in embodiments of this application may be an AMF network element, and the positioning service may be initiated by the AMF network element. For example, the AMF network element may determine, based on any one of positioning initiation manners of MO-LR, MT-LR, and NI-LR, to initiate positioning, and determine first information corresponding to the positioning, and the AMF network element sends the first information to the first network device, so as to provide the first network device with the first information. This helps the first network device send second information related to the first information to the UE.

In embodiments of this application, that the third network device sends the first information based on the positioning service may be understood as that the positioning service corresponds to the requirement of the positioning service.

Optionally, in some embodiments, sending the first information based on the positioning service includes:
sending the first information to a first network device, the second network device, or the UE based on the positioning service.

In embodiments of this application, the third network device (for example, the AMF network element) may send the first information to the first network device, the second network device (for example, the LMF network element), or the UE based on the positioning service. If the third network device sends the first information to the LMF network element, the LMF network element may send the first information to the first network device (corresponding to Manner 1), or the LMF network element may send the first information to the UE, and the UE sends the first information to the first network device (corresponding to Manner 2). If the third network device sends the first information to the UE, the UE may send the first information to the first network device (corresponding to Manner 2). If the third network device sends the first information to the first network device, the first network device may directly obtain the first information from the third network device (corresponding to Manner 3).

In the solution provided in embodiments of this application, the third network device may send the first information to the first network device, the LMF network element, or the UE based on the positioning service, and different devices may send first information to the first network device. The first network device may receive the first information. This helps the first network device send the second information related to the first information to the UE. In this way, the UE can select or allocate a resource based on the priority of the positioning service of the UE that is indicated by the second information, and send an SL-PRS and/or SLPP signaling on the resource. This can avoid a resource preemption conflict problem that occurs when the UE autonomously allocates a resource.

Optionally, in some embodiments, if the positioning requirement of the UE includes the quality of service of transmitting the positioning data by the UE, the method further includes:
obtaining, from a fourth network device, a mapping relationship between the location quality of service of the UE and the quality of service of transmitting the positioning data by the UE; and
determining, based on the mapping relationship and the location quality of service of the UE, the quality of service of transmitting the positioning data by the UE.

Optionally, in some embodiments, if the positioning requirement includes the quality of service of transmitting the positioning data by the UE, the method further includes:
sending the location quality of service of the UE to a fourth network device; and
receiving the quality of service that is of transmitting the positioning data by the UE and that is sent by the fourth network device, where the quality of service of transmitting the positioning data by the UE is determined by the fourth network device based on the location quality of service of the UE or based on a mapping relationship between the location quality of service of the UE and the quality of service of transmitting the positioning data by the UE.

The fourth network device in embodiments of this application may be a PCF network element, or may be another network element. This is not limited.

In embodiments of this application, if the requirement of the positioning service of the UE that is indicated by the first information sent by the AMF network element includes the quality of service of transmitting the positioning data by the UE, in this case, the action of determining the quality of service of transmitting the positioning data by the UE may be performed by the AMF network element, or may be performed by the PCF network element. This is not limited.

In a possible implementation, if the fourth network device is the PCF network element, the AMF network element may obtain, from the PCF network element, the mapping relationship between the location quality of service of the UE and the quality of service of transmitting the positioning data by the UE, and determine, based on the mapping relationship and the known location quality of service of the UE, the quality of service of transmitting the positioning data by the UE. Alternatively, the AMF network element may obtain the mapping relationship based on a preconfigured or protocol-specified mapping relationship between the location quality of service of the UE and the quality of service of transmitting the positioning data by the UE, and determine, based on the mapping relationship and the known location quality of service of the UE, the quality of service of transmitting the positioning data by the UE.

For example, it is assumed that the mapping relationship between the location quality of service of the UE and the quality of service of transmitting the positioning data by the UE that is maintained by the PCF network element is shown in Table 3. Alternatively, the preconfigured or protocol-specified mapping relationship between the location quality of service of the UE and the quality of service of transmitting the positioning data by the UE is shown in Table 3. However, it should be understood that Table 3 is merely an example for description, and should not constitute a special limitation on this application.

**Table 3**

| | | | | | | |
|---|---|---|---|---|---|---|
| Index of the location quality of service of the UE | 001 | 002 | 003 | 004 | 005 | 006 |
| Index of the first parameter | 01 | 02 | 03 | 04 | 05 | 06 |
| Index of the quality of service of transmitting the positioning data by the UE | 001 | 002 | 003 | 004 | 005 | 006 |
| Index of the second parameter | 01 | 02 | 03 | 04 | 05 | 06 |

If the AMF network element knows that an index of the location quality of service of the UE is "001", the AMF network element may determine, based on the mapping relationship in Table 3, that an index of the quality of service of transmitting the positioning data by the UE is "001" or an index of the second parameter is "01". Therefore, based on Table 2, a specific parameter corresponding to the quality of service of transmitting the positioning data by the UE can be known.

Optionally, the mapping relationship may further include a specific parameter value, for example, a value of the first parameter and a value of the second parameter corresponding to the first parameter.

In another possible implementation, the AMF network element may send the location quality of service of the UE to the PCF network element. After receiving the location quality of service of the UE, the PCF network element may determine, based on the location quality of service of the UE and the maintained mapping relationship between the location quality of service of the UE and the quality of service of transmitting the positioning data by the UE, the quality of service of transmitting the positioning data by the UE. Alternatively, after receiving the location quality of service of the UE, the PCF network element may determine, based on the location quality of service of the UE, the quality of service of transmitting the positioning data by the UE. For example, the PCF may determine the quality of service of transmitting the positioning data by the UE.

For example, the AMF network element may send the location quality of service of the UE to the PCF network element. For example, the location quality of service of the UE is an index "001" of the location quality of service of the UE. After receiving the index "001" of the location quality of service of the UE, the PCF network element may determine, based on the mapping relationship in Table 3, that an index of the quality of service of transmitting the positioning data by the UE is "001" or an index of the second parameter is "01". Therefore, based on Table 2, a specific parameter corresponding to the quality of service of transmitting the positioning data by the UE can be known. The parameter may include: A PQI is 21, a GFBR is 200000000 Kbit/s, an MFBR is 400000000 Kbit/s, a range is 1 m, a resource type is GBR, a PDB is 20 ms, a priority level is 3, a packet error rate is 10⁻⁴, an averaging window is 2000 ms, and a maximum data burst volume is 400 bytes.

Optionally, in some embodiments, sending the second information to the UE includes:
sending the second information to the UE by using dedicated signaling.

Correspondingly, receiving the second information includes:
receiving the second information by using the dedicated signaling sent by the first network device.

The dedicated signaling in embodiments of this application may be understood as signaling specially used for the UE.

Optionally, the signaling for sending the second information is, for example, an RRC reconfiguration message.

In the solution provided in embodiments of this application, the first network device sends the second information to the UE by using the dedicated signaling, and the UE receives the second information by using the dedicated signaling, so that accuracy of sending or receiving the second information can be ensured.

It is noted in step 350 that the UE may send the SL-PRS and/or the SLPP signaling based on the second information. In embodiments of this application, the UE may send the SL-PRS and/or the SLPP signaling in a dedicated resource pool, or may send the SL-PRS and/or the SLPP signaling in a shared resource pool. This is not limited.

For example, if the UE sends the SL-PRS by using the dedicated resource pool, the UE may set a priority field in sidelink control information (sidelink control information, SCI) to the SL-PRS priority. Specifically, a MAC layer may deliver the SL-PRS priority to a PHY layer, and the PHY layer performs setting based on the priority provided by the MAC layer. If the UE sends the SLPP signaling by using the dedicated resource pool, the UE may set a priority field in SCI to the SLPP signaling priority. For example, a MAC layer may deliver the SLPP signaling priority to a PHY layer, and the PHY layer performs setting based on the priority provided by the MAC layer.

When the shared resource pool is used to send the SL-PRS and/or the SLPP signaling, and the shared resource pool is only used to send the SL-PRS and/or the SLPP signaling, if the UE sends the SL-PRS, the UE may set a priority field in SCI to the SL-PRS priority; if the UE sends the SLPP signaling, the UE may set a priority field in SCI to the SLPP signaling priority; or if the UE sends the SL-PRS and the SLPP signaling, the UE may set a priority field in SCI to a higher priority in the SL-PRS and the SLPP signaling.

If the shared resource pool is used to send the SL-PRS and/or the SLPP signaling, and the shared resource pool may also be used to send data information, the shared resource pool may simultaneously send the SL-PRS and/or the SLPP signaling and the data information, and a resource preemption conflict problem also occurs. The solution provided in embodiments of this application can resolve the resource preemption conflict problem that occurs in this case. For details, refer to the following.

Optionally, in some embodiments, the method further includes:
if a shared resource pool is used to transmit the SL-PRS and/or the SLPP signaling and data information, setting a priority field in SCI to any one of the following:
a value corresponding to a highest priority in the SL-PRS priority and/or the SLPP signaling priority and a data information priority, the SL-PRS priority and/or the SLPP signaling priority, and the data information priority.

Sending the SL-PRS and/or the SLPP signaling based on the second information includes:
sending the SL-PRS and/or the SLPP signaling and the data information based on the priority field in the SCI.

Optionally, in some possible implementations, the SLPP signaling may also be understood as data information.

In embodiments of this application, if the shared resource pool is used to transmit the SL-PRS and/or the SLPP signaling and the data information, the priority field in the SCI may be set to: the value corresponding to the highest priority in the SL-PRS priority and/or the SLPP signaling priority and the data information priority, the SL-PRS priority and/or the SLPP signaling priority, or the data information priority.

For example, it is assumed that the UE uses the shared resource pool to transmit the SL-PRS, the SLPP signaling, and the data information at the same time, values of the SL-PRS priority and the SLPP signaling priority are both 1, and a value of the data information priority is 2, where a smaller value of the priority indicates a higher priority, and a larger value of the priority indicates a lower priority. In this case, the UE may choose to set the priority field in the SCI to a value corresponding to a highest priority in the SL-PRS priority, the SLPP signaling priority, and the data information priority, that is, the SL-PRS priority or the SLPP signaling priority.

It is assumed that the UE uses the shared resource pool to transmit the SL-PRS and the data information at the same time, a value of the SL-PRS priority is 1, and a value of the data information priority is 2, where a smaller value of the priority indicates a higher priority, and a larger value of the priority indicates a lower priority. In this case, the UE may choose to set the priority field in the SCI to a value corresponding to a highest priority in the SL-PRS priority and the data information priority, that is, the SL-PRS priority.

It is assumed that the UE uses the shared resource pool to transmit the SLPP signaling and the data information at the same time, a value of the SLPP signaling priority is 1, and a value of the data information priority is 2, where a smaller value of the priority indicates a higher priority, and a larger value of the priority indicates a lower priority. In this case, the UE may choose to set the priority field in the SCI to a value corresponding to a highest priority in the SLPP signaling priority and the data information priority, that is, the SLPP signaling priority.

Specifically, if the UE chooses to set the priority field in the SCI to the value corresponding to the highest priority in the SL-PRS priority and/or the SLPP signaling priority and the data information priority, in an implementation, the MAC layer in the UE may deliver a corresponding priority to the PHY layer after comparison, and the PHY layer performs setting based on the priority provided by the MAC layer. For example, if the MAC layer delivers the SL-PRS priority and the SLPP signaling priority to the PHY layer after comparison, the PHY layer may set the priority field in the SCI to the SL-PRS priority and the SLPP signaling priority.

In another implementation, the MAC layer in the UE may provide the PHY layer with values of the SL-PRS priority and/or the SLPP signaling priority and the data information priority, and the PHY layer performs setting after comparison. For example, if the MAC layer provides the PHY layer with a value 1 of the SL-PRS priority and/or the SLPP signaling priority and a value 2 of the data information priority, after performing comparison, the PHY layer may set the priority field in the SCI to the SL-PRS priority and/or the SLPP signaling priority.

Certainly, in some possible implementations, the MAC layer in the UE provides the PHY layer with values of the SL-PRS priority and/or the SLPP signaling priority and the data information priority, and the UE may choose not to compare the values. For example, the PHY layer sets the priority field in the SCI to the SL-PRS priority and/or the SLPP signaling priority and the data information priority.

Alternatively, in some possible implementations, the UE may not compare the values of the SL-PRS priority and/or the SLPP signaling priority and the data information priority, and even if the UE needs to transmit the SL-PRS and/or the SLPP signaling and the data information at the same time, the UE may determine to use one of the priorities according to a rule. For example, the data information priority is used by default, that is, the priority field in the SCI is set to the data information priority.

In the solution provided in embodiments of this application, if the UE transmits the SL-PRS and/or the SLPP signaling and the data information by using the shared resource pool, the priority field in the SCI may be set, for example, may be set to any one of the following: the value corresponding to the highest priority in the SL-PRS priority and/or the SLPP signaling priority and the data information priority, the SL-PRS priority and/or the SLPP signaling priority, and the data information priority. In this way, the UE can select or allocate a resource based on the priority field in the SCI, and send the SL-PRS and/or the SLPP signaling and the data information on the resource. This can avoid a resource preemption conflict problem that occurs when the shared resource pool is used to simultaneously send the SL-PRS and/or the SLPP signaling and the data information.

Optionally, in some embodiments, the method further includes:
receiving third information sent by a second network device, where the third information requests the UE to report capability information, requests the UE to report location information, or indicates assistance information of the UE.

Sending the first information includes:
sending the first information in response to receiving the third information.

The third information in embodiments of this application may request the UE to report the capability information. The requested capability information may include one or more of the following: a positioning method supported by the UE, whether the UE supports SL positioning, antenna data of the UE, and the like. Alternatively, the third information may request the UE to report the location information. The requested location information may include one or more of the following: location information of the UE or an SL measurement result. The SL measurement result may include a measurement result corresponding to a positioning method used by the current positioning service. Alternatively, the third information may indicate the assistance information of the UE, and the assistance information may include one or more of the following: sidelink positioning configuration information and other configuration information used for positioning.

In the solution provided in embodiments of this application, the UE may receive the third information sent by the LMF network element. The third information may request the UE to report the capability information, request the UE to report the location information, or indicate the assistance information of the UE. Further, the UE may send the first information based on the third information, so that the first information indicating the requirement of the positioning service of the UE can be sent in a timely manner, thereby ensuring the requirement of the positioning service.

Optionally, in some embodiments, the method further includes:
sending fourth information to another terminal device, where the fourth information indicates an SL-PRS priority and/or an SLPP signaling priority of the another terminal device.

In embodiments of this application, the UE may further send, to another UE, fourth information indicating an SL-PRS priority and/or an SLPP signaling priority of the another UE. If the UE is a target UE, the another UE may be an anchor UE, a reference UE, or an assistant UE. If the UE is a UE that initiates positioning, for example, an anchor UE, a reference UE, or an assistant UE, the another UE may be a target UE. If the UE is a UE that initiates positioning, for example, a target UE, the another UE may be an anchor UE, a reference UE, or an assistant UE.

For example, the UE 1 may send fourth information to the UE 5, where the fourth information indicates an SL-PRS priority, an SLPP signaling priority, or an SL-PRS priority and an SLPP signaling priority of the UE 5. This is not limited. Therefore, the UE 5 may send an SL-PRS and/or SLPP signaling based on the fourth information. For example, the UE 5 may send the SL-PRS and/or the SLPP signaling to the UE 1 based on the fourth information.

The fourth information may indicate a priority of the positioning service to the UE 5, and the priority of the positioning service of the UE may include a value of the SL-PRS priority and/or a value of the SLPP signaling priority. Optionally, the fourth information may further indicate a requirement of the positioning service. For example, the requirement of the positioning service is a quality of service profile. The quality of service profile may include any one of a specific parameter, an identifier of the quality of service profile, an identifier of the location quality of service of the UE, and/or an identifier of the quality of service of transmitting the positioning data by the UE. For details, refer to the foregoing content when the first information indicates the requirement of the positioning service, and details are not described again.

In the solution provided in embodiments of this application, the UE may send, to the another UE, the fourth information indicating the SL-PRS priority and/or the SLPP signaling priority of the another UE, so that the another UE can select or allocate a resource based on the fourth information, and send an SL-PRS and/or SLPP signaling on the resource. This can avoid a resource preemption conflict problem that occurs when the another UE autonomously allocates a resource.

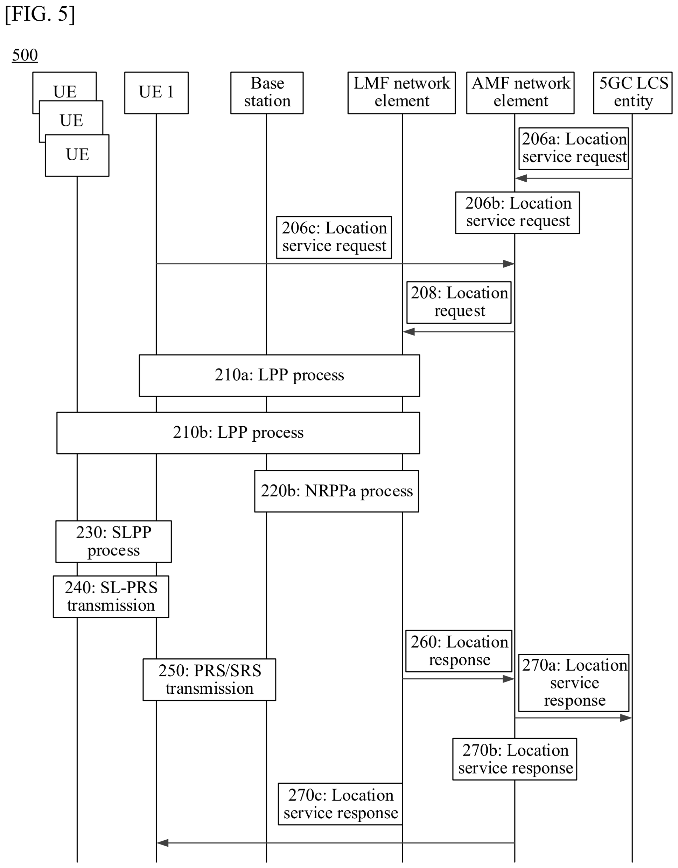

FIG. 5 is a diagram of a communication method 500 according to an embodiment of this application. The figure is applicable to all embodiments of this application, for example, is applicable to the methods in FIG. 3, FIG. 6, and FIG. 7. The figure may be an example of joint positioning based on a PC5 interface and a Uu interface. Step 206a corresponds to MT-LR, step 206b corresponds to NI-LR, and step 206c corresponds to MO-LR. An AMF network element determines that a UE 1 needs to be positioned. The AMF network element may determine, based on the foregoing described manner of MT-LR, MO-LR, or NI-LR, that the UE 1 needs to be positioned. After the AMF network element determines that the UE 1 needs to be positioned, the AMF network element may send a positioning request in step 208 to an LMF network element. After receiving the positioning request, the LMF network element performs an LTE positioning protocol (LTE positioning protocol, LPP) process with the UE, for example, step 210a and/or step 210b shown in the figure. The LPP process is interaction between the UE and the LMF. In the process, the LMF and the UE may exchange a plurality of types of information, which may include at least one of the following: capability transfer (capability transfer), assistance information transfer (assistance data transfer), location information transfer (location information transfer), error handling (error handling), abort (abort), and the like. In addition, the LMF network element may further perform an NRPPa process with a base station, for example, step 220b shown in the figure. The NRPPa process is interaction between the base station and the LMF. In the process, the LMF network element and the base station exchange a plurality of types of information, which may include at least one of the following: TRP information exchange, location information exchange, positioning signal activation and deactivation, measurement result exchange, and the like. For content of SLPP interaction between UEs, refer to the LPP process. Steps 270a, 270b, and 270c correspond to different positioning initiation situations. For example, step 270a corresponds to step 206a, step 270b corresponds to step 206b, and step 270c corresponds to step 206c. It should be noted that a sequence of step 210a to step 250 is not limited.

For an example of positioning including only the PC5 interface, also refer to FIG. 5. Optionally, for a corresponding positioning scenario in this case, refer to (1) to (3) in (a) in FIG. 2. In this case, steps included in a positioning procedure are similar to those in the foregoing joint positioning based on the PC5 interface and the Uu interface. Optionally, in this case, the UE and the base station do not need to exchange positioning signals, and optionally, the base station does not need to send results corresponding to these signals to the LMF. In addition, the UE may obtain a configuration of the SL-PRS based on the SLPP signaling, or may obtain a configuration of the SL-PRS based on LPP signaling or an RRC message.

In addition, in some possible implementations, the base station and the network element may not exist, and only interaction between UEs is included. For example, only step 230 and step 240 are included. Optionally, for a corresponding positioning scenario in this case, refer to (b) in FIG. 2. Optionally, in this case, positioning is initiated by only the UE.

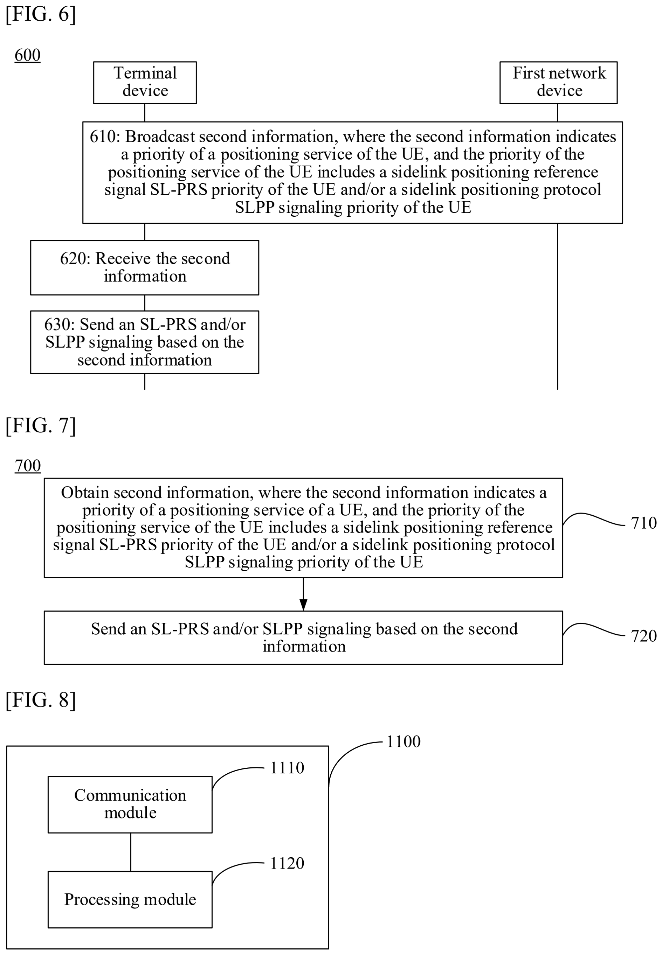

FIG. 6 is a diagram of a communication method 600 according to an embodiment of this application. The method 600 may be applied to a UE and a first network device. The method 600 may include steps 610 to 630.

610: The first network device broadcasts second information, where the second information indicates a priority of a positioning service of the UE, and the priority of the positioning service of the UE includes an SL-PRS priority of the UE and/or an SLPP signaling priority of the UE.

The second information in embodiments of this application may be included in a broadcast message, for example, a system information block 12 (system information block, SIB) 12.

620: The UE receives the second information.

630: The UE sends an SL-PRS and/or SLPP signaling based on the second information.

In embodiments of this application, the first network device may broadcast the second information by using common signaling, and correspondingly, the UE may receive the second information by using the common signaling. After receiving the second information, the UE may send the SL-PRS and/or the SLPP signaling based on the second information. Especially when the UE is in an RRC idle state, because the UE is in the RRC idle state in this case, it is difficult to send first information to the first network device. Therefore, the UE may receive the second information broadcast by the first network device, and send the SL-PRS and/or the SLPP signaling based on the second information.

In embodiments of this application, the priority of the positioning service of the UE that is indicated by the second information broadcast by the first network device is not a priority for a positioning service of a specific UE, but is a priority for all positioning services. These positioning services may be positioning services for a target UE. These positioning services may be initiated by the UE. For example, the UE wants to obtain a location of the UE or a location relative to a specific UE. Alternatively, these positioning services may be initiated by a network side. For example, the network side, such as an AMF or an LCS, wants to obtain a location of a target UE or a relative location of the target UE relative to a specific UE.

Optionally, in embodiments of this application, in some possible implementations, if the priority of the positioning service of the UE includes the SLPP signaling priority of the UE, a configuration may be specified for the SLPP signaling priority. For example, a new signaling radio bearer (signaling radio bearer, SRB) may be introduced for SLPP signaling, or an existing SRB (for example, an SL-SRB 0, an SL-SRB 1, an SL-SRB 2, an SL-SRB 3, or an SL-SRB 4) may be used. The SRB may correspond to a specified configuration (specified configurations), the specified configuration includes a MAC configuration, and the MAC configuration may include the configuration of the SLPP signaling priority.

In the solution provided in embodiments of this application, the first network device broadcasts the second information, where the second information indicates the priority of the positioning service of the UE. The UE can select or allocate a resource based on the priority of the positioning service of the UE that is indicated by the second information, and send the SL-PRS and/or the SLPP signaling on the resource. The UE sends the SL-PRS and/or the SLPP signaling on the resource selected or allocated based on the priority of the positioning service of the UE that is indicated by the second information. Compared with a solution in which the UE autonomously allocates a resource to send a signal and/or signaling in the conventional technology, the solution in embodiments of this application can avoid a resource preemption conflict problem that occurs when the UE autonomously allocates a resource.

Optionally, in some embodiments, the second information includes:
information about the positioning service and a value of an SL-PRS priority corresponding to the positioning service and/or a value of an SLPP signaling priority corresponding to the positioning service.

In embodiments of this application, the information about the positioning service may include at least one of a parameter of the positioning service, an identifier of the positioning service, and an index of the positioning service. The identifier of the positioning service may be an identifier of a service, or may be an identifier of a requirement of the service. The index of the positioning service may be an index of a service, or may be an index of a requirement of the positioning service. The information about the positioning service may alternatively be a QFI. This is not limited.

In embodiments of this application, the information about the positioning service and the value of the SL-PRS priority corresponding to the positioning service and/or the value of the SLPP signaling priority corresponding to the positioning service may be implemented in a list manner. In this case, the second information indicates a mapping relationship between the information about the positioning service and the value of the SL-PRS priority corresponding to the positioning service and/or the value of the SLPP signaling priority corresponding to the positioning service. For example, the second information indicates a mapping relationship between the information about the positioning service and the SL-PRS priority corresponding to the positioning service, or the second information indicates a mapping relationship between the information about the positioning service and the SLPP signaling priority corresponding to the positioning service, or the second information indicates a mapping relationship between the information about the positioning service and the SL-PRS priority and the SLPP signaling priority that are corresponding to the positioning service.

Specifically, the first network device may configure a positioning service requirement list, where the positioning service requirement list includes information of positioning services corresponding to a plurality of positioning services. In addition, the first network device further configures an SL-PRS priority list and/or an SLPP signaling priority list, where the SL-PRS priority list includes a plurality of SL-PRS priorities, and the SLPP signaling priority list may include a plurality of SLPP signaling priorities.

### (1) Positioning service requirement list and SL-PRS priority list

In an implementation, the second information broadcast by the first network device may include an SL-PRS priority corresponding to an identifier of a requirement of each positioning service. For example, refer to the requirements of the plurality of sets of positioning services shown in Table 1 and an index (which may also be referred to as an identifier) of a requirement of each set of positioning services. The positioning service requirement list may be similar to Table 1. The SL-PRS priority list may include a plurality of SL-PRS priorities, for example, an SL-PRS priority 1, an SL-PRS priority 2, an SL-PRS priority 3, an SL-PRS priority 4, an SL-PRS priority 5, and an SL-PRS priority 6. The second information may include that an index "01" of the requirement (for example, a first parameter) of the positioning service corresponds to the SL-PRS priority 1, an index "02" of the requirement of the positioning service corresponds to the SL-PRS priority 2, an index "03" of the requirement of the positioning service corresponds to the SL-PRS priority 3, an index "04" of the requirement of the positioning service corresponds to the SL-PRS priority 4, an index "05" of the requirement of the positioning service corresponds to the SL-PRS priority 5, and an index "06" of the requirement of the positioning service corresponds to the SL-PRS priority 6.

In another implementation, the second information broadcast by the first network device may include a positioning service parameter of a requirement of each positioning service and a corresponding SL-PRS priority. For example, with reference to the requirements of the plurality of sets of positioning services shown in Table 1, the positioning service requirement list may include a positioning service whose horizontal accuracy is 5 m, vertical accuracy is 5 m, response time is NO_DELAY, and LCS quality of service class is ASSURED; a positioning service whose horizontal accuracy is 8 m, vertical accuracy is 8 m, response time is LOW_DELAY, and LCS quality of service class is MULTIPLE_QOS; and the like. The second information may include the positioning service whose horizontal accuracy is 5 m, vertical accuracy is 5 m, response time is NO_DELAY, and LCS quality of service class is ASSURED, and a corresponding SL-PRS priority 1; the positioning service whose horizontal accuracy is 8 m, vertical accuracy is 8 m, response time is LOW_DELAY, and LCS quality of service class is MULTIPLE_QOS, and a corresponding SL-PRS priority 2; and the like.

After receiving the second information, the UE may determine the priority of the positioning service based on the positioning requirement of the UE and the second information.

If a UE 1 includes a plurality of positioning services (for example, a positioning service 1 and a positioning service 2), assuming that a requirement of the positioning service 1 is that horizontal accuracy is 5 m, vertical accuracy is 5 m, response time is NO_DELAY, and an LCS quality of service class is ASSURED, the UE 1 may determine, based on the foregoing correspondence, that an SL-PRS priority corresponding to the positioning service 1 is 1; and assuming that a requirement of the positioning service 2 is that horizontal accuracy is 8 m, vertical accuracy is 8 m, response time is LOW_DELAY, and an LCS quality of service class is MULTIPLE_QOS, the UE 1 may determine, based on the foregoing correspondence, that an SL-PRS priority corresponding to the positioning service 2 is 2. Therefore, the UE 1 may determine the SL-PRS priority corresponding to the positioning service based on the requirement of the positioning service. The UE 1 may further send an SL-PRS based on the determined SL-PRS priority. For example, the UE 1 may preferentially send an SL-PRS corresponding to the positioning service 1.

### (2) Positioning service requirement list and SLPP signaling priority list

In an implementation, the second information broadcast by the first network device may include an SLPP signaling priority corresponding to an identifier of a requirement of each positioning service. For example, refer to the requirements of the plurality of sets of positioning services shown in Table 2 and an index (which may also be referred to as an identifier) of a requirement of each set of positioning services. The positioning service requirement list may be similar to Table 2. The SLPP signaling priority list may include a plurality of SLPP signaling priorities, for example, an SLPP signaling priority 1, an SLPP signaling priority 2, an SLPP signaling priority 3, an SLPP signaling priority 4, an SLPP signaling priority 5, and an SLPP signaling priority 6. The second information may include that an index "01" of the requirement (for example, a first parameter) of the positioning service corresponds to the SLPP signaling priority 1, an index "02" of the requirement of the positioning service corresponds to the SLPP signaling priority 2, an index "03" of the requirement of the positioning service corresponds to the SLPP signaling priority 3, an index "04" of the requirement of the positioning service corresponds to the SLPP signaling priority 4, an index "05" of the requirement of the positioning service corresponds to the SLPP signaling priority 5, and an index "06" of the requirement of the positioning service corresponds to the SLPP signaling priority 6.

In another implementation, the second information broadcast by the first network device may include a positioning service parameter of a requirement of each positioning service and a corresponding SLPP signaling priority. For example, with reference to the requirements of the plurality of sets of positioning services shown in Table 2, the positioning service requirement list may include a positioning service whose PQI is 21, GFBR is 200000000 Kbit/s, MFBR is 400000000 Kbit/s, range is 1 m, resource type is GBR, PDB is 20 ms, priority level is 3, packet error rate is 10⁻⁴, averaging window is 2000, and maximum data burst volume is 400; a positioning service whose PQI is 23, GFBR is 200000000 Kbit/s, MFBR is 400000000 Kbit/s, range is 100 m, resource type is GBR, PDB is 100 ms, priority level is 3, packet error rate is 10⁻⁴, averaging window is 2000, and maximum data burst volume is 800; and the like. The second information may include the positioning service whose PQI is 21, GFBR is 200000000 Kbit/s, MFBR is 400000000 Kbit/s, range is 1 m, resource type is GBR, PDB is 20 ms, priority level is 3, packet error rate is 10⁻⁴, averaging window is 2000, and maximum data burst volume is 400, and a corresponding SLPP signaling priority 1; the positioning service whose PQI is 23, GFBR is 200000000 Kbit/s, MFBR is 400000000 Kbit/s, range is 100 m, resource type is GBR, PDB is 100 ms, priority level is 3, packet error rate is 10⁻⁴, averaging window is 2000, and maximum data burst volume is 800, and a corresponding SLPP signaling priority is 2; and the like.

After receiving the second information, the UE may determine the priority of the positioning service based on the positioning requirement of the UE and the second information.

If a UE 1 includes a plurality of positioning services (for example, a positioning service 1 and a positioning service 2), assuming that a requirement of the positioning service 1 is that a PQI is 21, a GFBR is 200000000 Kbit/s, an MFBR is 400000000 Kbit/s, a range is 1 m, a resource type is GBR, a PDB is 20 ms, a priority level is 3, a packet error rate is 10⁻⁴, an averaging window is 2000, and a maximum data burst volume is 400, the UE 1 may determine, based on the foregoing correspondence, that an SLPP signaling priority corresponding to the positioning service 1 is 1; and assuming that a requirement of the positioning service 2 is that a PQI is 23, a GFBR is 200000000 Kbit/s, an MFBR is 400000000 Kbit/s, a range is 100 m, a resource type is GBR, a PDB is 100 ms, a priority level is 3, a packet error rate is 10⁻⁴, an averaging window is 2000, and a maximum data burst volume is 800, the UE 1 may determine, based on the foregoing correspondence, that an SLPP signaling priority corresponding to the positioning service 2 is 2. Therefore, the UE 1 may determine the SLPP signaling priority corresponding to the positioning service based on the requirement of the positioning service. The UE 1 may further send SLPP signaling based on the determined SLPP signaling priority. For example, the UE 1 may preferentially send SLPP signaling corresponding to the positioning service 1.

Certainly, in some possible implementations, if the positioning service requirement list includes the requirements of the plurality of sets of positioning services shown in Table 1, the positioning service requirement list may alternatively correspond to an SLPP signaling priority list; or if the positioning service requirement list includes the requirements of the plurality of sets of positioning services shown in Table 2, the positioning service requirement list may alternatively correspond to an SL-PRS priority list. Optionally, if the positioning service requirement list includes the requirements of the plurality of sets of positioning services shown in Table 1 and the requirements of the plurality of sets of positioning services shown in Table 2, the positioning service requirement list may alternatively correspond to an SL-PRS priority list and an SLPP signaling priority list.

In the solution provided in embodiments of this application, the second information broadcast by the first network device may include the information about the positioning service and the value of the SL-PRS priority corresponding to the positioning service and/or the value of the SLPP signaling priority corresponding to the positioning service. The UE can select or allocate a resource based on content included in the second information, and send an SL-PRS and/or SLPP signaling on the resource. Compared with a solution in which the UE autonomously allocates a resource to send a signal and/or signaling in the conventional technology, the solution in embodiments of this application can avoid a resource preemption conflict problem that occurs when the UE autonomously allocates a resource.

In some implementations, the UE may not find the requirement of the positioning service of the UE in the second information, and therefore does not find the corresponding SL-PRS priority and/or SLPP signaling priority. In this case, the UE may send an SL-PRS and/or SLPP signaling in the following manner.

Optionally, in some embodiments, for the first network device, the method 600 further includes:
sending fifth information, where the fifth information includes a default SL-PRS priority and/or a default SLPP signaling priority.

Correspondingly, for the UE, the method 600 further includes:
receiving the fifth information; and
if there is no priority corresponding to the current positioning service in the second information, sending, based on the default SL-PRS priority and/or the default SLPP priority, the SL-PRS and/or the SLPP signaling corresponding to the current positioning service.

### (1) Default SL-PRS priority

For example, if a UE 1 includes a plurality of positioning services (for example, a positioning service 1, a positioning service 2, a positioning service 4, and a positioning service 5), assuming that a requirement of the positioning service 1 is that horizontal accuracy is 5 m, vertical accuracy is 5 m, response time is NO DELAY, and a quality of service class is ASSURED, the UE 1 may determine, based on the foregoing correspondence, that an SL-PRS priority corresponding to the positioning service 1 is 1; and assuming that a requirement of the positioning service 2 is that horizontal accuracy is 10 m, vertical accuracy is 10 m, response time is DELAY_TOLERANT, and a quality of service class is BEST_EFFORT, the UE 1 may determine, based on the foregoing correspondence, that an SL-PRS priority corresponding to the positioning service 2 is 3. A requirement of the positioning service 4 is that horizontal accuracy is 10 m, vertical accuracy is 10 m, response time is LOW_TOLERANT, and a quality of service class is BEST_EFFORT; and a requirement of the positioning service 5 is that horizontal accuracy is 20 m, vertical accuracy is 20 m, response time is LOW_TOLERANT, and a quality of service class is ASSURED. However, the second information does not include an SL-PRS priority corresponding to the positioning service 4 and an SL-PRS priority corresponding to the positioning service 5. In this case, the UE 1 may determine, based on the default SL-PRS priority, to transmit SL-PRSs corresponding to the positioning service 4 and the positioning service 5.

Optionally, in embodiments of this application, the default priority may mean that an SL-PRS priority corresponding to a positioning requirement is determined by using any one of parameters of positioning accuracy (including horizontal accuracy and vertical accuracy), response time, and an LCS quality of service class by default.

Assuming that the default priority means that the SL-PRS priority corresponding to the positioning requirement is determined based on the parameter of the positioning accuracy by default, in the foregoing example, positioning accuracy of the positioning service 4 is 10 m, and a corresponding SL-PRS priority is 2; and positioning accuracy of the positioning service 5 is 20 m, and a corresponding SL-PRS priority is 4. In this case, in addition to preferentially sending an SL-PRS corresponding to the positioning service 1 and an SL-PRS corresponding to the positioning service 2, for SL-PRSs corresponding to the positioning service 4 and the positioning service 5, the UE 1 may preferentially transmit the SL-PRS corresponding to the positioning service 4.

Assuming that the default priority means that the SL-PRS priority corresponding to the positioning service is determined based on the parameter of the LCS quality of service class by default, in the foregoing example, a quality of service class of the positioning service 4 is BEST_EFFORT, and a corresponding SL-PRS priority is 1; and a quality of service class of the positioning service 5 is ASSURED, and a corresponding SL-PRS priority is 2. In this case, in addition to preferentially sending an SL-PRS corresponding to the positioning service 1 and an SL-PRS corresponding to the positioning service 2, for SL-PRSs corresponding to the positioning service 4 and the positioning service 5, the UE 1 may preferentially transmit the SL-PRS corresponding to the positioning service 4.

### (2) Default SLPP signaling priority

For example, if a UE 1 includes a plurality of positioning services (for example, a positioning service 1, a positioning service 2, a positioning service 4, and a positioning service 5), assuming that a requirement of the positioning service 1 is that a PQI is 21, a GFBR is 200000000 Kbit/s, an MFBR is 400000000 Kbit/s, a range is 1 m, a resource type is GBR, a PDB is 20 ms, a priority level is 3, a packet error rate is 10⁻⁴, an averaging window is 2000 ms, and a maximum data burst volume is 400 bytes, the UE 1 may determine, based on the foregoing correspondence, that an SLPP signaling priority corresponding to the positioning service 1 is 1; and assuming that a requirement of the positioning service 2 is that a PQI is 23, a GFBR is 200000000 Kbit/s, an MFBR is 400000000 Kbit/s, a range is 100 m, a resource type is GBR, a PDB is 100 ms, a priority level is 3, a packet error rate is 10⁻⁴, an averaging window is 2000 ms, and a maximum data burst volume is 800 bytes, the UE 1 may determine, based on the foregoing correspondence, that an SLPP signaling priority corresponding to the positioning service 2 is 3. A requirement of the positioning service 4 is that a PQI is 23, a GFBR is 200000000 Kbit/s, an MFBR is 400000000 Kbit/s, a range is 100 m, a resource type is non-GBR, a PDB is 50 ms, a priority level is 3, a packet error rate is 10⁻⁴, an averaging window is 2000 ms, and a maximum data burst volume is 400 bytes; and a requirement of the positioning service 5 is that a PQI is 23, a GFBR is 200000000 Kbit/s, an MFBR is 400000000 Kbit/s, a range is 100 m, a resource type is GBR, a PDB is 10 ms, a priority level is 2, a packet error rate is 10⁻⁴, an averaging window is 2000 ms, and a maximum data burst volume is 800 bytes. However, the second information does not include an SLPP signaling priority corresponding to the positioning service 4 and an SLPP signaling priority corresponding to the positioning service 5. In this case, the UE 1 may determine, based on the default SLPP signaling priority, to transmit SLPP signaling corresponding to the positioning service 4 and the positioning service 5.

Optionally, in embodiments of this application, the default priority may mean that the SLPP signaling priority corresponding to the positioning requirement is determined by using any one of parameters of a PQI, a GFBR, an MFBR, a range, a resource type, a PDB, a priority level, a packet error rate, an averaging window, and a maximum data burst volume by default.

Assuming that the default priority means that the SLPP signaling priority corresponding to the positioning requirement is determined based on the parameter of the priority level by default, in the foregoing example, a priority level of the positioning service 4 is 3; and a priority level of the positioning service 5 is 2. In this case, in addition to preferentially sending SLPP signaling corresponding to the positioning service 1 and SLPP signaling corresponding to the positioning service 2, for SLPP signaling corresponding to the positioning service 4 and the positioning service 5, the UE 1 may preferentially transmit the SLPP signaling corresponding to the positioning service 5.

Assuming that the default priority means that the SLPP signaling priority corresponding to the positioning service is determined based on the parameter of the maximum data burst volume by default, in the foregoing example, a maximum data burst volume of the positioning service 4 is 400 bytes; and a maximum data burst volume of the positioning service 5 is 800 bytes. In this case, in addition to preferentially sending SLPP signaling corresponding to the positioning service 1 and SLPP signaling corresponding to the positioning service 2, for SLPP signaling corresponding to the positioning service 4 and the positioning service 5, the UE 1 may preferentially transmit the SLPP signaling corresponding to the positioning service 4.

In the solution provided in embodiments of this application, if there is no priority corresponding to the current positioning service in the second information, the UE can select or allocate a resource based on the default SL-PRS priority and/or the default SLPP priority, and send, on the resource, an SL-PRS and/or SLPP signaling corresponding to the current positioning service. This can avoid a resource preemption conflict problem that occurs when the SL-PRS priority and/or the SLPP signaling priority cannot be determined.

Optionally, in some embodiments, the positioning service of the UE includes a first positioning service and a second positioning service.

The second information indicates at least one of the following:
an SL-PRS first priority, where the SL-PRS first priority corresponds to the first positioning service;
an SL-PRS second priority, where the SL-PRS second priority corresponds to the second positioning service;
an SLPP signaling first priority, where the SLPP signaling first priority corresponds to the first positioning service; and
an SLPP signaling second priority, where the SLPP signaling second priority corresponds to the second positioning service.

Optionally, in some embodiments, when the second information indicates the SLPP signaling priority, the second information may include RB configuration information corresponding to SLPP signaling. For example, the RB configuration information may indicate the requirement of the positioning service. The second information may further include RLC bearer configuration information corresponding to the SLPP signaling. The RLC bearer configuration information includes logical channel configuration information. The UE may determine, based on the requirement of the positioning service included in the RB configuration information, a specific positioning service currently configured by a base station, and determine, based on the logical channel configuration information included in the RLC bearer configuration information, a priority corresponding to an SLPP. Alternatively, the second information may include only RB configuration information. The RB configuration information indicates a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, a priority corresponding to an SLPP. The logical channel configuration information includes a logical channel priority of a logical channel, and the logical channel priority of the logical channel may correspond to the SLPP signaling priority. In other words, it may be understood that the logical channel priority is the SLPP signaling priority. Optionally, the UE may further use the SLPP signaling priority as an SL-PRS priority. In this case, the SL-PRS priority may be specific to each RB.

Optionally, in some embodiments, the second information may indicate the SLPP signaling priority and the SL-PRS priority. For example, the second information may include RB configuration information corresponding to the SLPP signaling and the SL-PRS. For example, the RB configuration information may indicate the requirement of the positioning service. The second information may further include RLC bearer configuration information corresponding to the SLPP signaling and the SL-PRS. The RLC bearer configuration information includes logical channel configuration information. The UE may determine, based on the requirement of the positioning service indicated in the RB configuration information, a specific positioning service currently configured by a base station, and determine, based on the logical channel configuration information included in the RLC bearer configuration information, priorities corresponding to the SLPP signaling and the SL-PRS. Alternatively, the second information may include only RB configuration information. The RB configuration information includes a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, priorities corresponding to the SLPP signaling and the SL-PRS. The logical channel configuration information includes a logical channel priority of a logical channel, and the logical channel priority of the logical channel may correspond to the SLPP signaling priority and the SL-PRS priority. In other words, it may be understood that the logical channel priority is the SLPP signaling priority and the SL-PRS priority. Optionally, that the SL-PRS corresponds to the RB configuration information may be understood as that the SL-PRS priority is specific to each RB. Optionally, the SL-PRS priority may alternatively be shared by all RBs of the UE. This is not limited.

In conclusion, the second information may include only the RB configuration information corresponding to the SLPP signaling or the SL-PRS, and the RB configuration information only indicates the SLPP signaling priority or the SL-PRS priority. For example, the second information includes RLC bearer configuration information, and the RLC bearer configuration information includes logical channel configuration information. The UE may determine, based on the logical channel configuration information included in the RLC bearer configuration information, a priority corresponding to an SLPP or the SL-PRS priority. The second information may alternatively include RB configuration information corresponding to the SLPP signaling and the SL-PRS, and the RB configuration information indicates the SLPP signaling priority and the SL-PRS priority. For example, the second information includes RLC bearer configuration information, and the RLC bearer configuration information includes logical channel configuration information. The UE may determine, based on the logical channel configuration information included in the RLC bearer configuration information, a priority corresponding to an SLPP and the SL-PRS priority. Optionally, in this case, the UE has only one positioning service. Therefore, the second information may include only a priority, and does not need to indicate information about the positioning service.

In embodiments of this application, if the second information sent by the first network device to the UE indicates the SLPP signaling priority and/or the SL-PRS priority, the second information may include the RB configuration information corresponding to the SLPP signaling and/or the SL-PRS priority, and the SLPP signaling priority and/or the SL-PRS priority of the UE are/is configured by using the RB configuration information, so that the UE can select or allocate a resource based on the SLPP signaling priority and/or the SL-PRS priority of the UE, and sends the SL-PRS and/or the SLPP signaling on the resource. Compared with a solution in which the UE autonomously allocates a resource to send signaling in the conventional technology, the solution in embodiments of this application can avoid a resource preemption conflict problem that occurs when the UE autonomously allocates a resource.

Optionally, in some embodiments, the method 600 further includes:
if a shared resource pool is used to transmit the SL-PRS and/or the SLPP signaling and data information, setting a priority field in sidelink control information SCI to any one of the following:
a value corresponding to a highest priority in the SL-PRS priority and/or the SLPP signaling priority and a data information priority, the SL-PRS priority and/or the SLPP signaling priority, and the data information priority.

Sending the SL-PRS and/or the SLPP signaling based on the second information includes:
sending the SL-PRS and/or the SLPP signaling and the data information based on the priority field in the SCI.

Optionally, in some embodiments, the method 600 further includes:
sending fourth information to another terminal device, where the fourth information indicates an SL-PRS priority and/or an SLPP signaling priority of the another terminal device.

For a part that is not described in detail in this embodiment of this application, refer to related content in the method 300, the method 400, and the method 500. Details are not described again.

FIG. 7 is a diagram of a communication method 700 according to an embodiment of this application. The method 700 may be applied to a UE. The method 700 may include steps 710 and 720.

710: Obtain second information, where the second information indicates a priority of a positioning service of the UE, and the priority of the positioning service of the UE includes a sidelink positioning reference signal SL-PRS priority of the UE and/or a sidelink positioning protocol SLPP signaling priority of the UE.

720: Send an SL-PRS and/or SLPP signaling based on the second information.

The second information in embodiments of this application may be preconfigured, for example, specified in a protocol or set before delivery. The UE may obtain the second information based on a requirement of the UE, and send the SL-PRS and/or the SLPP signaling based on the second information.

In embodiments of this application, the priority of the positioning service of the UE that is indicated by the second information obtained by the UE is not a priority for a positioning service of a specific UE, but is a priority for all positioning services. These positioning services may be positioning services for a target UE. These positioning services may be initiated by the UE. For example, the UE wants to obtain a location of the UE or a location relative to a specific UE. Alternatively, these positioning services may be initiated by a network side. For example, the network side, such as an AMF or an LCS, wants to obtain a location of a target UE or a relative location of the target UE relative to a specific UE.

In embodiments of this application, in some possible implementations, if the priority of the positioning service of the UE includes the SLPP signaling priority of the UE, a configuration may be specified for the SLPP signaling priority. For example, a new SRB may be introduced for SLPP signaling, or an existing SRB (for example, an SL-SRB 0, an SL-SRB 1, an SL-SRB 2, an SL-SRB 3, or an SL-SRB 4) may be used. The SRB may correspond to a specified configuration, the specified configuration includes a MAC configuration, and the MAC configuration may include the configuration of the SLPP signaling priority.

In the solution provided in embodiments of this application, the UE may obtain the second information, select or allocate a resource based on the priority of the positioning service of the UE that is indicated by the second information, and send the SL-PRS and/or the SLPP signaling on the resource. The UE sends the SL-PRS and/or the SLPP signaling on the resource selected or allocated based on the priority of the positioning service of the UE that is indicated by the second information. Compared with a solution in which the UE autonomously allocates a resource to send a signal and/or signaling in the conventional technology, the solution in embodiments of this application can avoid a resource preemption conflict problem that occurs when the UE autonomously allocates a resource.

Optionally, in some embodiments, the positioning service of the UE includes a first positioning service and a second positioning service.

The second information indicates at least one of the following:
an SL-PRS first priority, where the SL-PRS first priority corresponds to the first positioning service;
an SL-PRS second priority, where the SL-PRS second priority corresponds to the second positioning service;
an SLPP signaling first priority, where the SLPP signaling first priority corresponds to the first positioning service; and
an SLPP signaling second priority, where the SLPP signaling second priority corresponds to the second positioning service.

Optionally, in some embodiments, the second information includes:
information about the positioning service and a value of an SL-PRS priority corresponding to the positioning service and/or a value of an SLPP signaling priority corresponding to the positioning service.

Optionally, in some embodiments, when the second information indicates the SLPP signaling priority, the second information may include RB configuration information corresponding to SLPP signaling. For example, the RB configuration information may indicate the requirement of the positioning service. The second information may further include RLC bearer configuration information corresponding to the SLPP signaling. The RLC bearer configuration information includes logical channel configuration information. The UE may determine, based on the requirement of the positioning service included in the RB configuration information, a specific positioning service currently configured by a base station, and determine, based on the logical channel configuration information included in the RLC bearer configuration information, a priority corresponding to an SLPP. Alternatively, the second information may include only RB configuration information. The RB configuration information indicates a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, a priority corresponding to an SLPP. The logical channel configuration information includes a logical channel priority of a logical channel, and the logical channel priority of the logical channel may correspond to the SLPP signaling priority. In other words, it may be understood that the logical channel priority is the SLPP signaling priority. Optionally, the UE may further use the SLPP signaling priority as an SL-PRS priority. In this case, the SL-PRS priority may be specific to each RB.

Optionally, in some embodiments, the second information may indicate the SL-PRS priority, and the second information may include RB configuration information corresponding to the SL-PRS. For example, the RB configuration information may indicate the requirement of the positioning service. The second information may further include RLC bearer configuration information corresponding to the SL-PRS. The RLC bearer configuration information includes logical channel configuration information. The UE may determine, based on the requirement of the positioning service indicated in the RB configuration information, a specific positioning service currently configured by a base station, and determine, based on the logical channel configuration information included in the RLC bearer configuration information, a priority corresponding to the SL-PRS. Alternatively, the second information may include only RB configuration information. The RB configuration information includes a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, a priority corresponding to the SL-PRS. The logical channel configuration information includes a logical channel priority of a logical channel, and the logical channel priority of the logical channel may correspond to the SL-PRS priority. In other words, it may be understood that the logical channel priority is the SL-PRS priority. Optionally, that the SL-PRS corresponds to the RB configuration information may be understood as that the SL-PRS priority is specific to each RB. Optionally, the SL-PRS priority may alternatively be shared by all RBs of the UE. This is not limited.

Optionally, in some embodiments, the second information may indicate the SLPP signaling priority and the SL-PRS priority. For example, the second information may include RB configuration information corresponding to the SLPP signaling and the SL-PRS. For example, the RB configuration information may indicate the requirement of the positioning service. The second information may further include RLC bearer configuration information corresponding to the SLPP signaling and the SL-PRS. The RLC bearer configuration information includes logical channel configuration information. The UE may determine, based on the requirement of the positioning service indicated in the RB configuration information, a specific positioning service currently configured by a base station, and determine, based on the logical channel configuration information included in the RLC bearer configuration information, priorities corresponding to the SLPP signaling and the SL-PRS. Alternatively, the second information may include only RB configuration information. The RB configuration information includes a requirement of a positioning service corresponding to the RB and logical channel configuration information. The UE may determine, based on the requirement of the positioning service indicated in the RB configuration information, a specific positioning service currently configured by a base station, and determine, based on the logical channel configuration information included in the RB configuration information, priorities corresponding to the SLPP signaling and the SL-PRS. The logical channel configuration information includes a logical channel priority of a logical channel, and the logical channel priority of the logical channel may correspond to the SLPP signaling priority and the SL-PRS priority. In other words, it may be understood that the logical channel priority is the SLPP signaling priority and the SL-PRS priority.

In conclusion, the second information may include only the RB configuration information corresponding to the SLPP signaling or the SL-PRS, and the RB configuration information only indicates the SLPP signaling priority or the SL-PRS priority. For example, the second information includes RLC bearer configuration information, and the RLC bearer configuration information includes logical channel configuration information. The UE may determine, based on the logical channel configuration information included in the RLC bearer configuration information, a priority corresponding to an SLPP or the SL-PRS priority. The second information may alternatively include RB configuration information corresponding to the SLPP signaling and the SL-PRS, and the RB configuration information indicates the SLPP signaling priority and the SL-PRS priority. For example, the second information includes RLC bearer configuration information, and the RLC bearer configuration information includes logical channel configuration information. The UE may determine, based on the logical channel configuration information included in the RLC bearer configuration information, a priority corresponding to an SLPP and the SL-PRS priority. Optionally, in this case, the UE has only one positioning service. Therefore, the second information may include only a priority, and does not need to indicate information about the positioning service.

In embodiments of this application, if the second information sent by the first network device to the UE indicates the SLPP signaling priority and/or the SL-PRS priority, the second information may include the RB configuration information corresponding to the SLPP signaling and/or the SL-PRS priority, and the SLPP signaling priority and/or the SL-PRS priority of the UE are/is configured by using the RB configuration information, so that the UE can select or allocate a resource based on the SLPP signaling priority and/or the SL-PRS priority of the UE, and sends the SL-PRS and/or the SLPP signaling on the resource. Compared with a solution in which the UE autonomously allocates a resource to send signaling in the conventional technology, the solution in embodiments of this application can avoid a resource preemption conflict problem that occurs when the UE autonomously allocates a resource.

Optionally, in some embodiments, the method 700 further includes:
if a shared resource pool is used to transmit the SL-PRS and/or the SLPP signaling and data information, setting a priority field in sidelink control information SCI to any one of the following:
a value corresponding to a highest priority in the SL-PRS priority and/or the SLPP signaling priority and a data information priority, the SL-PRS priority and/or the SLPP signaling priority, and the data information priority.

Sending the SL-PRS and/or the SLPP signaling based on the second information includes:
sending the SL-PRS and/or the SLPP signaling and the data information based on the priority field in the SCI.

Optionally, in some embodiments, the method 700 further includes:
sending fourth information to another terminal device, where the fourth information indicates an SL-PRS priority and/or an SLPP signaling priority of the another terminal device.

Optionally, in some embodiments, the method 700 further includes:
obtaining fifth information, where the fifth information includes a default SL-PRS priority and/or a default SLPP signaling priority; and
if there is no priority corresponding to the current positioning service in the second information, sending, based on the default SL-PRS priority and/or the default SLPP priority, the SL-PRS and/or the SLPP signaling corresponding to the current positioning service.

For a part that is not described in detail in this embodiment of this application, refer to related content in at least one of the method 300, the method 400, the method 500, and the method 600. Details are not described again.

In some embodiments, the second information may indicate a correspondence between one or more of the following positioning parameters and the positioning service: bandwidth information of the SL-PRS, symbol quantity information of the SL-PRS, location quality of service, a transmission priority of the SL-PRS, a priority of the positioning service, and an identifier or an index of the positioning service. The second information may indicate a relationship between one or more positioning services and a positioning parameter. For example, the second information indicates a first list, the first list includes one or more correspondences, and each correspondence is a correspondence between a positioning service and a positioning parameter. The correspondence between each positioning service and the positioning parameter includes at least one of bandwidth information of an SL-PRS corresponding to the positioning service, symbol quantity information of the SL-PRS, location quality of service, a transmission priority of the SL-PRS, a priority of the positioning service, and an identifier or an index of the positioning service.

It may be understood that, in the method 300, the method 400, the method 500, the method 600, and the method 700, in addition to indicating the priority of the positioning service, the second information may further indicate the positioning parameter corresponding to the positioning service.

For example, in the method 600, the terminal device may obtain the second information by using a broadcast message of the first network device, and then the terminal device may determine, by using the second information and a positioning service currently performed by the terminal device, a positioning parameter corresponding to the positioning service. For example, the terminal device may determine bandwidth information of an SL-PRS corresponding to the positioning service and symbol quantity information of the SL-PRS, and select, based on the determined positioning parameter, a resource for transmitting the SL-PRS. For example, the terminal device may select a resource that meets the bandwidth information of the SL-PRS and/or the symbol quantity information of the SL-PRS. Optionally, in this case, the terminal device may be in an RRC idle state.

For another example, in the method 700, the terminal device may obtain the second information through pre-configuration, protocol specification, or factory setting, and then the terminal device may determine, by using the second information and a positioning service currently performed by the terminal device, a positioning parameter corresponding to the positioning service. For example, the terminal device may determine bandwidth information of an SL-PRS corresponding to the positioning service and symbol quantity information of the SL-PRS, and select, based on the determined positioning parameter, a resource for transmitting the SL-PRS. For example, the terminal device may select a resource that meets the bandwidth information of the SL-PRS and/or the symbol quantity information of the SL-PRS. Optionally, in this case, the terminal device may be outside a network coverage area.

In the foregoing manner, the terminal device may select, based on the parameter corresponding to the positioning service, the resource for transmitting the SL-PRS, that is, the terminal device may select, by considering a characteristic or requirement of the positioning service, the resource for transmitting the SL-PRS, thereby ensuring transmission of the SL-PRS and further ensuring accuracy of the positioning service.

It should be understood that specific examples in the foregoing embodiments are merely intended to help a person skilled in the art better understand embodiments of this application, but are not intended to limit the scope of embodiments of this application. It should be further understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the terminal device, the first network device, the second network device, or the third network device) may alternatively be implemented by a component (for example, a chip or a circuit) that can be used in the device.

The foregoing describes in detail the communication method provided in embodiments of this application. The foregoing communication method is mainly described from a perspective of interaction between the terminal device and the first network device, the second network device, or the third network device. It may be understood that, to implement the foregoing functions, the terminal device, the first network device, the second network device, and the third network device include corresponding hardware structures and/or software modules for performing the functions.

A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

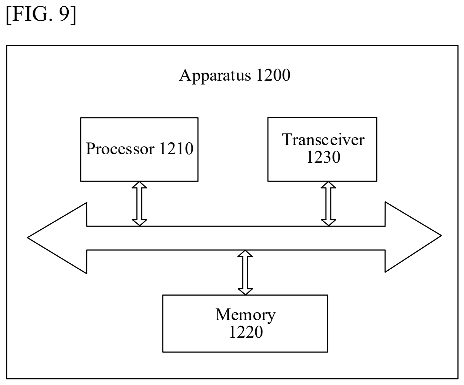

The communication apparatus provided in embodiments of this application is described below in detail with reference to FIG. 8 and FIG. 9. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmitter device or a receiver device may be divided into functional modules according to the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner. An example in which each functional module is obtained through division based on each corresponding function is used below for description.

FIG. 8 is a block diagram of an apparatus 1100 according to an embodiment of this application. The apparatus 1100 includes a transceiver module 1110 and a processing module 1120. The transceiver module 1110 may implement a corresponding communication function. The processing module 1120 is configured to process data. The transceiver module 1110 may also be referred to as a communication interface or a communication module.

Optionally, the apparatus 1100 may further include a storage module. The storage module may be configured to store instructions and/or data. The processing module 1120 may read the instructions and/or the data in the storage module, so that the apparatus implements the foregoing method embodiments.

The apparatus 1100 may be configured to perform an action performed by the network device in the foregoing method embodiments. The transceiver module 1110 is configured to perform a receiving/sending-related operation on the network device side in the foregoing method embodiments. The processing module 1120 is configured to perform a processing-related operation on the network device side in the foregoing method embodiments.

In a design, the apparatus 1100 is configured to perform the action performed by the first network device in the foregoing method embodiments.

In a possible implementation, the transceiver module 1110 is configured to receive first information, where the first information indicates a requirement of a positioning service of a terminal device, and the requirement of the positioning service of the UE includes at least one of the following: location quality of service of the UE and quality of service of transmitting positioning data by the UE; and send the second information to the UE, where the second information is related to the first information, and the second information indicates a priority of the positioning service of the UE.

In another possible implementation, the transceiver module 1110 is configured to broadcast second information, where the second information indicates a priority of a positioning service of a UE, and the priority of the positioning service of the UE includes an SL-PRS priority of the UE and/or an SLPP signaling priority of the UE.

The apparatus 1100 may implement the steps or the procedures performed by the first network device in the method embodiments according to embodiments of this application. The apparatus 1100 may include modules configured to perform the method performed by the first network device in the method embodiments. In addition, the modules in the apparatus 1100 and the foregoing other operations and/or functions are separately used to implement corresponding procedures of the method embodiment of the first network device in the method embodiments.

In another design, the apparatus 1100 is configured to perform the action performed by the second network device in the foregoing method embodiments.

In a possible implementation, the transceiver module 1110 is configured to receive a request message sent by an AMF network element, where the request message is used to request to position a terminal device; and send first information based on the request message, where the first information indicates a requirement of a positioning service of the UE, and the requirement of the positioning service of the UE includes at least one of the following: location quality of service of the UE and quality of service of transmitting positioning data by the UE.

The apparatus 1100 may implement the steps or the procedures performed by the second network device in the method embodiments according to embodiments of this application. The apparatus 1100 may include modules configured to perform the method performed by the second network device in the method embodiments. In addition, the modules in the apparatus 1100 and the foregoing other operations and/or functions are separately used to implement corresponding procedures of the method embodiment of the second network device in the method embodiments.

In another design, the apparatus 1100 is configured to perform the action performed by the third network device in the foregoing method embodiments.

In a possible implementation, the processing module 1120 is configured to determine to initiate a positioning service; and the transceiver module 1110 is configured to send first information based on the positioning service, where the first information indicates a requirement of the positioning service of a UE, and the requirement of the positioning service of the UE includes at least one of the following: location quality of service of the UE and quality of service of transmitting positioning data by the UE; or send a request message to an LMF network element based on the positioning service, where the request message is used to request to position the UE.

The apparatus 1100 may implement the steps or the procedures performed by the third network device in the method embodiments according to embodiments of this application. The apparatus 1100 may include modules configured to perform the method performed by the third network device in the method embodiments. In addition, the modules in the apparatus 1100 and the foregoing other operations and/or functions are separately used to implement corresponding procedures of the method embodiment of the third network device in the method embodiments.

The apparatus 1100 may be configured to perform an action performed by the terminal device in the foregoing method embodiments. The transceiver module 1110 is configured to perform a receiving/sending-related operation on the terminal device side in the foregoing method embodiments. The processing module 1120 is configured to perform a processing-related operation on the terminal device side in the foregoing method embodiments.

In a design, the apparatus 1100 is configured to perform the action performed by the terminal device in the foregoing method embodiments.

In a possible implementation, the transceiver module 1110 is configured to send first information, where the first information indicates a requirement of a positioning service of the UE, and the requirement of the positioning service of the UE includes at least one of the following: location quality of service of the UE and quality of service of transmitting positioning data by the UE; receive second information, where the second information is related to the first information, and the second information indicates a priority of the positioning service of the UE; and send an SL-PRS and/or SLPP signaling based on the second information.

In another possible implementation, the transceiver module 1110 is configured to receive second information, where the second information indicates a priority of a positioning service of a UE, and the priority of the positioning service of the UE includes an SL-PRS priority of the UE and/or an SLPP signaling priority of the UE; and send an SL-PRS and/or SLPP signaling based on the second information.

In another possible implementation, the transceiver module 1110 is configured to obtain second information, where the second information indicates a priority of a positioning service of a UE, and the priority of the positioning service of the UE includes an SL-PRS priority of the UE and/or an SLPP signaling priority of the UE; and send an SL-PRS and/or SLPP signaling based on the second information.

The apparatus 1100 may implement the steps or the procedures performed by the terminal device in the method embodiments according to embodiments of this application. The apparatus 1100 may include modules configured to perform the method performed by the terminal device in the method embodiments. In addition, the modules in the apparatus 1100 and the foregoing other operations and/or functions are separately used to implement corresponding procedures of the method embodiment of the terminal device in the method embodiments.

It should be understood that a specific process in which the modules perform the foregoing corresponding steps is described in detail in the foregoing method embodiments. For brevity, details are not described herein.

It should be understood that a specific process in which the modules perform the foregoing corresponding steps is described in detail in the foregoing method embodiments. For brevity, details are not described herein.

The processing module 1120 in the foregoing embodiments may be implemented by at least one processor or a processor-related circuit. The transceiver module 1110 may be implemented by a transceiver or a transceiver-related circuit. The storage module may be implemented by using at least one memory.

As shown in FIG. 9, an embodiment of this application further provides an apparatus 1200. The apparatus 1200 includes a processor 1210, and may further include one or more memories 1220. The processor 1210 is coupled to the memory 1220. The memory 1220 is configured to store a computer program or instructions and/or data. The processor 1210 is configured to execute the computer program or the instructions and/or the data stored in the memory 1220, so that the method in the foregoing method embodiments is performed. Optionally, the apparatus 1200 includes one or more processors 1210.

Optionally, the memory 1220 and the processor 1210 may be integrated together, or may be disposed separately.

Optionally, as shown in FIG. 9, the apparatus 1200 may further include a transceiver 1230. The transceiver 1230 is configured to receive a signal and/or send a signal. For example, the processor 1210 is configured to control the transceiver 1230 to receive a signal and/or send a signal.

In a solution, the apparatus 1200 is configured to implement operations performed by the communication device (such as the terminal device, the first network device, the second network device, and the third network device) in the foregoing method embodiments.

An embodiment of this application further provides a computer-readable storage medium. The computer-readable storage medium stores computer instructions used to implement the method performed by the communication device (such as the terminal device, the first network device, the second network device, and the third network device) in the foregoing method embodiments.

For example, when the computer program is executed by a computer, the computer is enabled to implement the method performed by the communication device (such as the terminal device, the first network device, the second network device, and the third network device) in the foregoing method embodiments.

An embodiment of this application further provides a computer program product including instructions. When the instructions are executed by a computer, the computer is enabled to implement the method performed by the communication device (such as the terminal device, the first network device, the second network device, and the third network device) in the foregoing method embodiments.

An embodiment of this application further provides a communication system. The communication system includes the terminal device, the first network device, the second network device, and the third network device in the foregoing embodiments.

For explanations and beneficial effects of related content of any one of the apparatuses provided above, refer to the corresponding method embodiment provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on specific applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

In addition, functional units in embodiments of this application may be integrated into one unit, or each unit may exist alone physically, or two or more units may be integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first network device, and the method comprises:
receiving first information, wherein the first information indicates a requirement of a positioning service of a terminal device, and the requirement of the positioning service of the UE comprises at least one of the following: location quality of service of the UE and quality of service of transmitting positioning data by the UE; and
sending second information to the UE, wherein the second information is related to the first information, and the second information indicates a priority of the positioning service of the UE.

2. The method according to claim 1, wherein the priority of the positioning service of the UE comprises a sidelink positioning reference signal priority of the UE and/or a sidelink positioning protocol signaling priority of the UE.

3. The method according to claim 2, wherein the positioning service of the UE comprises a first positioning service and a second positioning service; and
the second information indicates at least one of the following:
a sidelink positioning reference signal first priority, wherein the sidelink positioning reference signal first priority corresponds to the first positioning service;
a sidelink positioning reference signal second priority, wherein the sidelink positioning reference signal second priority corresponds to the second positioning service;
a sidelink positioning protocol signaling first priority, wherein the sidelink positioning protocol signaling first priority corresponds to the first positioning service; and
a sidelink positioning protocol signaling second priority, wherein the sidelink positioning protocol signaling second priority corresponds to the second positioning service.

4. The method according to claim 2 or 3, wherein the second information comprises one of the following:
a value of the sidelink positioning reference signal priority and/or a value of the sidelink positioning protocol signaling priority; and
information about the positioning service and a value of a sidelink positioning reference signal priority corresponding to the positioning service and/or a value of a sidelink positioning protocol signaling priority corresponding to the positioning service.

5. The method according to any one of claims 2 to 4, wherein the second information indicates the sidelink positioning protocol signaling priority; and
the second information comprises radio bearer RB configuration information corresponding to sidelink positioning protocol signaling, the RB configuration information comprises logical channel configuration information, or the RB configuration information comprises a requirement of a positioning service corresponding to an RB and the logical channel configuration information, the logical channel configuration information comprises a logical channel priority of the logical channel, and the logical channel priority of the logical channel corresponds to the sidelink positioning protocol signaling priority.

6. The method according to any one of claims 1 to 5, wherein the first information comprises at least one of the following:
a first parameter corresponding to the location quality of service of the UE, a first index corresponding to the location quality of service of the UE, a second parameter corresponding to the quality of service of transmitting the positioning data by the UE, and a second index corresponding to the quality of service of transmitting the positioning data by the UE, wherein
the first parameter indicates the location quality of service of the UE, and the first index is used to obtain the location quality of service of the UE; and
the second parameter indicates the quality of service of transmitting the positioning data by the UE, and the second index is used to obtain the quality of service of transmitting the positioning data by the UE.

7. The method according to claim 6, wherein the first parameter comprises at least one of the following:
horizontal accuracy, vertical accuracy, response time, a location service LCS quality of service class, requested vertical accuracy, and a minor LCS quality of service class; and
the second parameter comprises at least one of the following:
a PC5 5G quality of service identifier PQI, a flow bit rate, a link aggregated bit rate, a range, a default value, a resource type, a packet delay budget PDB, a priority level, a packet error rate, an averaging window, and a maximum data burst volume.

8. The method according to any one of claims 1 to 7, wherein the first information carries indication information, and the indication information indicates a request for configuring a sidelink positioning reference signal priority and/or a sidelink positioning protocol signaling priority.

9. The method according to any one of claims 1 to 8, wherein receiving the first information comprises: receiving the first information sent by the terminal device, a second network device, or a third network device.

10. The method according to any one of claims 1 to 9, wherein sending the second information to the UE comprises:
sending the second information to the UE by using dedicated signaling.

11. A communication method, wherein the method is applied to a terminal device, and the method comprises:
sending first information, wherein the first information indicates a requirement of a positioning service of the UE, and the requirement of the positioning service of the UE comprises at least one of the following: location quality of service of the UE and quality of service of transmitting positioning data by the UE;
receiving second information, wherein the second information is related to the first information, and the second information indicates a priority of the positioning service of the UE; and
sending a sidelink positioning reference signal and/or sidelink positioning protocol signaling based on the second information.

12. The method according to claim 11, wherein the priority of the positioning service of the UE comprises a sidelink positioning reference signal priority of the UE and/or a sidelink positioning protocol signaling priority of the UE.

13. The method according to claim 12, wherein the positioning service of the UE comprises a first positioning service and a second positioning service; and
the second information indicates at least one of the following:
a sidelink positioning reference signal first priority, wherein the sidelink positioning reference signal first priority corresponds to the first positioning service;
a sidelink positioning reference signal second priority, wherein the sidelink positioning reference signal second priority corresponds to the second positioning service;
a sidelink positioning protocol signaling first priority, wherein the sidelink positioning protocol signaling first priority corresponds to the first positioning service; and
a sidelink positioning protocol signaling second priority, wherein the sidelink positioning protocol signaling second priority corresponds to the second positioning service.

14. The method according to claim 12 or 13, wherein the second information comprises one of the following:
a value of the sidelink positioning reference signal priority and/or a value of the sidelink positioning protocol signaling priority; and
information about the positioning service and a value of a sidelink positioning reference signal priority corresponding to the positioning service and/or a value of a sidelink positioning protocol signaling priority corresponding to the positioning service.

15. The method according to any one of claims 12 to 14, wherein the second information indicates the sidelink positioning protocol signaling priority; and
the second information comprises radio bearer RB configuration information corresponding to the sidelink positioning protocol signaling, the RB configuration information comprises logical channel configuration information, or the RB configuration information comprises a positioning requirement corresponding to an RB and the logical channel configuration information, the logical channel configuration information comprises a logical channel priority of the logical channel, and the logical channel priority of the logical channel corresponds to the sidelink positioning protocol signaling priority.

16. The method according to any one of claims 12 to 15, wherein the method further comprises:
if a shared resource pool is used to transmit the sidelink positioning reference signal and/or the sidelink positioning protocol signaling and data information, setting a priority field in sidelink control information SCI to any one of the following:
a value corresponding to a highest priority in the sidelink positioning reference signal priority and/or the sidelink positioning protocol signaling priority and a data information priority, the sidelink positioning reference signal priority and/or the sidelink positioning protocol signaling priority, and the data information priority; and
sending the sidelink positioning reference signal and/or the sidelink positioning protocol signaling based on the second information comprises:
sending the sidelink positioning reference signal and/or the sidelink positioning protocol signaling and the data information based on the priority field in the SCI.

17. The method according to any one of claims 11 to 16, wherein the first information comprises at least one of the following:
a first parameter corresponding to the location quality of service of the UE, a first index corresponding to the location quality of service of the UE, a second parameter corresponding to the quality of service of transmitting the positioning data by the UE, and a second index corresponding to the quality of service of transmitting the positioning data by the UE, wherein
the first parameter indicates the location quality of service of the UE, and the first index is used to obtain the location quality of service of the UE; and
the second parameter indicates the quality of service of transmitting the positioning data by the UE, and the second index is used to obtain the quality of service of transmitting the positioning data by the UE.

18. The method according to claim 17, wherein the first parameter comprises at least one of the following:
horizontal accuracy, vertical accuracy, response time, a location service LCS quality of service class, requested vertical accuracy, and a minor LCS quality of service class; and
the second parameter comprises at least one of the following:
a PC5 5G quality of service identifier PQI, a flow bit rate, a link aggregated bit rate, a range, a default value, a resource type, a packet delay budget PDB, a priority level, a packet error rate, an averaging window, and a maximum data burst volume.

19. The method according to any one of claims 11 to 18, wherein the first information carries indication information, and the indication information indicates a request for configuring a sidelink positioning reference signal priority and/or a sidelink positioning protocol signaling priority.

20. The method according to any one of claims 11 to 19, wherein the method further comprises:
receiving third information sent by a second network device, wherein the third information requests the UE to report capability information, requests the UE to report location information, or indicates assistance information of the UE; and
sending the first information comprises:
sending the first information in response to receiving the third information.

21. The method according to any one of claims 11 to 20, wherein the method further comprises:
sending fourth information to another terminal device, wherein the fourth information indicates a sidelink positioning reference signal priority and/or a sidelink positioning protocol signaling priority of the another terminal device.

22. The method according to any one of claims 11 to 21, wherein receiving the second information comprises:
receiving the second information by using dedicated signaling sent by a first network device.

23. The method according to any one of claims 11 to 22, wherein the method further comprises:
receiving the first information from a second network device or a third network device.

24. A communication method, wherein the method is applied to a second network device, and the method comprises:
receiving a request message sent by a third network device, wherein the request message is used to request to position a terminal device; and
sending first information based on the request message, wherein the first information indicates a requirement of a positioning service of the UE, and the requirement of the positioning service of the UE comprises at least one of the following: location quality of service of the UE and quality of service of transmitting positioning data by the UE.

25. The method according to claim 24, wherein sending the first information based on the request message comprises:
sending the first information to a first network device or the UE based on the request message.

26. A communication method, wherein the method is applied to a third network device, and the method comprises:
determining to initiate a positioning service; and
sending first information based on the positioning service, wherein the first information indicates a requirement of the positioning service of a terminal device, and the requirement of the positioning service of the UE comprises at least one of the following: location quality of service of the UE and quality of service of transmitting positioning data by the UE;
or
sending a request message to a second network device based on the positioning service, wherein the request message is used to request to position the UE.

27. The method according to claim 26, wherein sending the first information based on the positioning service comprises:
sending the first information to a first network device, the second network device, or the UE based on the positioning service.

28. The method according to claim 26 or 27, wherein if the positioning requirement of the UE comprises the quality of service of transmitting the positioning data by the UE, the method further comprises:
obtaining, from a fourth network device, a mapping relationship between the location quality of service of the UE and the quality of service of transmitting the positioning data by the UE; and
determining, based on the mapping relationship and the location quality of service of the UE, the quality of service of transmitting the positioning data by the UE.

29. The method according to claim 26 or 27, wherein if the positioning requirement of the UE comprises the quality of service of transmitting the positioning data by the UE, the method further comprises:
sending the location quality of service of the UE to a fourth network device; and
receiving the quality of service that is of transmitting the positioning data by the UE and that is sent by the fourth network device, wherein the quality of service of transmitting the positioning data by the UE is determined by the fourth network device based on the location quality of service of the UE or based on a mapping relationship between the location quality of service of the UE and the quality of service of transmitting the positioning data by the UE.

30. A communication method, wherein the method is applied to a first network device, and the method comprises:
broadcasting second information, wherein the second information indicates a priority of a positioning service of a terminal device, and the priority of the positioning service of the UE comprises a sidelink positioning reference signal priority of the UE and/or a sidelink positioning protocol signaling priority of the UE.

31. The method according to claim 30, wherein the second information comprises:
information about the positioning service and a value of a sidelink positioning reference signal priority corresponding to the positioning service and/or a value of a sidelink positioning protocol signaling priority corresponding to the positioning service.

32. The method according to claim 30 or 31, wherein the method further comprises:
sending fifth information, wherein the fifth information comprises a default sidelink positioning reference signal priority and/or a default sidelink positioning protocol signaling priority.

33. A communication method, wherein the method is applied to a terminal device, and the method comprises:
receiving second information, wherein the second information indicates a priority of a positioning service of the UE, and the priority of the positioning service of the UE comprises a sidelink positioning reference signal priority of the UE and/or a sidelink positioning protocol signaling priority of the UE; and
sending a sidelink positioning reference signal and/or sidelink positioning protocol signaling based on the second information.

34. The method according to claim 33, wherein the second information comprises:
information about the positioning service and a value of a sidelink positioning reference signal priority corresponding to the positioning service and/or a value of a sidelink positioning protocol signaling priority corresponding to the positioning service.

35. The method according to claim 33 or 34, wherein the method further comprises:
receiving fifth information, wherein the fifth information comprises a default sidelink positioning reference signal priority and/or a default sidelink positioning protocol signaling priority; and
if there is no priority corresponding to the current positioning service in the second information, sending, based on the default sidelink positioning reference signal priority and/or the default sidelink positioning protocol priority, the sidelink positioning reference signal and/or the sidelink positioning protocol signaling corresponding to the current positioning service.

36. A communication method, wherein the method is applied to a terminal device, and the method comprises:
obtaining second information, wherein the second information indicates a priority of a positioning service of the UE, and the priority of the positioning service of the UE comprises a sidelink positioning reference signal priority of the UE and/or a sidelink positioning protocol signaling priority of the UE; and
sending a sidelink positioning reference signal and/or sidelink positioning protocol signaling based on the second information.

37. The method according to claim 36, wherein the second information comprises:
information about the positioning service and a value of a sidelink positioning reference signal priority corresponding to the positioning service and/or a value of a sidelink positioning protocol signaling priority corresponding to the positioning service.

38. The method according to claim 36 or 37, wherein the method further comprises:
obtaining fifth information, wherein the fifth information comprises a default sidelink positioning reference signal priority and/or a default sidelink positioning protocol signaling priority; and
if there is no priority corresponding to the current positioning service in the second information, sending, based on the default sidelink positioning reference signal priority and/or the default sidelink positioning protocol priority, the sidelink positioning reference signal and/or the sidelink positioning protocol signaling corresponding to the current positioning service.

39. A communication apparatus, comprising a processor and a communication interface, wherein the communication interface is configured to receive a signal from a communication apparatus other than the communication apparatus and transmit the signal to the processor, or send a signal from the processor to a communication apparatus other than the communication apparatus, and the processor is configured to implement the method according to any one of claims 1 to 10, 11 to 23, 24 and 25, 26 to 29, 30 to 32, 33 to 35, or 36 to 38 by using a logic circuit or executing code instructions.

40. A computer-readable storage medium, wherein the computer-readable storage medium stores a computer program, and when the computer program is run, the method according to any one of claims 1 to 10, 11 to 23, 24 and 25, 26 to 29, 30 to 32, 33 to 35, or 36 to 38 is implemented.
